(19) **Europäisches Patentamt / European Patent Office / Office européen des brevets**

(11) **EP 4 750 167 A1**

(12) **EUROPEAN PATENT APPLICATION**
published in accordance with Art. 153(4) EPC

(43) Date of publication:
**27.05.2026 Bulletin 2026/22**

(21) Application number: **24850911.9**

(22) Date of filing: **01.08.2024**

(51) International Patent Classification (IPC):
*H04W 52/02* (2009.01)

(52) Cooperative Patent Classification (CPC):
**H04W 52/02; H04W 76/28;** Y02D 30/70

(86) International application number:
**PCT/CN2024/109334**

(87) International publication number:
**WO 2025/031266 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 CN 202311015609**

(71) Applicant: **HUAWEI TECHNOLOGIES CO., LTD.**
**Shenzhen 518129 (CN)**

(72) Inventors:
• **JIAO, Minghan**
  **Shenzhen, Guangdong 518129 (CN)**
• **LI, Ruijie**
  **Shenzhen, Guangdong 518129 (CN)**
• **GUAN, Lei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND RELATED APPARATUS**

(57) This application relates to the field of wireless communication technologies, and in particular, to a communication method and an apparatus. In the communication method, a network device sends target indication information in a target time period in active time of a first discontinuous transmission of a first cell. A terminal device receives the target indication information in the target time period, and activates/deactivates the first discontinuous transmission of the first cell based on the target indication information. According to the communication method provided in this application, a quantity of transmissions of the target indication information that indicates to activate/deactivate the first discontinuous transmission of the first cell can be effectively reduced, thereby reducing power consumption of a communication system in which the network device and the terminal device are located.

**Network device** — **Terminal device**

S301: Determine target indication information

S302: Send the target indication information in a target time period

S303: Receive the target indication information in the target time period

S304: Activate/Deactivate a first discontinuous transmission of a first cell based on the target indication information

FIG. 3

## Description

This application claims priority to Chinese Patent Application No. 202311015609.1, filed with the China National Intellectual Property Administration on August 10, 2023 and entitled "COMMUNICATION METHOD AND RELATED APPARATUS", which is incorporated herein by reference in its entirety.

## TECHNICAL FIELD

This application relates to the field of wireless communication technologies, and in particular, to a communication method and a related apparatus.

## BACKGROUND

With continuous development of cellular communication technologies, network transmission bandwidth continuously increases, and transmission channels also sharply increase. Consequently, power consumption of a network device and power consumption of a terminal device also increase. To reduce power consumption of a communication system, two power-saving technologies, namely, cell discontinuous transmission (cell discontinuous transmission, cell DTX) and cell discontinuous reception (cell discontinuous reception, cell DRX), are proposed. A basic idea of the two power-saving technologies is to configure a cycle including active time and inactive time. When the power-saving technologies are activated, the network device and the terminal device do not transmit some channels/signals in the inactive time in the cycle, to reduce power consumption of the communication system.

In a conventional technology, a network device indicates, by using multicast downlink control information (downlink control information, DCI), a terminal device to activate/deactivate a cell DTX or a cell DRX. The DCI may also be referred to as DCI Format 2_X. In this case, the terminal device needs to blindly detect the DCI based on configurations of a search space and a control resource set that correspond to the DCI. However, in this manner, the terminal device needs to continuously detect the DCI, and the network device may need to continuously send the DCI to the terminal device. This is not conducive to reducing power consumption of a communication system.

## SUMMARY

To resolve the foregoing problem, this application provides a communication method and a related apparatus, to effectively reduce power consumption of a communication system.

According to a first aspect, this application provides a communication method. The method may be applied to a terminal device. The method includes: receiving, in a target time period, target indication information sent by a network device, where the target time period is included in active time of a first discontinuous transmission of a first cell of the terminal device; and activating/deactivating the first discontinuous transmission based on the target indication information.

In the foregoing implementation, the terminal device detects and receives the target indication information only in the target time period, and further activates/deactivates the first discontinuous transmission based on the target indication information. This can reduce a quantity of times of receiving the target indication information, and reduce power consumption of the terminal device.

With reference to the first aspect, in a feasible implementation, the terminal device may receive target configuration information sent by the network device, where the target configuration information includes a first offset and a second offset. The first offset is a time unit offset of a start time unit of the target time period relative to a start time unit of the active time of the first discontinuous transmission, and the second offset is a time unit offset of an end time unit of the target time period relative to the start time unit of the active time of the first discontinuous transmission; or the first offset is a time unit offset of a start time unit of the target time period relative to an end time unit of the active time of the first discontinuous transmission, and the second offset is a time unit offset of an end time unit of the target time period relative to the end time unit of the active time of the first discontinuous transmission. The terminal device may determine the target time period based on the first offset and the second offset.

With reference to the first aspect, in a feasible implementation, the terminal device may activate/deactivate the first discontinuous transmission in a first target time unit based on the target indication information, where the first target time unit is a next time unit of the end time unit of the active time of the first discontinuous transmission, or the first target time unit is an $X^{th}$ time unit after the end time unit of the target time period, where X is a positive integer greater than or equal to 1.

With reference to the first aspect, in a feasible implementation, the first discontinuous transmission is a discontinuous transmission DTX, a discontinuous reception DRX is further configured for the first cell, and the terminal device may activate/deactivate the DRX of the first cell based on the target indication information.

With reference to the first aspect, in a feasible implementation, active time of the DTX of the first cell is shorter than or equal to active time of the DRX of the first cell, and/or a cycle of the DTX of the first cell is shorter than or equal to a cycle of the DRX of the first cell.

In the foregoing implementation, when both the DTX and the DRX are configured for the first cell, the target time period is defined based on the DTX of the first cell, so that a quantity of times that the terminal device receives the target indication information can be reduced, thereby effectively reducing power consumption of the terminal device.

With reference to the first aspect, in a feasible implementation, the first discontinuous transmission is a discontinuous reception DRX, a discontinuous transmission DTX is further configured for the first cell, and the terminal device may activate/deactivate the DTX of the first cell based on the target indication information.

With reference to the first aspect, in a feasible implementation, active time of the DRX of the first cell is shorter than or equal to active time of the DTX of the first cell, and/or a cycle of the DRX of the first cell is shorter than or equal to a cycle of the DTX of the first cell.

In the foregoing implementation, when both the DTX and the DRX are configured for the first cell, the target time period is defined based on the DRX of the first cell, so that a quantity of times that the terminal device sends the target indication information can be reduced, thereby effectively reducing power consumption of the terminal device.

With reference to the first aspect, in a feasible implementation, a second discontinuous transmission is configured for each of at least one second cell of the terminal device. The terminal device may activate/deactivate a second discontinuous transmission of any second cell i in the at least one second cell based on the target indication information.

With reference to the first aspect, in a feasible implementation, the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

In the foregoing implementation, when a discontinuous transmission is configured for a plurality of cells of the terminal device, the target time period for receiving the target indication information may be defined based on a cell corresponding to the discontinuous transmission with shortest active time and/or a shortest cycle in the plurality of cells. In this way, a quantity of times of sending the target indication information can be reduced, thereby reducing power consumption of the terminal device.

With reference to the first aspect, in a feasible implementation, if determining that the target indication information is received for the first time in a cycle of the second discontinuous transmission of any second cell i in the at least one second cell, and a time unit in which the target indication information is received is in inactive time of the second discontinuous transmission of the second cell i, the terminal device activates/deactivates the second cell i in a second target time unit based on the target indication information. The second target time unit is a $Y^{th}$ time unit after the time unit in which the target indication information is received, and Y is a positive integer greater than or equal to 1. In this implementation, even if the terminal device receives the target indication information in inactive time of a second continuous transmission of any second cell i, the terminal device can activate/deactivate the second discontinuous transmission of the second cell i in a timely manner. This can improve transmission stability.

With reference to the first aspect, in a feasible implementation, target indication information received by the terminal device in inactive time of the second discontinuous transmission of any second cell i in the at least one second cell is not for activating/deactivating the second discontinuous transmission of the second cell i. This implementation not only can avoid repeated indication of the second discontinuous transmission of the second cell i, but also can avoid impact generated, when the terminal device does not detect the target indication information, on the second discontinuous transmission of the second cell i that is determined to be activated or deactivated, thereby avoiding logic confusion.

With reference to the first aspect, in a feasible implementation, when the terminal device receives a plurality of pieces of target indication information in one cycle of a discontinuous transmission of any cell j, the plurality of pieces of target indication information all indicate to activate the discontinuous transmission of the cell j, or the plurality of pieces of target indication information all indicate to deactivate the discontinuous transmission of the cell j. This implementation can ensure that indication results of all target indication information received by the terminal device in a cycle of each discontinuous transmission of any cell j are consistent, and avoid logic confusion caused by inconsistent indication results of a plurality of pieces of target indication information.

With reference to the first aspect, in a feasible implementation, a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

With reference to the first aspect, in a feasible implementation, each cycle of a discontinuous transmission of the first cell includes the target time period, or a part of cycles of a discontinuous transmission of the first cell include the target time period, and time intervals between the part of cycles are the same.

According to a second aspect, this application provides a communication method. The method is applicable to a network device. The method includes: determining target indication information, where the target indication information is for activating/deactivating a first discontinuous transmission of a first cell; and sending the target indication information to a terminal device in a target time period, where the target time period is included in active time of the first discontinuous transmission.

In the foregoing implementation, the network device sends the target indication information only in the target time period. In this way, a quantity of times of sending the target indication information can be reduced, thereby reducing power consumption of the network device.

With reference to the second aspect, in a feasible implementation, the network device may send target configuration information to the terminal device. The target configuration information includes a first offset and a second offset, where the first offset is a time unit offset of a start time unit of the target time period relative to a start time unit of the active time of the first discontinuous transmission, and the second offset is a time unit offset of an end time unit of the target time period relative to the start time unit of the active time of the first discontinuous transmission; or the first offset is a time unit offset of a start time unit of the target time period relative to an end time unit of the active time of the first discontinuous transmission, and the second offset is a time unit offset of an end time unit of the target time period relative to the end time unit of the active time of the first discontinuous transmission.

With reference to the second aspect, in a feasible implementation, the network device may activate/deactivate the first discontinuous transmission in a first target time unit, where the first target time unit is a next time unit of the end time unit of the active time of the first discontinuous transmission, or the first target time unit is an $X^{th}$ time unit after the end time unit of the target time period, where X is a positive integer greater than or equal to 1.

With reference to the second aspect, in a feasible implementation, the first discontinuous transmission is a discontinuous transmission DTX, a discontinuous reception DRX is further configured for the first cell, and the target indication information is further for activating/deactivating the DRX of the first cell.

With reference to the second aspect, in a feasible implementation, active time of the DTX of the first cell is shorter than or equal to active time of the DRX of the first cell, and/or a cycle of the DTX of the first cell is shorter than or equal to a cycle of the DRX of the first cell.

In the foregoing implementation, when both the DTX and the DRX are configured for the first cell, defining the target time period based on the DTX of the first cell not only can reduce a quantity of times that the network device sends the target indication information, but also can prevent the network device from sending the target indication information in inactive time of the DTX of the first cell, thereby effectively reducing power consumption of the network device.

With reference to the second aspect, in a feasible implementation, the first discontinuous transmission is a discontinuous reception DRX, a discontinuous transmission DTX is further configured for the first cell, and the target indication information is further for activating/deactivating the DTX of the first cell.

With reference to the second aspect, in a feasible implementation, active time of the DRX of the first cell is shorter than or equal to active time of the DTX of the first cell, and/or a cycle of the DRX of the first cell is shorter than or equal to a cycle of the DTX of the first cell.

In the foregoing implementation, when both the DTX and the DRX are configured for the first cell, the target time period is defined based on the DRX of the first cell, so that a quantity of times that the network device sends the target indication information can be reduced, thereby effectively reducing power consumption of the network device.

With reference to the second aspect, in a feasible implementation, a second discontinuous transmission is configured for each of at least one second cell of the terminal device, and the target indication information is further for activating/deactivating a second discontinuous transmission of any second cell i in the at least one second cell.

With reference to the second aspect, in a feasible implementation, the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

In the foregoing implementation, when a discontinuous transmission is configured for a plurality of cells of the terminal device, the target time period for sending the target indication information may be defined based on a cell corresponding to the discontinuous transmission with shortest active time and/or a shortest cycle in the plurality of cells. In this way, a quantity of times of sending the target indication information can be reduced, thereby reducing power consumption of the network device.

With reference to the second aspect, in a feasible implementation, the target indication information sent by the network device in inactive time of the second discontinuous transmission of any second cell i in the at least one second cell is not for activating/deactivating the second discontinuous transmission of the second cell i. This implementation not only can avoid repeated indication of the second discontinuous transmission of the second cell i, but also can avoid impact generated, when the terminal device does not detect the target indication information, on the second discontinuous transmission of the second cell i that is determined to be activated or deactivated, thereby avoiding logic confusion.

With reference to the second aspect, in a feasible implementation, when the network device sends a plurality of pieces of target indication information in one cycle of a discontinuous transmission of any cell j of the terminal device, the plurality of pieces of target indication information all indicate to activate the discontinuous transmission of the cell j, or the plurality of pieces of target indication information all indicate to deactivate the discontinuous transmission of the cell j. This implementation can ensure that indication results of all target indication information received by the terminal device in a cycle of each discontinuous transmission of any cell j are consistent, and avoid logic confusion caused by inconsistent indication results of a plurality of pieces of target indication information.

With reference to the second aspect, in a feasible implementation, a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

With reference to the second aspect, in a feasible implementation, each cycle of a discontinuous transmission of the first cell includes the target time period, or a part of cycles of a discontinuous transmission of the first cell include the target time period, and time intervals between the part of cycles are the same.

According to a third aspect, this application provides a communication method. The communication method is applicable to the terminal device described above. The communication method includes: receiving, in a target time period of a preset cycle, target indication information sent by a network device, where the preset cycle is different from a periodicity indicated by a search space associated with the target indication information, and/or the target time period is different from a detection occasion indicated by a search space and a control resource set that are associated with the target indication information; and activating/deactivating a first discontinuous transmission of a first cell of the terminal device based on the target indication information.

In the foregoing implementation, the terminal device detects and receives the target indication information only in the target time period of the preset cycle. In this way, a quantity of times of receiving the target indication information can be reduced, thereby reducing power consumption of the terminal device.

With reference to the third aspect, in a feasible implementation, preset cycle configuration information sent by the network device is received. The preset cycle configuration information includes at least a cycle length of the preset cycle, a start offset, and configuration information of the target time period, and the configuration information corresponding to the target time period indicates a location of the target time period in the preset cycle. The preset cycle is determined based on the cycle length and the start offset, and the target time period included in each preset cycle is determined based on the configuration information of the target time period.

With reference to the third aspect, in a feasible implementation, the first discontinuous transmission of the first cell of the terminal device may be activated/deactivated in a first target time unit based on the target indication information, where the first target time unit is a next time unit of the end time unit of the active time of the first discontinuous transmission, or the first target time unit is an $X^{th}$ time unit after the end time unit of the target time period, where X is a positive integer greater than or equal to 1.

With reference to the third aspect, in a feasible implementation, the first discontinuous transmission is a discontinuous transmission DTX, a discontinuous reception DRX is further configured for the first cell, and the method further includes: activating/deactivating the DRX of the first cell based on the target indication information.

With reference to the third aspect, in a feasible implementation, active time of the DTX of the first cell is shorter than or equal to active time of the DRX of the first cell, and/or a cycle of the DTX of the first cell is shorter than or equal to a cycle of the DRX of the first cell.

With reference to the third aspect, in a feasible implementation, the first discontinuous transmission is a discontinuous reception DRX, a discontinuous transmission DTX is further configured for the first cell, and the method further includes: activating/deactivating the DTX of the first cell based on the target indication information.

With reference to the third aspect, in a feasible implementation, active time of the DRX of the first cell is shorter than or equal to active time of the DTX of the first cell, and/or a cycle of the DRX of the first cell is shorter than or equal to a cycle of the DTX of the first cell.

With reference to the third aspect, in a feasible implementation, a second discontinuous transmission is configured for each of at least one second cell of the terminal device, and the method further includes: activating/deactivating a second discontinuous transmission of any second cell i in the at least one second cell based on the target indication information.

With reference to the third aspect, in a feasible implementation, the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

With reference to the third aspect, in a feasible implementation, if it is determined that the target indication information is received for the first time in a cycle of the second discontinuous transmission of any second cell i in the at least one second cell, and a time unit in which the target indication information is received is in inactive time of the second discontinuous transmission of the second cell i, the second cell i is activated/deactivated in a second target time unit based on the target indication information. The second target time unit is a $Y^{th}$ time unit after the time unit in which the target indication information is received, and Y is a positive integer greater than or equal to 1.

With reference to the third aspect, in a feasible implementation, target indication information received by the terminal device in inactive time of the second discontinuous transmission of any second cell i in the at least one second cell is not for activating/deactivating the second discontinuous transmission of the second cell i.

With reference to the third aspect, in a feasible implementation, when the terminal device receives a plurality of pieces of target indication information in one cycle of a discontinuous transmission of any cell j, the plurality of pieces of target indication information all indicate to activate the discontinuous transmission of the cell j, or the plurality of pieces of target indication information all indicate to deactivate the discontinuous transmission of the cell j.

With reference to the third aspect, in a feasible implementation, a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

With reference to the third aspect, in a feasible implementation, the preset cycle is an integer multiple of the cycle of the first discontinuous transmission.

With reference to the third aspect, in a feasible implementation, the target time period is included in the active time of the first discontinuous transmission.

According to a fourth aspect, this application provides a communication method. The communication method is applicable to a network device. The method includes: determining target indication information, where the target indication information indicates to activate/deactivate a first discontinuous transmission of a first cell of a terminal device; and sending the target indication information to the terminal device in a target time period of a preset cycle, where the preset cycle is different from a periodicity indicated by a search space associated with the target indication information, and/or the target time period is different from a detection occasion indicated by a search space and a control resource set that are associated with the target indication information.

With reference to the fourth aspect, in an optional implementation, the network device generates preset cycle configuration information and sends the preset cycle configuration information to the terminal device. The preset cycle configuration information includes at least a cycle length of the preset cycle, a start offset, and configuration information corresponding to the target time period, and the configuration information corresponding to the target time period indicates a location of the target time period in the preset cycle.

With reference to the fourth aspect, in a feasible implementation, the method further includes: activating/deactivating the first discontinuous transmission in a first target time unit, where the first target time unit is a next time unit of the end time unit of the active time of the first discontinuous transmission, or the first target time unit is an $X^{th}$ time unit after the end time unit of the target time period, where X is a positive integer greater than or equal to 1.

In the foregoing implementation, the network device sends the target indication information only in the target time period of the preset cycle. In this way, a quantity of times of sending the target indication information can be reduced, thereby reducing power consumption of the network device.

With reference to the fourth aspect, in a feasible implementation, the first discontinuous transmission is a discontinuous transmission DTX, a discontinuous reception DRX is further configured for the first cell, and the target indication information is further for activating/deactivating the DRX of the first cell.

With reference to the fourth aspect, in a feasible implementation, active time of the DTX of the first cell is shorter than or equal to active time of the DRX of the first cell, and/or a cycle of the DTX of the first cell is shorter than or equal to a cycle of the DRX of the first cell.

With reference to the fourth aspect, in a feasible implementation, the first discontinuous transmission is a discontinuous reception DRX, a discontinuous transmission DTX is further configured for the first cell, and the target indication information is further for activating/deactivating the DTX of the first cell.

With reference to the fourth aspect, in a feasible implementation, active time of the DRX of the first cell is shorter than or equal to active time of the DTX of the first cell, and/or a cycle of the DRX of the first cell is shorter than or equal to a cycle of the DTX of the first cell.

With reference to the fourth aspect, in a feasible implementation, a second discontinuous transmission is configured for each of the at least one second cell of the terminal device, and the target indication information is further for activating/deactivating a second discontinuous transmission of any second cell i in the at least one second cell.

With reference to the fourth aspect, in a feasible implementation, the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

With reference to the fourth aspect, in a feasible implementation, the target indication information sent by the network device in inactive time of the second discontinuous transmission of any second cell i in the at least one second cell is not for activating/deactivating the second discontinuous transmission of the second cell i.

With reference to the fourth aspect, in a feasible implementation, when the network device sends a plurality of pieces of target indication information in one cycle of a discontinuous transmission of any cell j of the terminal device, the plurality of pieces of target indication information all indicate to activate the discontinuous transmission of the cell j, or the plurality of pieces of target indication information all indicate to deactivate the discontinuous transmission of the cell j.

With reference to the fourth aspect, in a feasible implementation, a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

With reference to the fourth aspect, in a feasible implementation, the preset cycle is a positive integer multiple of the cycle of the first discontinuous transmission.

With reference to the fourth aspect, in a feasible implementation, the target time period is included in the active time of the first discontinuous transmission.

According to a fifth aspect, this application provides a communication apparatus. The communication apparatus may be the terminal device mentioned in the first aspect. The communication apparatus includes a processing unit and a transceiver unit. The transceiver unit is configured to receive, in a target time period, target indication information sent by a network device, where the target time period is included in active time of a first discontinuous transmission of a first cell of the terminal device. The processing unit is configured to activate/deactivate the first discontinuous transmission based on the target indication information.

With reference to the fifth aspect, in a feasible implementation, the transceiver unit is further configured to receive target configuration information sent by the network device, where the target configuration information includes a first offset and a second offset. The first offset is a time unit offset of a start time unit of the target time period relative to a start time unit of the active time of the first discontinuous transmission, and the second offset is a time unit offset of an end time unit of the target time period relative to the start time unit of the active time of the first discontinuous transmission; or the first offset is a time unit offset of a start time unit of the target time period relative to an end time unit of the active time of the first discontinuous transmission, and the second offset is a time unit offset of an end time unit of the target time period relative to the end time unit of the active time of the first discontinuous transmission. The processing unit is further configured to determine the target time period based on the first offset and the second offset.

With reference to the fifth aspect, in a feasible implementation, the processing unit is configured to activate/-deactivate the first discontinuous transmission in a first target time unit based on the target indication information, where the first target time unit is a next time unit of the end time unit of the active time of the first discontinuous transmission, or the first target time unit is an $X^{th}$ time unit after the end time unit of the target time period, where X is a positive integer greater than or equal to 1.

With reference to the fifth aspect, in a feasible implementation, the first discontinuous transmission is a discontinuous transmission DTX, a discontinuous reception DRX is further configured for the first cell, and the processing unit is further configured to activate/deactivate the DRX of the first cell based on the target indication information.

With reference to the fifth aspect, in a feasible implementation, active time of the DTX of the first cell is shorter than or equal to active time of the DRX of the first cell, and/or a cycle of the DTX of the first cell is shorter than or equal to a cycle of the DRX of the first cell.

With reference to the fifth aspect, in a feasible implementation, the first discontinuous transmission is a discontinuous reception DRX, a discontinuous transmission DTX is further configured for the first cell, and the processing unit is further configured to activate/deactivate the DTX of the first cell based on the target indication information.

With reference to the fifth aspect, in a feasible implementation, active time of the DRX of the first cell is shorter than or equal to active time of the DTX of the first cell, and/or a cycle of the DRX of the first cell is shorter than or equal to a cycle of the DTX of the first cell.

With reference to the fifth aspect, in a feasible implementation, a second discontinuous transmission is configured for each of the at least one second cell of the terminal device, and the processing unit is further configured to activate/deactivate a second discontinuous transmission of any second cell i in the at least one second cell based on the target indication information.

With reference to the fifth aspect, in a feasible implementation, the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

With reference to the fifth aspect, in a feasible implementation, the processing unit is further configured to: if it is determined that the target indication information is received for the first time in a cycle of the second discontinuous transmission of any second cell i in the at least one second cell, and a time unit in which the target indication information is received is in inactive time of the second discontinuous transmission of the second cell i, activate/deactivate the second cell i in a second target time unit based on the target indication information. The second target time unit is a $Y^{th}$ time unit after the time unit in which the target indication information is received, and Y is a positive integer greater than or equal to 1.

With reference to the fifth aspect, in a feasible implementation, the target indication information received by the transceiver unit in inactive time of the second discontinuous transmission of any second cell i in the at least one second cell is not for activating/deactivating the second discontinuous transmission of the second cell i.

With reference to the fifth aspect, in a feasible implementation, when the transceiver unit receives a plurality of pieces of target indication information in one cycle of a discontinuous transmission of any cell j, the plurality of pieces of target indication information all indicate to activate the discontinuous transmission of the cell j, or the plurality of pieces of target indication information all indicate to deactivate the discontinuous transmission of the cell j.

With reference to the fifth aspect, in a feasible implementation, a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

With reference to the fifth aspect, in a feasible implementation, each cycle of a discontinuous transmission of the first cell includes the target time period, or a part of cycles of a discontinuous transmission of the first cell include the target time period, and time intervals between the part of cycles are the same.

According to a sixth aspect, this application provides a communication apparatus. The communication apparatus may be the network device mentioned in the second aspect. The network device includes a processing unit and a transceiver unit. The processing unit is configured to determine target indication information, where the target indication information is for activating/deactivating a first discontinuous transmission of a first cell. The transceiver unit is configured to send the target indication information to a terminal device in a target time period, where the target time period is included in active time of the first discontinuous transmission.

With reference to the sixth aspect, in a feasible implementation, the transceiver unit is further configured to send target configuration information to the terminal device. The target configuration information includes a first offset and a second offset, where the first offset is a time unit offset of a start time unit of the target time period relative to a start time unit of the active time of the first discontinuous transmission, and the second offset is a time unit offset of an end time unit of the target time period relative to the start time unit of the active time of the first discontinuous transmission; or the first offset is a time unit offset of a start time unit of the target time period relative to an end time unit of the active time of the first discontinuous transmission, and the second offset is a time unit offset of an end time unit of the target time period relative to the end time unit of the active time of the first discontinuous transmission.

With reference to the sixth aspect, in a feasible implementation, the processing unit is further configured to activate/deactivate the first discontinuous transmission in a first target time unit, where the first target time unit is a next time unit of the end time unit of the active time of the first discontinuous transmission, or the first target time unit is an $X^{th}$ time unit after the end time unit of the target time period, where X is a positive integer greater than or equal to 1.

With reference to the sixth aspect, in a feasible implementation, the first discontinuous transmission is a discontinuous transmission DTX, a discontinuous reception DRX is further configured for the first cell, and the target indication information is further for activating/deactivating the DRX of the first cell.

With reference to the sixth aspect, in a feasible implementation, active time of the DTX of the first cell is shorter than or equal to active time of the DRX of the first cell, and/or a cycle of the DTX of the first cell is shorter than or equal to a cycle of the DRX of the first cell.

With reference to the sixth aspect, in a feasible implementation, the first discontinuous transmission is a discontinuous reception DRX, a discontinuous transmission DTX is further configured for the first cell, and the target indication information is further for activating/deactivating the DTX of the first cell.

With reference to the sixth aspect, in a feasible implementation, active time of the DRX of the first cell is shorter than or equal to active time of the DTX of the first cell, and/or a cycle of the DRX of the first cell is shorter than or equal to a cycle of the DTX of the first cell.

With reference to the sixth aspect, in a feasible implementation, a second discontinuous transmission is configured for each of the at least one second cell of the terminal device, and the target indication information is further for activating/deactivating a second discontinuous transmission of any second cell i in the at least one second cell.

With reference to the sixth aspect, in a feasible implementation, the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

With reference to the sixth aspect, in a feasible implementation, the target indication information sent by the transceiver unit in inactive time of the second discontinuous transmission of any second cell i in the at least one second cell is not for activating/deactivating the second discontinuous transmission of the second cell i.

With reference to the sixth aspect, in a feasible implementation, when the transceiver unit sends a plurality of pieces of target indication information in one cycle of a discontinuous transmission of any cell j of the terminal device, the plurality of pieces of target indication information all indicate to activate the discontinuous transmission of the cell j, or the plurality of pieces of target indication information all indicate to deactivate the discontinuous transmission of the cell j.

With reference to the sixth aspect, in a feasible implementation, a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

With reference to the sixth aspect, in a feasible implementation, each cycle of a discontinuous transmission of the first cell includes the target time period, or a part of cycles of a discontinuous transmission of the first cell include the target time period, and time intervals between the part of cycles are the same.

According to a seventh aspect, this application provides a communication apparatus. The communication apparatus may be the terminal device mentioned in the third aspect. The communication apparatus may include a processing unit and a transceiver unit. The transceiver unit is configured to receive, in a target time period in a preset cycle, target indication information sent by a network device. The preset cycle is different from a periodicity indicated by a search space associated with the target indication information, and/or the target time period is different from a detection occasion indicated by a search space and a control resource set that are associated with the target indication information. The processing unit is configured to activate/deactivate a first discontinuous transmission of a first cell of the terminal device based on the target indication information.

With reference to the seventh aspect, in a feasible implementation, the processing unit is configured to activate/deactivate the first discontinuous transmission in a first target time unit based on the target indication information, where the first target time unit is the end time unit of the active time of the first discontinuous transmission, or the first target time unit is an $X^{th}$ time unit after the end time unit of the target time period, where X is a positive integer greater than or equal to 1.

With reference to the seventh aspect, in a feasible implementation, the first discontinuous transmission is a discontinuous transmission DTX, a discontinuous reception DRX is further configured for the first cell, and the processing unit is further configured to activate/deactivate the DRX of the first cell based on the target indication information.

With reference to the seventh aspect, in a feasible implementation, active time of the DTX of the first cell is shorter than or equal to active time of the DRX of the first cell, and/or a cycle of the DTX of the first cell is shorter than or equal to a cycle of the DRX of the first cell.

With reference to the seventh aspect, in a feasible implementation, the first discontinuous transmission is a discontinuous reception DRX, a discontinuous transmission DTX is further configured for the first cell, and the processing unit is further configured to activate/deactivate the DTX of the first cell based on the target indication information.

With reference to the seventh aspect, in a feasible implementation, active time of the DRX of the first cell is shorter than or equal to active time of the DTX of the first cell, and/or a cycle of the DRX of the first cell is shorter than or equal to a cycle of the DTX of the first cell.

With reference to the seventh aspect, in a feasible implementation, a second discontinuous transmission is configured for each of the at least one second cell of the terminal device, and the processing unit is further configured to activate/deactivate a second discontinuous transmission of any second cell i in the at least one second cell based on the target indication information.

With reference to the seventh aspect, in a feasible implementation, the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

With reference to the seventh aspect, in a feasible implementation, the processing unit is further configured to: if it is determined that the target indication information is received for the first time in a cycle of the second discontinuous transmission of any second cell i in the at least one second cell, and a time unit in which the target indication information is received is in inactive time of the second discontinuous transmission of the second cell i, activate/deactivate the second cell i in a second target time unit based on the target indication information. The second target time unit is a $Y^{th}$ time unit after the time unit in which the target indication information is received, and Y is a positive integer greater than or equal to 1.

With reference to the seventh aspect, in a feasible implementation, the target indication information received by the transceiver unit in inactive time of the second discontinuous transmission of any second cell i in the at least one second cell is not for activating/deactivating the second discontinuous transmission of the second cell i.

With reference to the seventh aspect, in a feasible implementation, when the transceiver unit receives a plurality of pieces of target indication information in one cycle of a discontinuous transmission of any cell j, the plurality of pieces of target indication information all indicate to activate the discontinuous transmission of the cell j, or the plurality of pieces of target indication information all indicate to deactivate the discontinuous transmission of the cell j.

With reference to the seventh aspect, in a feasible implementation, a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

With reference to the seventh aspect, in a feasible implementation, each cycle of a discontinuous transmission of the first cell includes the target time period, or a part of cycles of a discontinuous transmission of the first cell include the target time period, and time intervals between the part of cycles are the same.

With reference to the seventh aspect, in a feasible implementation, the preset cycle is a positive integer multiple of the cycle of the first discontinuous transmission.

With reference to the seventh aspect, in a feasible implementation, the target time period is included in the active time of the first discontinuous transmission.

According to an eighth aspect, this application provides a communication apparatus. The communication apparatus may be the network device according to the fourth aspect. The communication apparatus includes a transceiver unit and a processing unit. The processing unit is configured to determine target indication information, where the target indication information indicates to activate/deactivate a first discontinuous transmission of a first cell of a terminal device. The transceiver unit is configured to send the target indication information to the terminal device in a target time period of a preset cycle, where the preset cycle is different from a periodicity indicated by a search space associated with the target indication information, and/or the target time period is different from a detection occasion indicated by a search space and a control resource set that are associated with the target indication information.

With reference to the eighth aspect, in a feasible implementation, the processing unit is further configured to activate/deactivate the first discontinuous transmission in a first target time unit, where the first target time unit is a next time unit of the end time unit of the active time of the first discontinuous transmission, or the first target time unit is an $X^{th}$ time unit after the end time unit of the target time period, where X is a positive integer greater than or equal to 1.

With reference to the eighth aspect, in a feasible implementation, the first discontinuous transmission is a discontinuous transmission DTX, a discontinuous reception DRX is further configured for the first cell, and the target indication information is further for activating/deactivating the DRX of the first cell.

With reference to the eighth aspect, in a feasible implementation, active time of the DTX of the first cell is shorter than or equal to active time of the DRX of the first cell, and/or a cycle of the DTX of the first cell is shorter than or equal to a cycle of the DRX of the first cell.

With reference to the eighth aspect, in a feasible implementation, the first discontinuous transmission is a discontinuous reception DRX, a discontinuous transmission DTX is further configured for the first cell, and the target indication information is further for activating/deactivating the DTX of the first cell.

With reference to the eighth aspect, in a feasible implementation, active time of the DRX of the first cell is shorter than or equal to active time of the DTX of the first cell, and/or a cycle of the DRX of the first cell is shorter than or equal to a cycle of the DTX of the first cell.

With reference to the eighth aspect, in a feasible implementation, a second discontinuous transmission is configured for each of the at least one second cell of the terminal device, and the target indication information is further for activating/deactivating a second discontinuous transmission of any second cell i in the at least one second cell.

With reference to the eighth aspect, in a feasible implementation, the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

With reference to the eighth aspect, in a feasible implementation, the target indication information sent by the transceiver unit in inactive time of the second discontinuous transmission of any second cell i in the at least one second cell is not for activating/deactivating the second discontinuous transmission of the second cell i.

With reference to the eighth aspect, in a feasible implementation, when the transceiver unit sends a plurality of pieces of target indication information in one cycle of a discontinuous transmission of any cell j of the terminal device, the plurality of pieces of target indication information all indicate to activate the discontinuous transmission of the cell j, or the plurality of pieces of target indication information all indicate to deactivate the discontinuous transmission of the cell j.

With reference to the eighth aspect, in a feasible implementation, a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

With reference to the eighth aspect, in a feasible implementation, each cycle of a discontinuous transmission of the first cell includes the target time period, or a part of cycles of a discontinuous transmission of the first cell include the target time period, and time intervals between the part of cycles are the same.

With reference to the eighth aspect, in a feasible implementation, the preset cycle is a positive integer multiple of the cycle of the first discontinuous transmission.

With reference to the eighth aspect, in a feasible implementation, the target time period is included in the active time of the first discontinuous transmission.

According to a ninth aspect, this application provides a computer-readable storage medium. The computer-readable storage medium stores instructions, and the instructions may be executed by one or more processors on a processing circuit. When the instructions are run on a computer, the computer is enabled to perform the communication method according to the first aspect, the second aspect, the third aspect, or the fourth aspect.

According to a tenth aspect, this application provides a communication apparatus, including at least one processor and a memory. The memory is configured to store a computer program. The processor is configured to execute the computer program stored in the memory, so that the communication apparatus performs the communication method according to the first aspect, the second aspect, the third aspect, or the fourth aspect.

According to an eleventh aspect, an embodiment of this application provides a chip, including an input/output interface and a processing circuit, where the input/output interface is configured to exchange information or data, and the processing circuit is configured to run instructions, so that an apparatus in which the chip is installed performs the communication method according to the first aspect, the second aspect, the third aspect, or the fourth aspect.

According to a twelfth aspect, this application provides a chip system. The chip system includes a processor, configured to support an apparatus in which the chip system is installed in implementing the communication method according to the first aspect, the second aspect, the third aspect, or the fourth aspect, for example, generating or processing data and/or information in the foregoing method. In a possible design, the chip system further includes a memory. The memory is configured to store program instructions and data that are necessary for a data sending device. The chip system may include a chip, or may include a chip and another discrete component.

According to the communication method provided in this application, the network device and the terminal device need to transmit, only in a preset time period, the target indication information indicating to activate/deactivate the first discontinuous transmission of the first cell. In this way, power consumption of a communication system can be effectively reduced.

**BRIEF DESCRIPTION OF DRAWINGS**

FIG. 1 is an architectural diagram of a communication system to which an embodiment of this application is applied;
FIG. 2 is a diagram of a DTX/DRX cycle according to this application;
FIG. 3 is a schematic flowchart of a communication method according to this application;
FIG. 4 is a diagram of a transmission time period of target indication information according to this application;
FIG. 5 is another diagram of a transmission time period of target indication information according to this application;
FIG. 6 is another diagram of a transmission time period of target indication information according to this application;
FIG. 7 is another diagram of a transmission time period of target indication information according to this application;
FIG. 8 is another diagram of a transmission time period of target indication information according to this application;
FIG. 9 is another diagram of a transmission time period of target indication information according to this application;
FIG. 10 is another diagram of a transmission time period of target indication information according to this application;
FIG. 11 is another diagram of a transmission time period of target indication information according to this application;
FIG. 12 is another diagram of a transmission time period of target indication information according to this application;
FIG. 13 is another diagram of a transmission time period of target indication information according to this application;
FIG. 14 is another diagram of a transmission time period of target indication information according to this application;
FIG. 15 is another diagram of a transmission time period of target indication information according to this application;
FIG. 16 is another diagram of a transmission time period of target indication information according to this application;
FIG. 17 is another diagram of a transmission time period of target indication information according to this application;
FIG. 18 is another schematic flowchart of a communication method according to this application;
FIG. 19 is another schematic flowchart of a communication method according to this application;
FIG. 20 is a diagram of a format of target indication information according to this application;
FIG. 21 is another diagram of a format of target indication information according to this application;
FIG. 22 is a schematic flowchart of another communication method according to this application;
FIG. 23 is another diagram of a transmission time period of target indication information according to this application;
FIG. 24 is another diagram of a transmission time period of target indication information according to this application;
FIG. 25 is another diagram of a transmission time period of target indication information according to this application;
FIG. 26 is another schematic flowchart of another communication method according to this application;
FIG. 27 is a diagram of a structure of another communication apparatus according to this application;
FIG. 28 is a diagram of a structure of another communication apparatus according to this application; and
FIG. 29 is a diagram of a structure of another communication apparatus according to this application.

## DESCRIPTION OF EMBODIMENTS

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

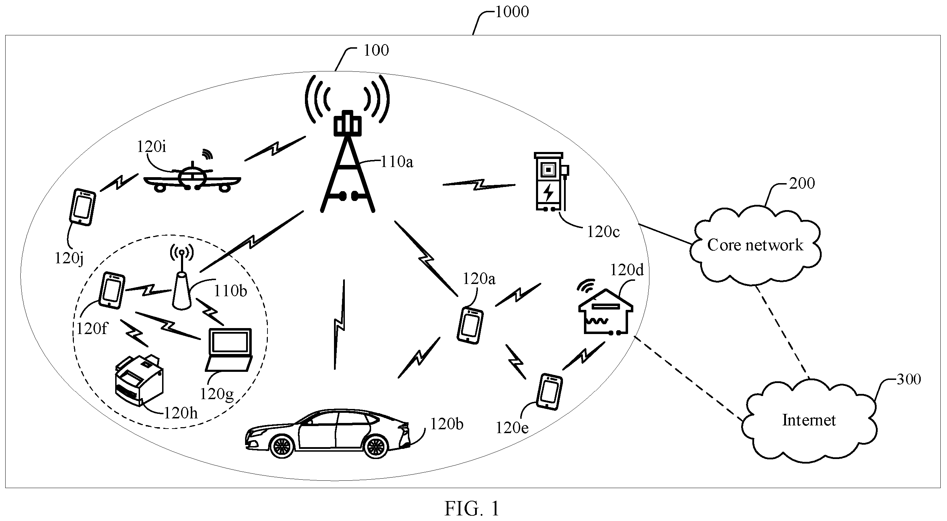

Refer to FIG. 1. FIG. 1 is an architectural diagram of a communication system to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the network device is a radio access network device.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal may be at fixed locations, or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For the terminal 120j that accesses the radio access network 100 via 120i, the uncrewed aerial vehicle 120i is a network device. However, for the network device 110a, 120i is a terminal. In other words, 110a and 120i communicate with each other according to a radio air interface protocol. Certainly, 110a and 120i may alternatively communicate with each other by using an interface protocol between network devices. In this case, compared with 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum of 6 GHz or below and a spectrum of 6 GHz or above. A spectrum resource used for wireless communication is not limited in embodiments of this application.

In this embodiment of this application, a function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal may alternatively be performed by a module (for example, a chip or a modem) in the terminal, or may be performed by an apparatus including the function of the terminal.

To make the objectives, technical solutions, and advantages of this application clearer, the following further describes this application in detail with reference to the accompanying drawings. A specific operation method in a method embodiment may also be applied to an apparatus embodiment or a system embodiment.

The following describes some terms in embodiments of this application, to facilitate understanding of a person skilled in the art.

(1) Cell discontinuous transmission (cell discontinuous transmission, cell DTX) and cell discontinuous reception (cell discontinuous reception, cell DRX)

To achieve an objective of power saving for a communication system (including a terminal device and a network device), the conventional technology provides an implementation: configuring a cycle including active time (active time) and inactive time (inactive time) for a cell of the terminal device. In the inactive time of the cycle, the terminal device does not send some signals/channels, and the network device does not receive these signals/channels. The terminal device sends these signals/channels and the network device receives these signals/channels only in the active time of the cycle. Such a power-saving technology is referred to as cell DTX, and such a cycle is a cycle of the cell DTX. It should be understood that, in embodiments of this application, the cell DTX may also be referred to as DTX for short, and the two representations may be equivalently replaced. For ease of description, DTX is used in the following descriptions.

Similarly, the conventional technology further provides another implementation: configuring a cycle including active time (active time) and inactive time (inactive time) for a cell of the terminal device. In the inactive time of the cycle, the terminal device does not receive some signals/channels, and the network device does not send these signals/channels. The terminal device receives these signals/channels and the network device sends these signals/channels only in the active time of the cycle. Such a power-saving technology is referred to as cell DRX. It should be understood that, in embodiments of this application, the cell DRX may also be referred to as DRX for short, and the two representations may be equivalently replaced. For ease of description, DRX is used in the following descriptions.

It should be understood that when a DTX or a DRX is configured for a cell, the DTX or the DRX takes effect for all terminal devices in the cell. In other words, a network device may indicate the DTX or the DRX to all users in the cell by using related information, or all users in the cell use a same DTX or DRX.

In actual implementation, the DTX or the DRX may be configured at a granularity of a cell (cell). A network device may configure a DTX for a cell of a terminal device by using RRC signaling. In an actual communication process, the network device may indicate, by using multicast DCI or a MAC control element (control element, CE), the terminal device to activate/deactivate the DTX for the cell. Similarly, the network device may also configure a DRX for a cell of the terminal device by using RRC signaling, and indicate, by using multicast DCI or a MAC CE, the terminal device to activate/deactivate the DRX for the cell.

It should be understood that activating a DTX is to validate a DTX of a cell, or to enable a terminal device to receive some signals/channels in active time in a cycle of the DTX of the cell and not receive these signals/channels in inactive time in the cycle of the DTX of the cell (in this case, a network device sends some signals/channels in the active time in the cycle of the DTX of the cell, and does not send these signals/channels in the inactive time in the cycle of the DTX of the cell). Deactivating a DTX of a cell is to invalidate a DTX of a cell, or to enable a terminal device to receive these signals/channels in any time unit in a cycle of the DTX of the cell (in this case, a network device may send these signals/channels in any time unit in the cycle of the DTX of the cell), or to enable the terminal device to receive these signals/channels in inactive time in the cycle of the DTX of the cell (in this case, the network device may also send these signals/channels in the inactive time in the cycle of the DTX of the cell). Similarly, activating a DRX is to validate a DRX of a cell, or to enable a terminal device to send some signals/channels in active time in a cycle of the DRX of the cell and not send these signals/channels in inactive time in the cycle of the DRX of the cell (in this case, a network device receives some signals/channels in the active time in the cycle of the DRX of the cell, and does not receive these signals/channels in the inactive time in the cycle of the DRX of the cell). Deactivating a DRX of a cell is to invalidate a DRX of a cell, or to enable a terminal device to send these signals/channels in any time unit in a cycle of the DRX of the cell (in this case, a network device may receive these signals/channels in any time unit in the cycle of the DRX of the cell), or to enable the terminal device to send these signals/channels in inactive time in the cycle of the DRX of the cell (in this case, the network device may also receive these signals/channels in inactive time in the cycle of the DRX of the cell). For ease of description, the following uses an activation/deactivation manner for description.

For any cell of a terminal device, only one DTX or DRX may be configured, or a plurality of DTX or DRXs may be configured. When a plurality of DTXs are configured for any cell, only one DTX is activated or takes effect at a same moment, and all remaining DTXs are deactivated or become invalid. Similarly, when a plurality of DRXs are configured for any cell, only one DRX is activated or takes effect at a same moment, and all remaining DTXs are deactivated or become invalid.

It should be noted that DTX or DRX is only a short name of the foregoing two power-saving technologies. In actual implementation, the foregoing two power-saving technologies may also be referred to as a power-saving mode 1 and a power-saving mode 2, or a power-saving configuration 1 and a power-saving configuration 2. Names of the two power-saving technologies are not specifically limited in this application.

It should be further noted that, in embodiments of this application, the DTX technology and the DRX technology may be collectively referred to as a discontinuous transmission technology. In other words, DTX and DRX may be collectively referred to as discontinuous transmission. A discontinuous transmission of a cell in embodiments of this application is a DTX of the cell or a DRX of the cell. In other words, in embodiments of this application, discontinuous transmission is equivalent to DTX or DRX.

(2) Cycles, active time, and inactive time of DTX and DRXs

Key configuration information of the DTX/DRX may include the following items: a cycle length, active time, inactive time, an on moment, an off moment, and the like. The on moment refers to a start moment (namely, a start moment of the cycle of the DTX/DRX) of the active time in the cycle of the DTX/DRX, and the off moment refers to a start moment of the inactive time in the cycle of the DTX/DRX. The cycle of the DTX/DRX includes the active time and the inactive time.

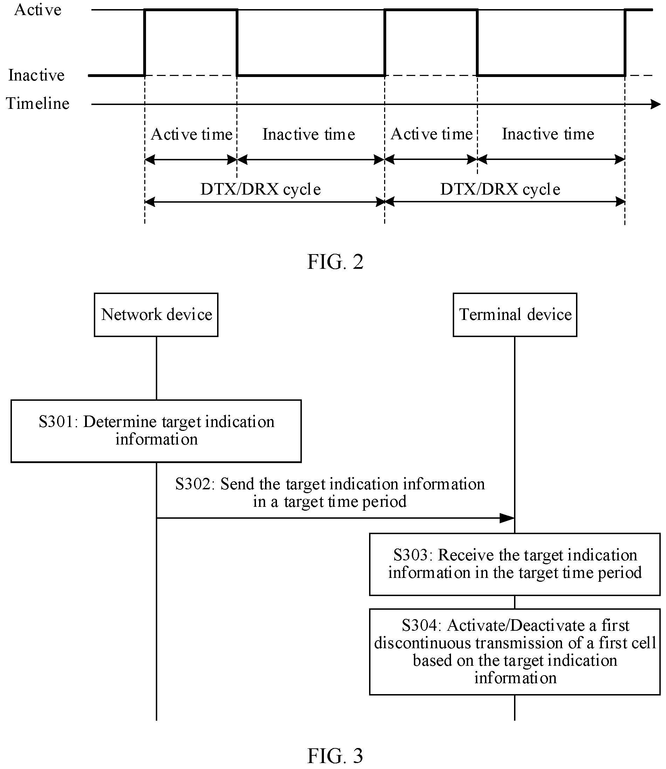

For example, refer to FIG. 2. FIG. 2 is a diagram of a DTX/DRX cycle according to this application. As shown in FIG. 2, the DTX/DRX cycle includes active time and inactive time, and total duration of the active time and the inactive time is a length of the DTX/DRX cycle. In addition, in a DTX/DRX cycle, active time and inactive time are included in a time sequence.

It should be noted that, in embodiments of this application, the active time in the DTX cycle is defined by an activity timer of a DTX, and the active time of the DTX is a timing period (or referred to as a running period) of the activity timer of the DTX. The active time in the DRX cycle is defined by an activity timer of a DRX, and the active time of the DRX is a timing period of the activity timer of the DRX. It may also be understood as that a start time unit of active time of the discontinuous transmission provided in this application is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located. A next time unit of an end time unit of the active time of the DTX/DRX is a start time unit of the inactive time of the DTX/DRX. The activity timer of the DTX may also be referred to as a cell DTX-on duration timer, and the activity timer of the DRX may also be referred to as a cell DRX-on duration timer. Correspondingly, the inactive time in the DTX/DRX cycle is a remaining period in the DTX/DRX cycle except the active time of the DTX/DRX.

In an actual application, a channel/signal that cannot be transmitted in the inactive time in the DTX cycle may be a downlink channel/signal, and a channel/signal that cannot be transmitted in the inactive time in the DRX cycle may be an uplink channel/signal.

For example, the channel/signal that cannot be transmitted in the inactive time in the DRX cycle includes at least one of the following: a configured grant physical uplink shared channel (configured grant PUSCH, CG PUSCH, where the PUSCH is short for physical uplink shared channel), a hybrid automatic repeat request-acknowledgement (hybrid automatic repeat request-acknowledgement, HARQ-ACK) of a semi-persistent scheduled physical downlink shared channel (semi-persistent scheduled physical downlink shared channel, SPS PDSCH), a scheduling request (scheduling request, SR), a physical random access channel (physical random access channel, PRACH), a random access message A, or a random access message 3.

For example, the channel/signal that cannot be transmitted in the inactive time of the DTX cycle includes at least one of the following: a PDCCH scrambled by a modulation and coding scheme-cell radio network temporary identifier (modulation and coding scheme-cell-RNTI, MCS-C-RNTI), a PDCCH scrambled by a power saving-radio network temporary identifier (power saving-RNTI, PS-RNTI), a PDCCH scrambled by a system information-radio network temporary identifier (system information-RNTI, SI-RNTI), a PDCCH scrambled by a random access-radio network temporary identifier (random access-RNTI, RA-RNTI), a PDCCH scrambled by a temporary cell-radio network temporary identifier (temporary cell-RNTI, TC-RNTI), a PDCCH scrambled by a paging-radio network temporary identifier (paging-RNTI, P-RNTI), and a PDCCH scrambled by a paging early indication-radio network temporary identifier (paging early indication-RNTI, PEI-RNTI), a synchronization signa physical broadcast channel block SSB, system information, a paging message, a random access message 2, a random access message 4, a random access message B, or a semi-persistent scheduled physical downlink shared channel (SPS PDSCH).

(3) Time unit

A time unit in this application is specifically a time domain resource granularity at a specific moment. Specifically, the time unit may be an orthogonal frequency division multiplexing (orthogonal frequency division multiplexing, OFDM) symbol, a slot (namely, a slot), a millisecond, a second, or the like. This is not specifically limited in this application.

In a conventional technology, a network device indicates, by using DCI, a terminal device to activate/deactivate a DTX or DRX of a cell, and the terminal device needs to blindly detect the DCI based on configurations of a search space and a control resource set that correspond to the multicast DCI. In this manner, the terminal device and the network device need to frequently transmit the DCI, which is not conducive to reducing power consumption of a communication system.

Therefore, a technical problem to be resolved in this application is how to reduce power consumption of activating/deactivating a DTX and/or DRX, to further reduce power consumption of a communication system.

Embodiment 1

To resolve the foregoing problem, this application provides a communication method. In the communication method, after determining target indication information indicating a terminal device to activate/activate a first discontinuous transmission of a first cell, a network device sends the target indication information in a preset target time period in active time of the first discontinuous transmission. Correspondingly, the terminal device detects and receives the target indication information also in the target time period, and further activates/deactivates the first discontinuous transmission based on the target indication information. In the communication method, the network device and the terminal device send and receive the target indication information only in the preset target time period in the active time of the first discontinuous transmission. In this way, a quantity of times of exchanging the target indication information can be reduced, and power consumption caused by activating/deactivating the first discontinuous transmission can be reduced, thereby reducing power consumption of a communication system.

To make the objectives, technical solutions, and advantages of this application clearer, the following further describes this application in detail with reference to the accompanying drawings. A specific operation method in the method embodiment may also be applied to an apparatus embodiment or a system embodiment.

Refer to FIG. 3. FIG. 3 is a schematic flowchart of a communication method according to this application. The method is applicable to the network device and the terminal device described above. It should be noted that the network device and the terminal device repeatedly perform, in all or a part of cycles of a first discontinuous transmission of a first cell, the communication method provided in this application. For ease of understanding, in this embodiment of this application, a cycle of the first discontinuous transmission is used as an example to describe method steps to be performed by the network device and the terminal device. As shown in FIG. 3, the method may include the following steps.

S301: The network device determines target indication information.

In some feasible implementations, when determining that the network device needs to send the target indication information to the terminal device, the network device may determine, based on information such as a current load status and a usage status of the first discontinuous transmission, to activate/deactivate the first discontinuous transmission, and generate, based on a determining result, the target indication information that can indicate the terminal device to activate/deactivate the first discontinuous transmission. Herein, the first discontinuous transmission may be a DTX, or may be a DRX. Optionally, when detecting that a preset trigger condition is met, the network device may determine that the network device needs to send the target indication information to the terminal device. The preset trigger condition may be that a preset activation/deactivation cycle arrives, a preset communication event occurs, an activation/deactivation request sent by the terminal device is received, it is detected that a target time period in which the target indication information can be sent to the terminal device exists in a first cycle, or the like. This is not specifically limited in this application.

It should be understood that the foregoing process of determining the target indication information by the network device corresponds to an application scenario in which only one first discontinuous transmission is configured for the first cell of the terminal device, or corresponds to an application scenario in which only one DTX or one DRX is configured for the first cell of the terminal device. This is an application scenario 1 provided in this application. In actual use, the communication method provided in this application is further applicable to other application scenarios. The following further separately describes, with reference to the other application scenarios, an operation of determining the target indication information by the network device.

Application scenario 2: One DTX and one DRX are configured for the first cell.

In an optional implementation, when the first discontinuous transmission is a DTX, the target indication information determined by the network device may further indicate the terminal device to activate/deactivate a DRX of the first cell.

Alternatively, when the first discontinuous transmission is a DRX, the target indication information determined by the network device may further indicate the terminal device to activate/deactivate a DTX of the first cell.

In other words, when both the DTX and the DRX are configured for the first cell, the network device may determine, based on a current load status, a usage status of the DTX of the first cell, and a usage status of the DRX of the first cell, to activate/deactivate the DTX and the DRX of the first cell, and further generate, based on a determining result, the target indication information that can indicate the terminal device to activate/deactivate the DTX and the DRX of the first cell.

In another optional implementation, when the first discontinuous transmission is a DTX, the network device may further determine first indication information indicating the terminal device to activate/deactivate a DRX of the first cell.

In other words, when both the DTX and the DRX are configured for the first cell, the network device may determine, based on information such as a current load status and a usage status of the DTX of the first cell, to activate/deactivate the DTX of the first cell, and further generate, based on a determining result, the target indication information that can indicate the terminal device to activate/deactivate the DTX of the first cell. In addition, the network device may further determine, based on information such as the current load status and a usage status of the DRX of the first cell, to activate/deactivate the DRX of the first cell, and further generate, based on a determining result, the first indication information that can indicate the terminal device to activate/deactivate the DRX of the first cell.

Application scenario 3: The first discontinuous transmission is a first DTX, and at least one second DTX is further configured for the first cell.

In specific implementation, the network device may determine, based on a current load status and usage statuses of the first DTX and each second DTX of the first cell, to activate/deactivate the first DTX and each second DTX, and generate, based on a determining result, target indication information indicating activation/deactivation of the first DTX and each second DTX. It should be understood that when a plurality of DTXs are configured for the first cell, only one DTX is activated at a same moment, and all remaining DTXs are deactivated.

Application scenario 4: The first discontinuous transmission is a first DRX, and at least one second DRX is further configured for the first cell.

In specific implementation, the network device may determine, based on a current load status, a usage status of the first DRX of the first cell, and a usage status of each second DRX of the first cell, to activate/deactivate the first DRX and each second DRX, and generate, based on a determining result, the target indication information indicating activation/-deactivation of the first DRX and each second DRX. It should be understood that when a plurality of DRXs are configured for the first cell, only one DRX is activated at a same moment, and all remaining DRXs are deactivated.

Application scenario 5: A second discontinuous transmission is configured for each of at least one second cell of the terminal device.

In an optional implementation, when the first discontinuous transmission is configured for the first cell of the terminal device and the second discontinuous transmission is configured for each of the at least one second cell, the network device may determine, based on a current load status, a usage status of the first discontinuous transmission of the first cell, and a usage status of the second discontinuous transmission of each of the at least one second cell, to indicate to activate/deactivate the first discontinuous transmission and each second discontinuous transmission, and generate, based on a determining result, the target indication information indicating activation/deactivation of the first discontinuous transmission and the second discontinuous transmission of each second cell. In other words, the target indication information determined by the network device indicates to activate/deactivate the first discontinuous transmission, and may also indicate to activate/deactivate any second cell (which is assumed as a second cell i herein) in the at least one second cell.

In another optional implementation, when the first discontinuous transmission is configured for the first cell of the terminal device and the second discontinuous transmission is configured for each of the at least one second cell, the network device may determine, based on a current load status and a usage status of the first discontinuous transmission of the first cell, to activate/deactivate the first discontinuous transmission, and generate the target indication information based on a determining result. In addition, the network device may further determine, based on the current load status and a usage status of the second discontinuous transmission of each second cell, to activate/deactivate each second discontinuous transmission, and generate, based on a determining result, at least one piece of second indication information separately indicating activation/deactivation of the second discontinuous transmission of each second cell. In other words, the network device not only needs to determine the target indication information, but also needs to determine the second indication information indicating to activate/deactivate a second discontinuous transmission of any second cell i.

S302: The network device sends the target indication information to the terminal device in a target time period.

In some feasible implementations, after determining the target indication information, the network device may send the target indication information to the terminal device in the target time period. The target time period is included in active time of the first discontinuous transmission. In other words, the target time period is a part or all of the active time of the first discontinuous transmission. It may be understood that the target time period may be all of the active time of the first discontinuous transmission, that is, the entire active time of the first discontinuous transmission is used as the target time period. Correspondingly, the network device may send the target indication information in the active time of the first discontinuous transmission. Correspondingly, the terminal device may receive or monitor the target indication information also in the active time of the first discontinuous transmission.

The following further describes, with reference to the foregoing application scenario 1 to application scenario 5, a process of sending the target indication information by the network device.

Application scenario 1: One DTX or one DRX is configured for the first cell of the terminal device.

In this application scenario, after determining the target indication information, the network device may send the target indication information in the target time period in the active time of the first discontinuous transmission. In other words, when the DTX is configured for the first cell, after determining the target indication information indicating to activate/deactivate the DTX of the first cell, the network device may send the target indication information to the terminal device in a target time period in active time of the DTX of the first cell. When the DRX is configured for the first cell, after determining the target indication information indicating to activate/deactivate the DRX of the first cell, the network device may send the target indication information to the terminal device in a target time period in active time of the DRX of the first cell.

It should be understood that, in this application scenario, the network device sends the target indication information only in the target time period. In addition, in the target time period, the network device sends the target indication information to the terminal device once or for a plurality of times, or the network device sends one or more pieces of target indication information to the terminal device in the target time period.

It should be further noted that, for a plurality of target time periods of the first discontinuous transmission, relative locations of all target time periods in the active time are consistent. In other words, for each cycle including a target time period, a time interval between a start time unit of the target time period included in the cycle and a start time unit of the entire cycle is equal, and a time interval between an end time unit of the target time period included in the cycle and an end time unit of the entire cycle is equal.

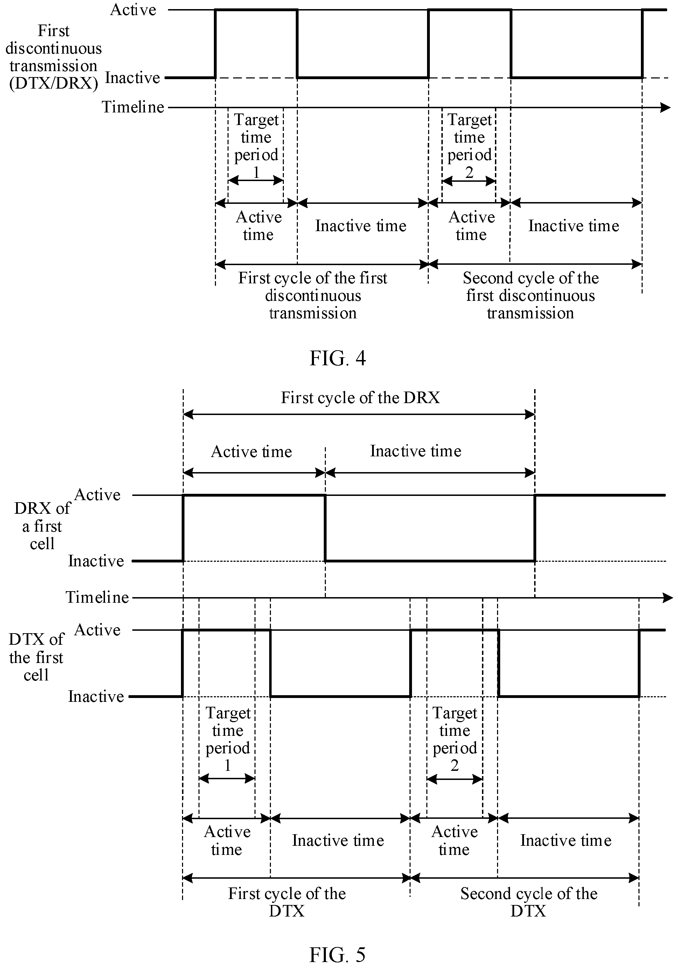

For example, refer to FIG. 4. FIG. 4 is a diagram of a transmission time period of the target indication information according to this application. It should be understood that FIG. 4 shows only an example of a first cycle and a second cycle of the first discontinuous transmission. Other cycles of the first discontinuous transmission are similar to the first cycle and the second cycle, and are not enumerated again. As shown in FIG. 4, both inactive time of the first cycle and inactive time of the second cycle of the first discontinuous transmission include one target time period. Active time of the first cycle of the first discontinuous transmission includes a target time period 1, and active time of the second cycle of the first discontinuous transmission includes a target time period 2. In addition, a location of the target time period 1 in the first cycle of the first discontinuous transmission is consistent with a location of the target time period 2 in the second cycle of the first discontinuous transmission. After determining the target indication information, the network device may send the target indication information to the terminal device in the target time period 1. Alternatively, the network may send the target indication information to the terminal device in the target time period 2. It should be understood that the target indication information sent by the network device in the target time period 2 may be regenerated by the network device, or the target indication information sent by the network device in the target time period 1 may be directly used. This is not specifically limited in this application.

Application scenario 2: Both the DTX and the DRX are configured for the first cell.

In a first optional implementation, the first discontinuous transmission is a DTX, and a DRX is further configured for the first cell. After determining the target indication information that can indicate to activate/deactivate the DTX and the DRX of the first cell, the network device may send the target indication information in a target time period of a cycle of the DTX of the first cell. In other words, when both the DTX and the DRX are configured for the first cell of the terminal device, the network device sends the target indication information only in the target time period in the active time of the DTX of the first cell, and does not determine another target time period in the active time of the DRX of the first cell and correspondingly send the target indication information. It may also be understood as that when both the DTX and the DRX are configured for the first cell of the terminal device, the target time period for sending the target indication information is defined by the DTX of the first cell.

Further, the active time of the DTX of the first cell needs to be shorter than or equal to the active time of the DRX of the first cell, and/or the cycle of the DTX of the first cell needs to be shorter than or equal to a cycle of the DRX of the first cell. In other words, when the network device determines that the active time of the DTX of the first cell is shorter than or equal to the active time of the DRX of the first cell, and/or the cycle of the DTX of the first cell is shorter than or equal to the cycle of the DRX of the first cell, the target indication information may be sent only in the target time period in the active time of the DTX of the first cell. It should be understood that the network device usually sends the target indication information to the terminal device for a plurality of times in the target time period. In addition, for a plurality of target time periods of the DTX of the first cell, relative locations of all target time periods in the active time are consistent.

For example, refer to FIG. 5. FIG. 5 is another diagram of a transmission time period of the target indication information according to this application. It should be understood that FIG. 5 shows only an example of a first cycle and a second cycle of the DTX of the first cell. Other cycles are similar to the first cycle and the second cycle, and are not enumerated again. As shown in FIG. 5, when the active time of the DTX of the first cell is shorter than or equal to the active time of the DRX of the first cell, and/or the cycle of the DTX of the first cell is shorter than or equal to a cycle of the DRX of the first cell, only the cycle of the DTX of the first cell includes a target time period. Specifically, active time of the first cycle of the DTX of the first cell includes a target time period 1, and active time of the second cycle of the DTX of the first cell includes a target time period 2. However, the cycle (FIG. 5 shows only a first cycle of the DRX) of the DRX of the first cell does not include the target time period. In addition, a location of the target time period 1 in the first cycle of the DTX is consistent with a relative location of the target time period 2 in the second cycle of the DTX. After determining the target indication information, the network device may send the target indication information to the terminal device in the target time period 1. Alternatively, the network device may send the target indication information to the terminal device in the target time period 2. It should be understood that the target indication information sent by the network device in the target time period 2 may be regenerated by the network device, or the target indication information sent by the network device in the target time period 1 may be directly used. This is not specifically limited in this application.

In the foregoing implementation, when both the DTX and the DRX are configured for the first cell, defining the target time period based on the DTX of the first cell not only can reduce a quantity of times that the network device sends the target indication information, but also can prevent the network device from sending the target indication information in inactive time of the DTX of the first cell, thereby effectively reducing power consumption of the network device.

In a second optional implementation, the first discontinuous transmission is a DRX, and a DTX is further configured for the first cell. After determining the target indication information that can indicate to activate/deactivate the DTX and the DRX of the first cell, the network device may send the target indication information in the target time period of the cycle of the DRX of the first cell. In other words, when both the DRX and the DTX are configured for the first cell of the terminal device, the network device sends the target indication information only in the target time period in the active time of the DRX of the first cell, and does not determine another target time period in the active time of the DTX of the first cell and correspondingly send the target indication information. It may also be understood as that when both the DTX and the DRX are configured for the first cell of the terminal device, the target time period for sending the target indication information is defined by the DRX of the first cell.

Further, the active time of the DRX of the first cell needs to be shorter than or equal to the active time of the DTX of the first cell, and/or the cycle of the DRX of the first cell needs to be shorter than or equal to a cycle of the DTX of the first cell. In other words, when the network device determines that the active time of the DRX of the first cell is shorter than or equal to the active time of the DTX of the first cell, and/or the cycle of the DRX of the first cell is shorter than or equal to the cycle of the DTX of the first cell, the target indication information may be sent only in the target time period in the active time of the DRX of the first cell. It should be understood that the network device usually sends the target indication information to the terminal device for a plurality of times in the target time period. In addition, for a plurality of target time periods of the DRX of the first cell, relative locations of all target time periods in the active time are consistent.

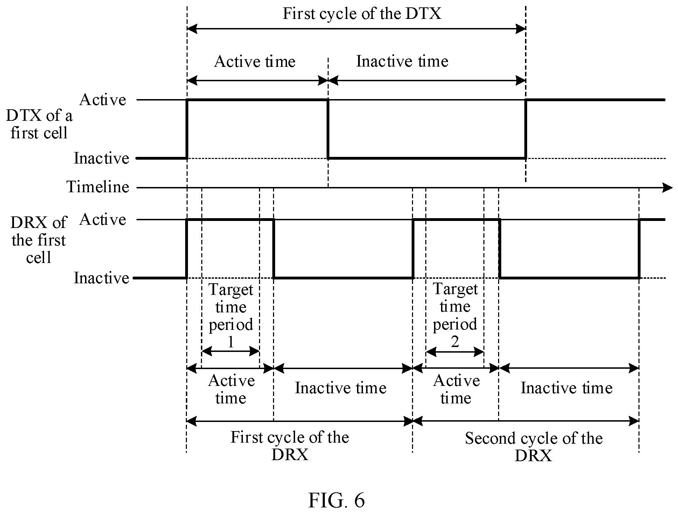

For example, refer to FIG. 6. FIG. 6 is another diagram of a transmission time period of the target indication information according to this application. It should be understood that FIG. 6 shows only an example of a first cycle and a second cycle of the DRX of the first cell. Other cycles are similar to the first cycle and the second cycle, and are not enumerated again. As shown in FIG. 6, when the active time of the DRX of the first cell is shorter than or equal to the active time of the DTX of the first cell, and/or the cycle of the DRX of the first cell is shorter than or equal to the cycle of the DTX of the first cell, only the cycle of the DRX of the first cell (FIG. 6 shows only the first cycle and the second cycle of the DRX) includes a target time period. For example, active time of the first cycle of the DRX of the first cell includes a target time period 1, and active time of the second cycle of the DRX of the first cell includes a target time period 2. However, the cycle (FIG. 6 shows only a first cycle of the DTX) of the DTX of the first cell does not include a target time period. In addition, a relative location of the target time period 1 in the first cycle of the DRX is consistent with a relative location of the target time period 2 in the second cycle of the DRX. After determining the target indication information, the network device may send the target indication information to the terminal device in the target time period 1. Alternatively, the network device may send the target indication information to the terminal device in the target time period 2. It should be understood that the target indication information sent by the network device in the target time period 2 may be regenerated by the network device, or the target indication information sent by the network device in the target time period 1 may be directly used. This is not specifically limited in this application.

In the foregoing implementation, when both the DTX and the DRX are configured for the first cell, the target time period is defined based on the DRX of the first cell, so that a quantity of times that the network device sends the target indication information can be reduced, thereby effectively reducing power consumption of the network device.

In a third optional implementation, the first discontinuous transmission is a DTX, and a DRX is further configured for the first cell. The target indication information determined by the network device can further indicate to activate/-deactivate the DRX of the first cell. The network device may send the target indication information in the target time period in the active time of the DTX of the first cell, or may send the target indication information in a first time period in the active time of the DRX of the first cell.

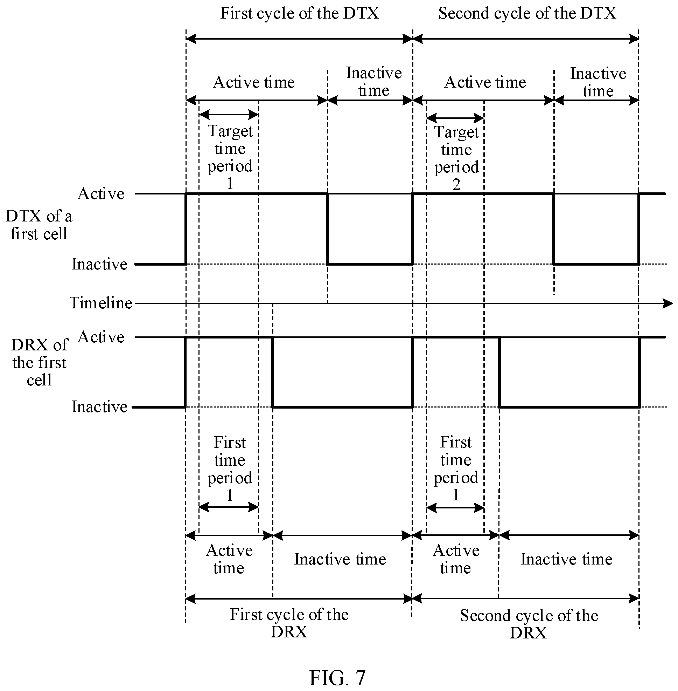

For example, refer to FIG. 7. FIG. 7 is another diagram of a transmission time period of the target indication information according to this application. It should be understood that FIG. 7 shows only an example of first cycles and second cycles of the DTX of the first cell and the DRX of the first cell. Other cycles of the DTX of the first cell and the DRX of the first cell are similar to the first cycles and the second cycles, and are not enumerated again. As shown in FIG. 7, when both the DTX and the DRX are configured for the first cell, the network device sends, in the target time period of the DTX of the first cell, the target indication information indicating to activate/deactivate the first DTX. For example, the network device sends target indication information in a target time period 1 in the first cycle of the DTX of the first cell, and the network device also sends target indication information in a target time period 2 in the second cycle of the DTX of the first cell. It should be understood that the target indication information sent by the network device in the target time period 1 and the target time period 2 may be the same, or the target indication information sent by the network device in the target time period 2 may be regenerated by the network device. Further, the network device further sends, in the first time period in the active time of the DRX of the first cell, the target indication information that can further indicate to activate/deactivate the DRX of the first cell. For example, the network device sends target indication information in a first time period 1 in the first cycle of the DRX of the first cell, and the network device also sends target indication information in a first time period 2 in the second cycle of the DRX of the first cell. Similarly, the target indication information sent by the network device in the first time period 1 and the second time period 2 may be the same, or the target indication information sent by the network device in the second time period 2 may be regenerated by the network device.

Optionally, for a plurality of target time periods corresponding to the DTX of the first cell and a plurality of first time periods corresponding to the DRX of the first cell, the plurality of target time periods may be consistent with the plurality of first time periods. It should be understood that, in this embodiment of this application, the two time periods are consistent, in other words, start time units and end time units of the two time periods are the same. As shown in FIG. 7, the first time period 1 corresponding to the DRX of the first cell is consistent with the target time period 1 corresponding to the DTX of the first cell, and the first time period 2 corresponding to the DRX of the first cell is also consistent with the target time period 2 corresponding to the DTX of the first cell. It should be noted that, to ensure that the target time period is consistent with the first time period, the cycle of the DTX of the first cell and the cycle of the DRX of the first cell may be consistent in length, and the start time units and the end time units are also consistent.

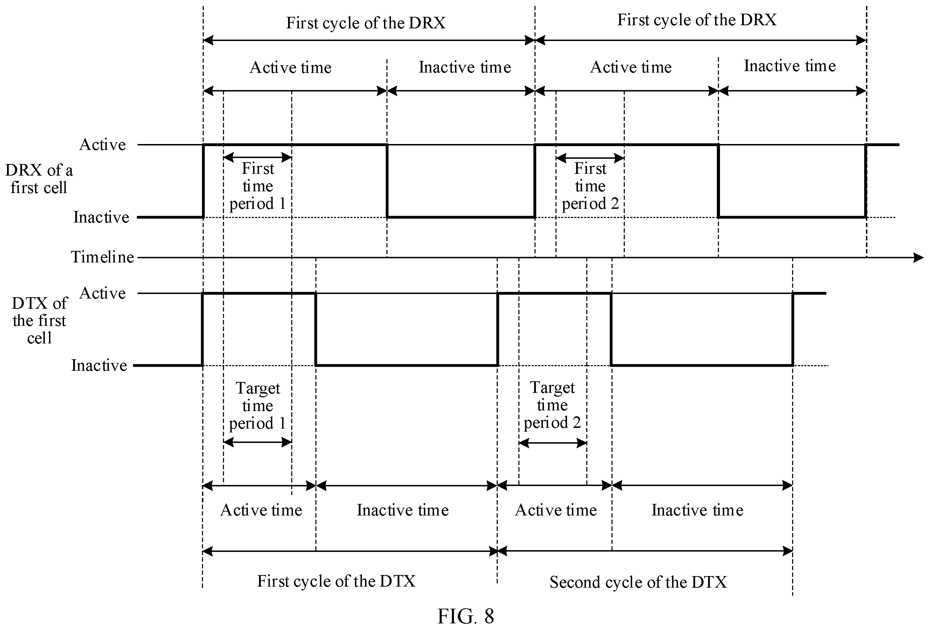

Optionally, for a plurality of target time periods corresponding to the DTX of the first cell and a plurality of first time periods corresponding to the DRX of the first cell, a part of target time periods in the plurality of target time periods may be the same as a part of time periods in the plurality of first time periods. In other words, some target time periods corresponding to the DTX of the first cell may be consistent with some target time periods corresponding to the DRX of the first cell. Refer to FIG. 8. FIG. 8 is another diagram of a transmission time period of the target indication information according to this application. It should be understood that FIG. 8 shows only an example of first cycles and second cycles of the DTX and the DRX of the first cell. Other cycles of the DTX of the first cell and the DRX of the first cell are similar to the first cycles and the second cycles, and are not enumerated again. As shown in FIG. 8, a first time period 1 corresponding to the DRX of the first cell is consistent with a target time period 1 corresponding to the DTX of the first cell, and a first time period 2 corresponding to the DRX of the first cell is inconsistent with a target time period 2 corresponding to the DTX of the first cell.

In the foregoing implementation, it is ensured that a plurality of target time periods corresponding to the DTX of the first cell and a plurality of first time periods corresponding to the DRX of the first cell are partially or completely consistent. In this way, a quantity of times that the network device sends the target indication information can be smaller, thereby reducing power consumption of the network device.

In a fourth optional implementation, the first discontinuous transmission is a DTX, and a DRX is further configured for the first cell. After determining the target indication information that can indicate to activate/deactivate the DTX of the first cell, the network device may further determine first indication information that can indicate to activate/deactivate the DRX of the first cell. Then, the network device may send the target indication information in the target time period in the active time of the DTX of the first cell, and may send the first indication information in the first time period in the active time of the DRX of the first cell.

As shown in FIG. 7, when both the DTX and the DRX are configured for the first cell, the network device may send, in the target time period of the DTX of the first cell, the target indication information indicating to activate/deactivate the first DTX. For example, the network device sends, in a target time period 1 in the first cycle of the DTX of the first cell, target indication information indicating to activate/deactivate a first DTX, and the network device also sends, in a target time period 2 in the second cycle of the DTX of the first cell, target indication information indicating to activate/deactivate the first DTX. It should be understood that the target indication information sent by the network device in the target time period 1 and the target time period 2 may be the same, or may be different. This is not specifically limited in this application. The network device may further send the first indication information in the first time period in the active time of the DRX of the first cell. For example, the network device sends, in a first time period 1 in the first cycle of the DRX of the first cell, target indication information indicating to activate/deactivate the first DTX, and the network device also sends, in a first time period 2 in the second cycle of the DRX of the first cell, target indication information indicating to activate/deactivate the first DTX. It should be understood that the target indication information sent by the network device in the two first time periods may be the same, or may be different. This is not specifically limited in this application.

In the foregoing implementation, when the terminal device is configured with the DTX and the DRX, different indication information separately indicates activation/deactivation of the DTX and the DRX, and sending time periods of the indication information are also different. This manner is more flexible, and can effectively avoid a case such as indication disorder while reducing power consumption of the network device.

Application scenario 3: The first discontinuous transmission is a first DTX, and at least one second DTX is further configured for the first cell.

In this application scenario, the target indication information may indicate to activate/deactivate the first DTX and each second DTX. The following uses the first DTX and any second DTX in the at least one second DTX as an example. In specific implementation, when determining that the first DTX is activated, the network device sends the target indication information only in a target time period in active time of the first DTX. In this case, it may be understood as that each cycle of any second DTX does not include a second time period for sending the target indication information, or it may be understood as that a second time period in each cycle of any second DTX is invalid. When determining that any second DTX is activated, the network device may send the target indication information only in a second time period in active time of the second DTX. In this case, it may be understood as that each cycle of the first DTX does not include a target time period for sending the target indication information, or it may be understood as that a target time period in each cycle of the first DTX is invalid.

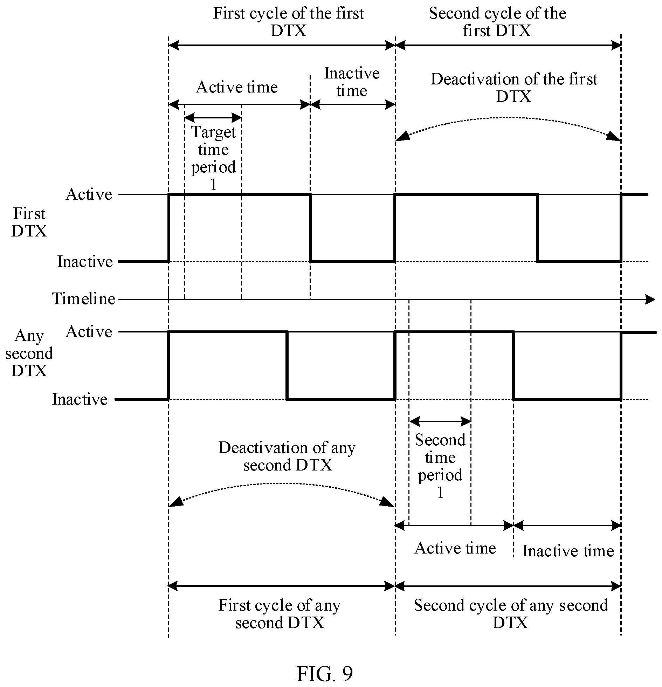

For example, refer to FIG. 9. FIG. 9 is another diagram of a transmission time period of the target indication information according to this application. As shown in FIG. 9, the first DTX is activated in a first cycle of the first DTX, and any second DTX is deactivated in a first cycle of the second DTX. In this case, after determining the target indication information, the network device may send the target indication information to the terminal device in a target time period 1 in the first cycle of the first DTX. Further, the first DTX is deactivated in a second cycle of the first DTX, and any second DTX is activated in a second cycle of the second DTX. In this case, after determining new target indication information, the network device may send the new target indication information to the terminal device in a second time period 1 in the second cycle of the second DTX.

In short, when a plurality of DTXs are configured for the first cell, the network device sends, only in a preset time period in active time of a DTX in an active state in the plurality of DTXs, target indication information indicating activation/deactivation of the plurality of DTXs.

Optionally, each target time period of the first DTX is consistent with each second time period corresponding to any one of the at least one second DTX. Alternatively, a part of target time periods of the first DTX are consistent with a part of second time periods corresponding to any one of the at least one second DTX.

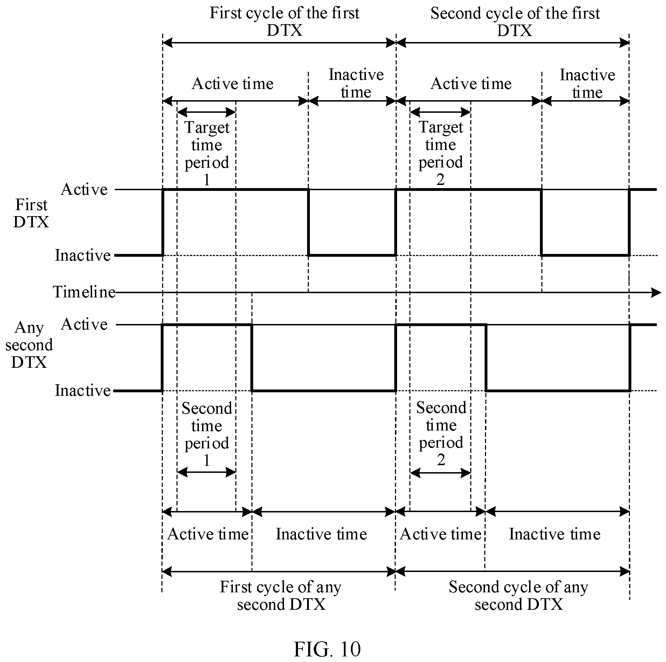

For example, refer to FIG. 10. FIG. 10 is another diagram of a transmission time period of the target indication information according to this application. It should be understood that FIG. 10 is merely intended to indicate a difference between each target time period of the first DTX and each second time period of any second DTX, and does not indicate that the first DTX and any second DTX are activated at the same time. As shown in FIG. 10, a first cycle of the first DTX includes a target time period 1 for sending the target indication information, and a second cycle of the first DTX includes a target time period 2 for sending the target indication information. A first cycle of any second DTX includes a second time period 1 for sending the target indication information, and a second cycle of any second DTX includes a second time period 2 for sending the target indication information. The second time period 1 is completely consistent with the target time period 1, and the second time period 2 is completely consistent with the target time period 2. It may also be understood as that, for the first DTX and any second DTX, a time period in which the network device sends the target indication information is the same. Therefore, the network device only needs to send the target indication information in a same time period to indicate the terminal device to activate/deactivate the first DTX and the second DTX.

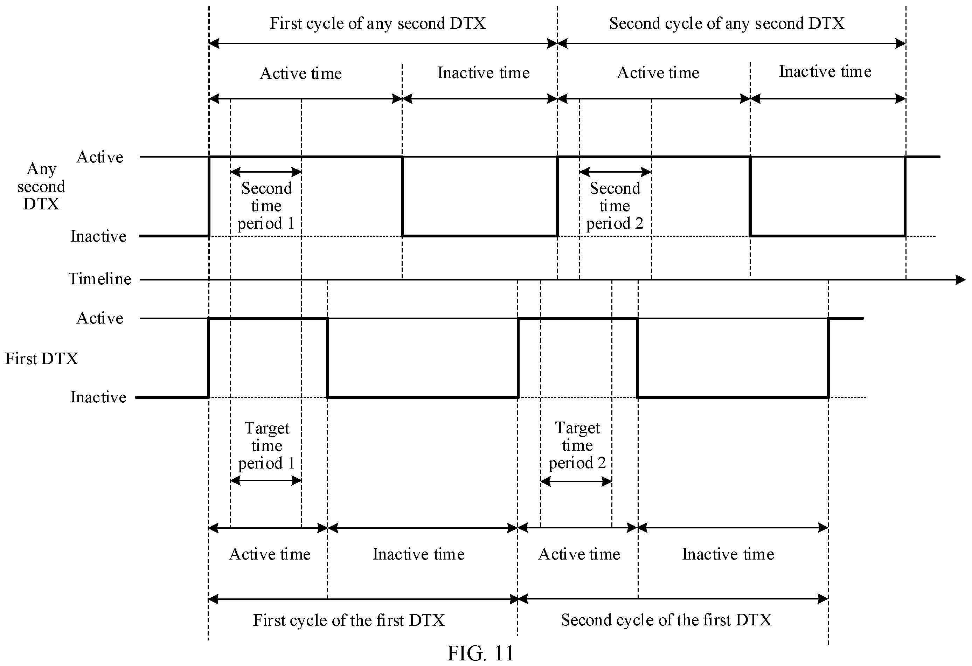

For example, refer to FIG. 11. FIG. 11 is another diagram of a transmission time period of the target indication information according to this application. Similarly, FIG. 11 is also merely intended to indicate a difference between each target time period of the first DTX and each second time period of any second DTX, and does not indicate that the first DTX and any second DTX are activated at the same time. As shown in FIG. 11, a first cycle of the first DTX includes a target time period 1 for sending the target indication information, and a second cycle of the first DTX includes a target time period 2 for sending the target indication information. A first cycle of any second DTX includes a second time period 1 for sending the target indication information, and a second cycle of any second DTX includes a second time period 2 for sending the target indication information. The second time period 1 is completely consistent with the target time period 1, and the second time period 2 is inconsistent with the target time period 2. It may also be understood as that, for the first DTX and any second DTX, a part of time periods in which the network device sends the target indication information are the same.

In the foregoing implementation, a quantity of times that the network device sends the target indication information can be reduced, thereby reducing power consumption of the network device.

Application scenario 4: The first discontinuous transmission is a first DRX, and at least one second DRX is further configured for the first cell.

In this application scenario, the target indication information may indicate to activate/deactivate the first DRX and each second DRX. The following uses the first DRX and any second DRX in the at least one second DRX as an example. In specific implementation, when determining that the first DRX is activated, the network device sends the target indication information only in a target time period in active time of the first DRX. In this case, it may be understood as that each cycle of any second DRX does not include a third time period for sending the target indication information, or it may be understood as that a third time period in each cycle of any second DRX is invalid. When determining that any second DRX is activated, the network device may send the target indication information only in the third time period in the active time of the second DRX. In this case, it may be understood as that each cycle of the first DRX does not include a target time period for sending the target indication information, or it may be understood as that a target time period in each cycle of the first DRX is invalid.

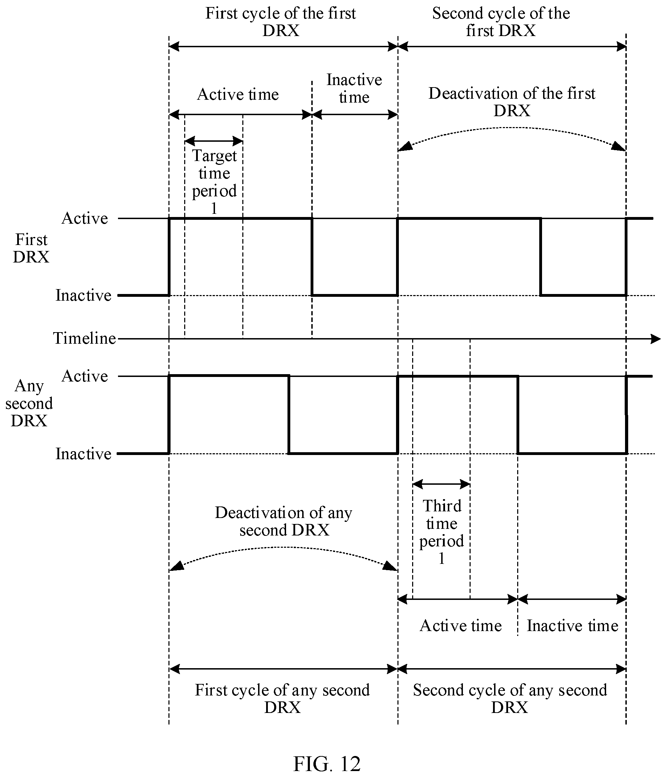

For example, refer to FIG. 12. FIG. 12 is another diagram of a transmission time period of the target indication information according to this application. As shown in FIG. 12, the first DRX is activated in a first cycle of the first DRX, and any second DRX is deactivated in a first cycle of the second DRX. In this case, after determining the target indication information, the network device may send the target indication information to the terminal device in a target time period 1 in the first cycle of the first DRX. Further, the first DRX is deactivated in a second cycle of the first DRX, and any second DRX is activated in a second cycle of the second DRX. After determining new target indication information, the network device may send the new target indication information to the terminal device in a third time period 1 in the second cycle of the second DRX.

In short, when a plurality of DRXs are configured for the first cell, the network device sends, only in a preset time period in active time of a DRX in an active state in the plurality of DRXs, target indication information indicating activation/deactivation of the plurality of DRXs.

Optionally, each target time period of the first DRX is consistent with each third time period corresponding to any one of the at least one second DRX. Alternatively, a part of target time periods of the first DRX are consistent with a part of third time periods corresponding to any one of the at least one second DRX.

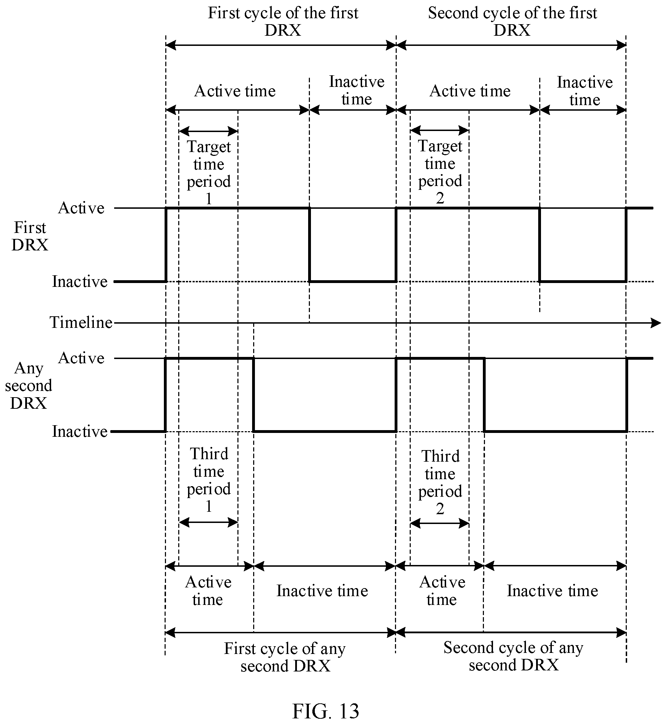

For example, refer to FIG. 13. FIG. 13 is another diagram of a transmission time period of the target indication information according to this application. It should be understood that FIG. 13 is merely intended to indicate a difference between each target time period of the first DRX and each third time period of any second DRX, and does not indicate that the first DRX and any second DRX are activated at the same time. As shown in FIG. 13, a first cycle of the first DRX includes a target time period 1 for sending the target indication information, and a second cycle of the first DRX includes a target time period 2 for sending the target indication information. A first cycle of any second DRX includes a third time period 1 for sending the target indication information, and a second cycle of any second DRX includes a third time period 2 for sending the target indication information. The third time period 1 is completely consistent with the target time period 1, and the third time period 2 is completely consistent with the target time period 2. It may also be understood as that, for the first DRX and any second DRX, a time period in which the network device sends the target indication information is the same. Therefore, the network device only needs to send the target indication information in a same time period to indicate the terminal device to activate/deactivate the first DRX and the second DRX.

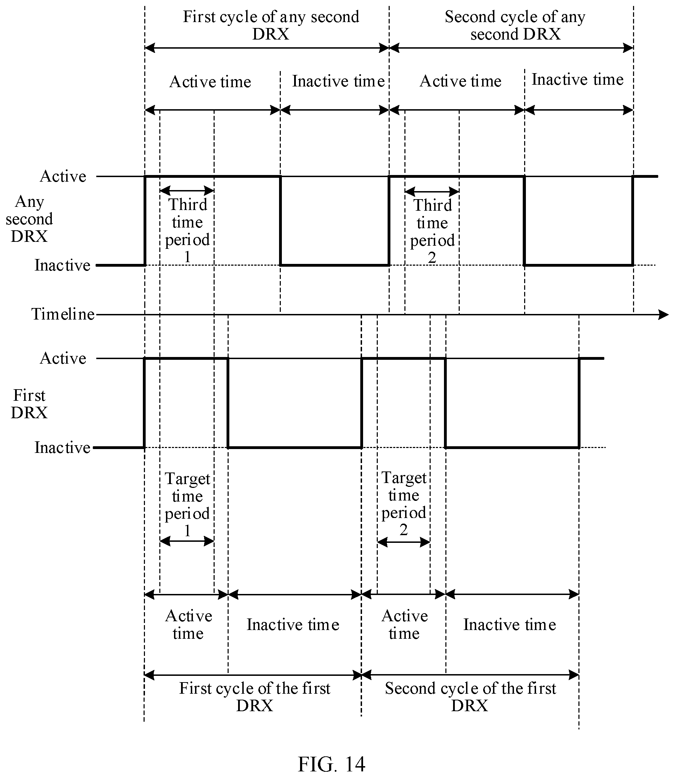

For example, refer to FIG. 14. FIG. 14 is another diagram of a transmission time period of the target indication information according to this application. Similarly, FIG. 14 is also merely intended to indicate a difference between each target time period of the first DRX and each third time period of any second DRX, and does not indicate that the first DRX and any second DRX are activated at the same time. As shown in FIG. 14, a first cycle of the first DRX includes a target time period 1 for sending the target indication information, and a second cycle of the first DRX includes a target time period 2 for sending the target indication information. A first cycle of any second DRX includes a third time period 1 for sending the target indication information, and a second cycle of any second DRX includes a third time period 2 for sending the target indication information. The third time period 1 is completely consistent with the target time period 1, and the third time period 2 is inconsistent with the target time period 2. It may also be understood as that, for the first DRX and any second DRX, a part of time periods in which the network device sends the target indication information are the same.

In the foregoing implementation, a quantity of times that the network device sends the target indication information can be reduced, thereby reducing power consumption of the network device.

Application scenario 5: A second discontinuous transmission is configured for each of at least one second cell of the terminal device.

In a first optional implementation, the target indication information indicates activation/deactivation of the first discontinuous transmission and the second discontinuous transmission of each of the at least one second cell. After determining the target indication information, the network device may send the target indication information in the target time period in the active time of the first discontinuous transmission of the first cell. The second discontinuous transmission may be a DTX or a DRX.

Further, in the foregoing case, the active time of the first discontinuous transmission may be shorter than or equal to the active time of the second discontinuous transmission of each second cell. Alternatively, a cycle of the first discontinuous transmission may be shorter than or equal to a cycle of the second discontinuous transmission of each second cell. Alternatively, the active time of the first discontinuous transmission may be shorter than or equal to active time of the second discontinuous transmission of each second cell, and a cycle of the first discontinuous transmission may be shorter than or equal to a cycle of the second discontinuous transmission of each second cell.

It may also be understood as that, in this application scenario, if the target indication information determined by the network device indicates both the first discontinuous transmission of the first cell of the terminal device and the second discontinuous transmission of each of the at least one second cell, the network device may select a discontinuous transmission with shortest active time and/or a shortest cycle from the first discontinuous transmission and the at least one second discontinuous transmission, and send the target indication information in a preset time period of the active time of the discontinuous transmission. Alternatively, in this application scenario, if the target indication information determined by the network device indicates both the first discontinuous transmission of the first cell of the terminal device and the second discontinuous transmission of each of the at least one second cell, a sending time period of the target indication information is defined based on a cell corresponding to a discontinuous transmission with shortest active time and/or a discontinuous transmission with a shortest cycle.

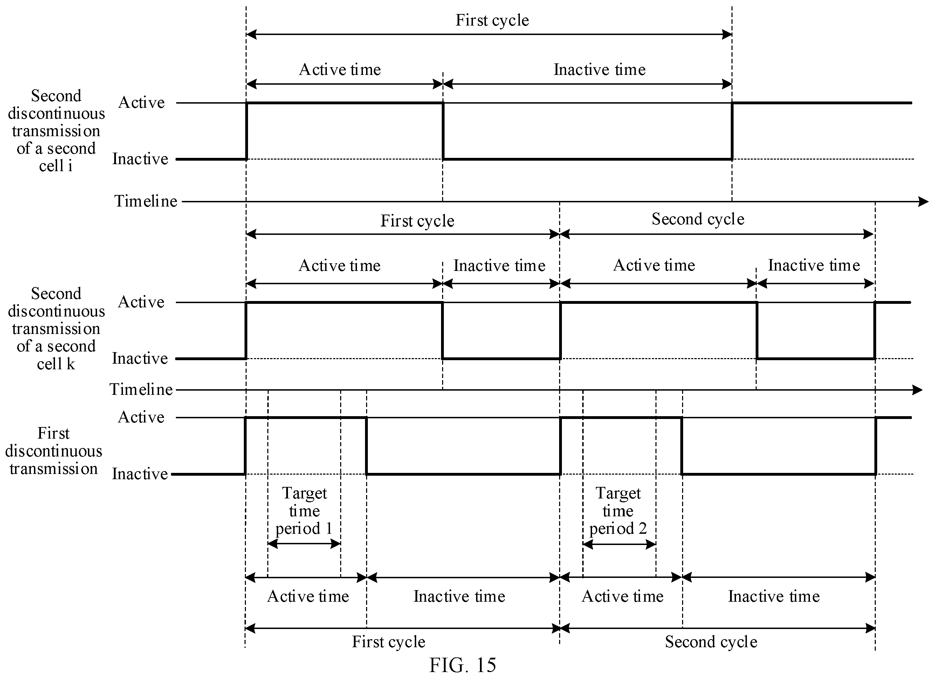

For example, refer to FIG. 15. FIG. 15 is another diagram of a transmission time period of the target indication information according to this application. As shown in FIG. 15, it is assumed that a second discontinuous transmission is configured for a second cell i and a second cell k of the terminal device. As shown in FIG. 15, because active time of the second discontinuous transmission of the second cell k is longer than the active time of the first discontinuous transmission, a cycle of the second discontinuous transmission of the second cell i is longer than the cycle of the first discontinuous transmission, and active time of the second discontinuous transmission of the second cell i is also longer than the cycle of the first discontinuous transmission, when the target indication information determined by the network device can further indicate the second discontinuous transmission of the second cell i and the second cell k, a sending time period of the target indication information is defined by the first cell. That is, the network device sends the target indication information in the target time period in the active time of the first discontinuous transmission.

In the foregoing implementation, when a discontinuous transmission is configured for a plurality of cells of the terminal device, the target time period for sending the target indication information may be defined based on a cell corresponding to the discontinuous transmission with shortest active time and/or a shortest cycle in the plurality of cells. In this way, a quantity of times of sending the target indication information can be reduced, thereby reducing power consumption of the network device.

In a second optional implementation, the target indication information indicates activation/deactivation of the first discontinuous transmission and the second discontinuous transmission of each of the at least one second cell. The network device sends the target indication information in the target time period in the active time of the first discontinuous transmission. The network device further sends the target indication information in a fourth time period in the active time of each second discontinuous transmission. In other words, the network device further sends the target indication information in a fourth time period in active time of a second discontinuous transmission of any second cell i. It may also be understood as that when a discontinuous transmission is configured for a plurality of cells of the terminal device, the network device sends, in a preset time period in active time of a discontinuous transmission of each cell, target indication information that can indicate to activate/deactivate the first discontinuous transmission and the second discontinuous transmission of each of the at least one second cell.

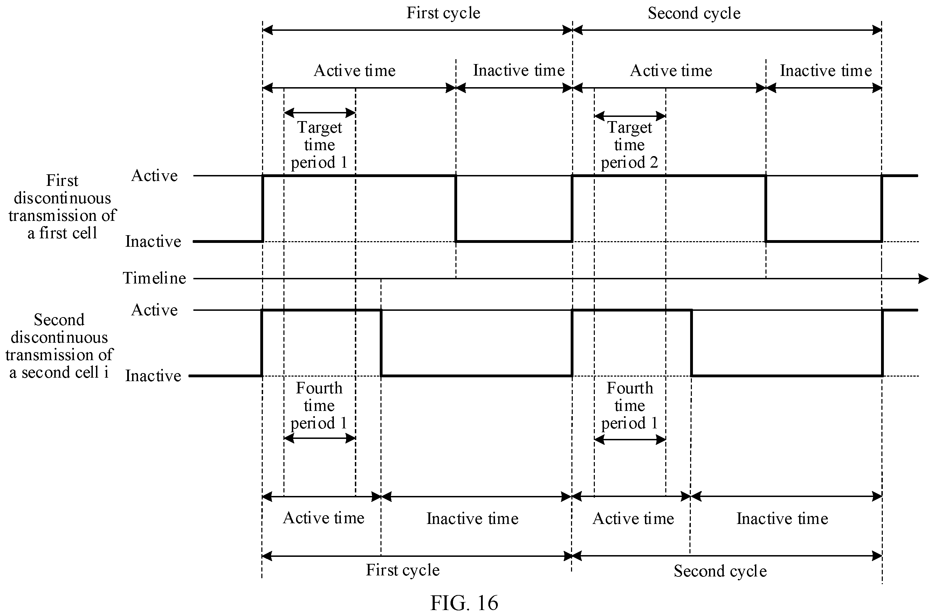

For example, refer to FIG. 16. FIG. 16 is another diagram of a transmission time period of the target indication information according to this application. The first cell and any second cell i in the at least one second cell are used as an example. It should be understood that FIG. 16 shows only an example of first cycles and second cycles of the first discontinuous transmission and the second discontinuous transmission of the second cell i. Other cycles of the first discontinuous transmission and the second discontinuous transmission of the second cell i are similar to the first cycles and the second cycles, and are not enumerated again. As shown in FIG. 16, in the first cycle of the first discontinuous transmission, the network device sends target indication information in a target time period 1, and in the second cycle of the first discontinuous transmission, the network device sends target indication information in a target time period 2. Similarly, in the first cycle of the second discontinuous transmission of the second cell i, the network device sends target indication information in a fourth time period 1, and in the second cycle of the second discontinuous transmission of the second cell i, the network device sends target indication information in a fourth time period 2. It should be noted that the target indication information sent by the network device in the target time period 1 and the target time period 2 may be the same, or the target indication information sent by the network device in the target time period 2 may be re-determined by the network device. The target indication information sent by the network device in the fourth time period 1 and the fourth time period 2 is similar.

Optionally, each target time period corresponding to the first discontinuous transmission is consistent with each fourth time period corresponding to any one of the at least one second discontinuous transmission. Alternatively, a part of target time periods corresponding to the first discontinuous transmission are consistent with a part of fourth time periods corresponding to any one of the at least one second discontinuous transmission.

For example, still refer to FIG. 16. As shown in FIG. 16, the target time period 1 of the first discontinuous transmission is consistent with the fourth time period 1 corresponding to the second discontinuous transmission of the second cell i. Similarly, the target time period 2 of the first discontinuous transmission is consistent with the fourth time period 2 corresponding to the second discontinuous transmission of the second cell i. It should be noted that, to ensure that each target time period corresponding to the first discontinuous transmission is consistent with each fourth time period corresponding to any second discontinuous transmission in the at least one second discontinuous transmission, it may be designed that the cycle of the first discontinuous transmission is equal to the cycle of the second discontinuous transmission of each second cell.

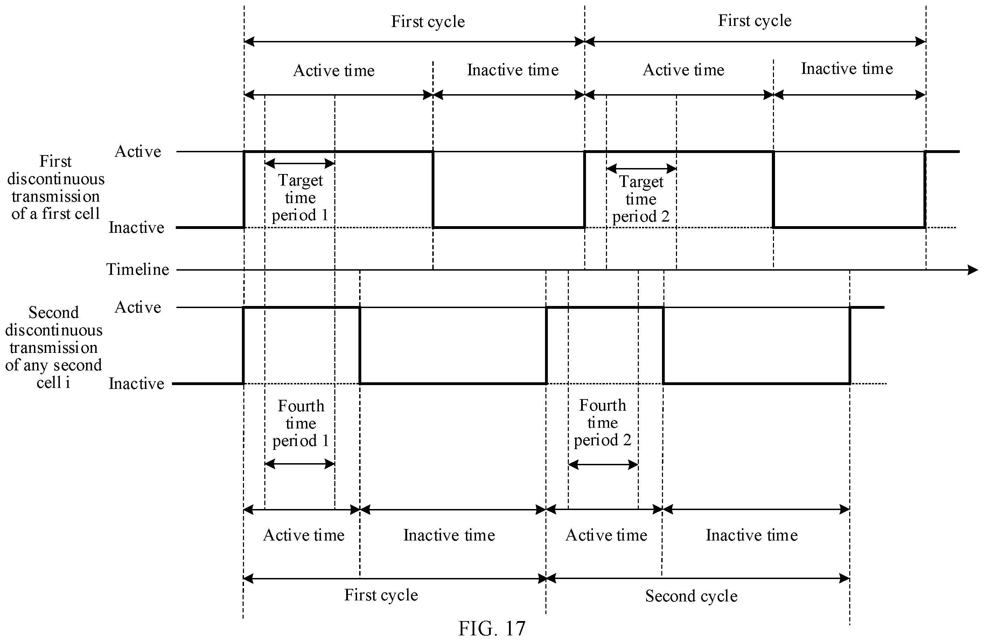

For example, refer to FIG. 17. FIG. 17 is another diagram of a transmission time period of the target indication information according to this application. It should be understood that FIG. 17 shows only an example of first cycles and second cycles of the first discontinuous transmission and the second discontinuous transmission of the second cell i. Other cycles of the first discontinuous transmission and the second discontinuous transmission of the second cell i are similar to the first cycles and the second cycles, and are not enumerated again. As shown in FIG. 17, the target time period 1 of the first discontinuous transmission is consistent with the fourth time period 1 corresponding to the second discontinuous transmission of the second cell i, and the target time period 2 of the first discontinuous transmission is inconsistent with the fourth time period 2 corresponding to the second discontinuous transmission of the second cell i.

In the foregoing implementation, when a discontinuous transmission is separately configured for a plurality of cells of the terminal device, same indication information is used for indication. Then, the indication information is separately sent in a time period corresponding to the discontinuous transmission configured for each cell, and it is ensured that the time periods corresponding to the discontinuous transmission configured for the cells are completely or partially the same. In this manner, a quantity of times that the network device sends the target indication information can be effectively reduced, thereby reducing power consumption of the network device.

In a third optional implementation, the network device determines one piece of target indication information indicating to activate/deactivate the first discontinuous transmission and at least one piece of second indication information respectively indicating to activate/deactivate the at least one second discontinuous transmission. In this case, the network device sends the target indication information in the target time period in the active time of the first discontinuous transmission. The network device further sends each piece of second indication information in the fourth time period in the active time of each second discontinuous transmission. In other words, the network device further sends, in the fourth time period in active time of a second discontinuous transmission of any second cell i, the second indication information indicating to activate/deactivate the second discontinuous transmission of the second cell i. In other words, when a discontinuous transmission is configured for a plurality of cells of the terminal device, the network device generates corresponding indication information for a discontinuous transmission configured for each cell, to indicate activation/-deactivation of the discontinuous transmission, and the indication information corresponding to each discontinuous transmission is sent in a preset time period in active time of each discontinuous transmission.

For example, still refer to FIG. 16. In the first cycle of the first discontinuous transmission, the network device sends target indication information in a target time period 1, and in the second cycle of the first discontinuous transmission, the network device sends target indication information in a target time period 2. Similarly, in the first cycle of the second discontinuous transmission of the second cell i, the network device sends second indication information in a fourth time period 1, and in the second cycle of the second discontinuous transmission of the second cell i, the network device sends second indication information in a fourth time period 2. It should be noted that the target indication information sent by the network device in the target time period 1 and the target time period 2 may be the same, or the target indication information sent by the network device in the target time period 2 may be re-determined by the network device. Similarly, the second indication information sent by the network device in the fourth time period 1 and the fourth time period 2 may be the same, or the second indication information sent by the network device in the fourth time period 2 may be re-determined by the network device.

In the foregoing implementation, when a discontinuous transmission is separately configured for a plurality of cells of the terminal device, different indication information is used for indication, and the different indication information is separately sent in a time period corresponding to the discontinuous transmission configured for each cell. This manner of activating/deactivating the discontinuous transmission configured for each cell is more flexible, and can effectively avoid a case such as indication disorder while reducing power consumption of the network device.

It should be additionally noted that, in actual implementation, the network device may send the target indication information, the first indication information, or the second indication information to the terminal device by using multicast DCI or a MAC CE.

In some feasible implementations, the target indication information sent by the network device in inactive time of the second discontinuous transmission of any second cell i in the at least one second cell is not for activating/deactivating the second discontinuous transmission of the second cell i. This implementation not only can avoid repeated indication of the second discontinuous transmission of the second cell i, but also can avoid impact generated, when the terminal device does not detect the target indication information, on the second discontinuous transmission of the second cell i that is determined to be activated or deactivated, thereby avoiding logic confusion.

In some feasible implementations, the network device may send the target indication information, the first indication information, or the second indication information in a primary cell (primary cell, PCell), a primary secondary cell (primary secondary cell, PSCell), or a special cell (special cell, SpCell) of the network device.

S303: The terminal device receives, in the target time period, the target indication information sent by the network device.

In some feasible implementations, the terminal device may receive, in the target time period in the active time of the first discontinuous transmission of the first cell, the target indication information sent by the network device. In other words, the terminal device detects, by using the target time period in the active time of the first discontinuous transmission of the first cell as a detection occasion, the target indication information sent by the network device. In this embodiment of this application, detecting the target indication information and receiving the target indication information are equivalent expressions, and the target time period may also be understood as a detection occasion of the terminal device for the target indication information.

The following further describes, with reference to the foregoing application scenario 1 to application scenario 5, a process of receiving the target indication information by the terminal device.

Application scenario 1: Only one DTX or one DRX is configured for the first cell of the terminal device.

In this application scenario, the terminal device may receive, in the target time period in the active time of the first discontinuous transmission, the target indication information sent by the network device.

When the DTX is configured for the first cell, the terminal device may receive the target indication information in the target time period in the active time of the DTX of the first cell. When the DRX is configured for the first cell, the terminal device may receive the target indication information in the target time period in the active time of the DRX of the first cell.

It should be understood that the terminal device may receive one or more pieces of target indication information in the target time period in the active time of the first discontinuous transmission. When there are a plurality of pieces of target indication information, content of the plurality of pieces of target indication information needs to be completely consistent.

For example, as shown in FIG. 4, the terminal device receives, in the target time period 1, the target indication information sent by the network device. Similarly, the terminal device also receives, in the target time period 2, the target indication information sent by the network device. It should be understood that the target indication information transmitted in the target time period 2 may be re-generated by the network device, or may still be the target indication information transmitted in the first cycle.

Application scenario 2: Both the DTX and the DRX are configured for the first cell.

In a first optional implementation, the first discontinuous transmission is a DTX, and a DRX is further configured for the first cell. The terminal device receives the target indication information only in the target time period in the active time of the DTX of the first cell, and does not preset another time period in the active time of the DRX of the first cell and repeatedly receives the target indication information. In addition, the target indication information can indicate to activate/deactivate both the DTX and the DRX of the first cell.

Further, the active time of the DTX of the first cell needs to be shorter than or equal to the active time of the DRX of the first cell, and/or the cycle of the DTX of the first cell needs to be shorter than or equal to the cycle of the DRX of the first cell. That is, when the active time of the DTX of the first cell is shorter than or equal to the active time of the DRX of the first cell, and/or the cycle of the DTX of the first cell is shorter than or equal to the cycle of the DRX of the first cell, a detection occasion of the target indication information is defined by the DTX of the first cell, and the terminal device needs to receive the target indication information only in the target time period in the active time of the DTX of the first cell.

For example, further refer to FIG. 5. FIG. 5 is another diagram of a transmission time period of the target indication information according to this application. As shown in FIG. 5, when the active time of the DTX of the first cell is shorter than or equal to the active time of the DRX of the first cell, and the cycle of the DTX of the first cell is shorter than the cycle of the DRX of the first cell, only the cycle of the DTX of the first cell (FIG. 5 shows only the first cycle and the second cycle of the DTX) includes the target time period. The terminal device also separately receives, in the target time period 1 and the target time period 2, the target indication information sent by the network device.

In the foregoing implementation, the target time period is defined based on the DTX of the first cell. This not only can reduce a quantity of times of receiving the target indication information, but also can prevent the terminal device from receiving the target indication information in the inactive time of the DTX of the first cell, thereby effectively reducing power consumption of the terminal device.

In a second optional implementation, the first discontinuous transmission is a DRX, and a DTX is further configured for the first cell. The terminal device receives the target indication information only in the target time period in the active time of the DRX of the first cell, and does not preset another time period in the active time of the DTX of the first cell and repeatedly receives the target indication information. In addition, the target indication information can indicate to activate/deactivate both the DTX and the DRX of the first cell.

Further, the active time of the DRX of the first cell needs to be shorter than or equal to the active time of the DTX of the first cell, and/or the cycle of the DRX of the first cell needs to be shorter than or equal to the cycle of the DTX of the first cell. That is, when the active time of the DRX of the first cell is shorter than or equal to the active time of the DTX of the first cell, and/or the cycle of the DRX of the first cell is shorter than or equal to the cycle of the DTX of the first cell, a detection occasion of the target indication information is defined by the DRX of the first cell, and the terminal device needs to receive the target indication information only in the target time period in the active time of the DRX of the first cell.

For example, as shown in FIG. 6, the active time of the DRX of the first cell is shorter than or equal to the active time of the DTX of the first cell, and the cycle of the DRX of the first cell is shorter than the cycle of the DTX of the first cell. In this case, only the cycle of the DRX of the first cell (FIG. 6 shows only the first cycle and the second cycle of the DRX) includes the target time period. The terminal device also separately receives, in the target time period 1 and the target time period 2 that are defined based on the DRX of the first cell, the target indication information sent by the network device.

In the foregoing implementation, the target time period is defined based on the DRX of the first cell. This not only can reduce a quantity of times of receiving the target indication information, but also can prevent the terminal device from receiving the target indication information in the inactive time of the DRX of the first cell, thereby effectively reducing power consumption of the terminal device.

In a third optional implementation, the first discontinuous transmission is a DTX, and a DRX is further configured for the first cell. The target indication information determined by the network device can further indicate to activate/-deactivate the DRX of the first cell. The terminal device may receive the target indication information in the target time period in the active time of the DTX of the first cell, or may receive the target indication information in the first time period in the active time of the DRX of the first cell. In other words, the detection occasion of the DTX of the first cell and the detection occasion of the DRX of the first cell are separately configured, and the terminal device separately detects the target indication information on the detection occasion configured for the DTX of the first cell and the detection occasion configured for the DRX of the first cell.

For example, as shown in FIG. 7, when both the DTX and the DRX are configured for the first cell, the terminal device separately receives, in the target time period 1 and the target time period 2 that are defined based on the DTX of the first cell, the target indication information sent by the network device. Further, the terminal device also separately receives, in the first time period 1 and the second time period 2 that are defined based on the DRX of the first cell, the target indication information sent by the network device.

Optionally, for a plurality of target time periods corresponding to the DTX of the first cell and a plurality of first time periods corresponding to the DRX of the first cell, the plurality of target time periods may be consistent with the plurality of first time periods. As shown in FIG. 7, the first time period 1 corresponding to the DRX of the first cell is consistent with the target time period 1 corresponding to the DTX of the first cell, and the first time period 2 corresponding to the DRX of the first cell is consistent with the target time period 2 corresponding to the DTX of the first cell.

Alternatively, for a plurality of target time periods corresponding to the DTX of the first cell and a plurality of first time periods corresponding to the DRX of the first cell, a part of target time periods in the plurality of target time periods may be the same as a part of time periods in the plurality of first time periods. As shown in FIG. 8, the first time period 1 corresponding to the DRX of the first cell is consistent with the target time period 1 corresponding to the DTX of the first cell, and the first time period 2 corresponding to the DRX of the first cell is inconsistent with the target time period 2 corresponding to the DTX of the first cell.

In the foregoing implementation, because the plurality of target time periods corresponding to the DTX of the first cell and the plurality of first time periods corresponding to the DRX of the first cell are partially or completely the same. Therefore, the terminal device receives the target indication information for a smaller quantity of times. In this way, power consumption of the terminal device can be further reduced.

In a fourth optional implementation, the first discontinuous transmission is a DTX, and a DRX is further configured for the first cell. The terminal device may not only receive the target indication information in the target time period defined based on the DTX of the first cell, but also receive the first indication information in the first time period defined based on the DRX of the first cell.

As shown in FIG. 7 or FIG. 8, when both the DTX and the DRX are configured for the first cell, the terminal device may receive, in the target time period 1 and the target time period 2 that are defined based on the DTX of the first cell, the target indication information sent by the network device. The terminal device may further receive, in the first time period 1 and the second time period 2 that are defined based on the DRX of the first cell, the first indication information sent by the network device.

In the foregoing implementation, when the terminal device is configured with the DTX and the DRX, different indication information separately indicates activation/deactivation of the DTX and the DRX, and sending time periods of the indication information are also different. This manner is more flexible, and can effectively avoid a case such as indication disorder while reducing power consumption of the terminal device.

Application scenario 3: The first discontinuous transmission is a first DTX, and at least one second DTX is further configured for the first cell.

In this application scenario, the target indication information may indicate to activate/deactivate the first DTX and each second DTX. The following uses the first DTX and any second DTX in the at least one second DTX as an example. In specific implementation, when determining that the first DTX is activated, the terminal device receives the target indication information only in the target time period in the active time of the first DTX. When determining that any second DTX is activated, the terminal device may receive the target indication information only in the second time period in the active time of the second DTX.

For example, as shown in FIG. 9, the first DTX is activated in a first cycle of the first DTX, and any second DTX is deactivated in a first cycle of the second DTX. In this case, the terminal device may receive the target indication information, sent by the network device, in the target time period 1 in the first cycle of the first DTX. Further, the first DTX is deactivated in a second cycle of the first DTX, and any second DTX is activated in a second cycle of the second DTX. In this case, the terminal device may receive the target indication information, sent by the network device, in the second time period 1 in the second cycle of the second DTX.

It may also be understood as that, when a plurality of DTXs are configured for the first cell, the terminal device receives, only in a preset time period in the active time of the DTX in the active state in the plurality of DTXs, the target indication information indicating activation/deactivation of the plurality of DXTs.

Optionally, each target time period of the first DTX is consistent with each second time period corresponding to any one of the at least one second DTX. Alternatively, a part of target time periods of the first DTX are consistent with a part of second time periods corresponding to any one of the at least one second DTX.

For example, as shown in FIG. 10, the second time period 1 is completely consistent with the target time period 1, and the second time period 2 is completely consistent with the target time period 2. Alternatively, as shown in FIG. 11, the second time period 1 is completely consistent with the target time period 1, and the second time period 2 is inconsistent with the target time period 2.

In this implementation, a quantity of times that the terminal device receives the target indication information can be reduced, thereby further reducing power consumption of the terminal device.

Application scenario 4: The first discontinuous transmission is a first DRX, and at least one second DRX is further configured for the first cell.

In this application scenario, the target indication information may indicate to activate/deactivate the first DRX and each second DRX. The following uses the first DRX and any second DRX in the at least one second DRX as an example. In specific implementation, when determining that the first DRX is activated, the terminal device receives the target indication information only in the target time period in the active time of the first DRX. When determining that any second DRX is activated, the terminal device may receive the target indication information only in the second time period in the active time of the second DRX.

For example, as shown in FIG. 12, the first DRX is activated in a first cycle of the first DRX, and any second DRX is deactivated in a first cycle of the second DRX. In this case, the terminal device may receive the target indication information, sent by the network device, in the target time period 1 in the first cycle of the first DRX. Further, the first DRX is deactivated in a second cycle of the first DRX, and any second DRX is activated in a second cycle of the second DRX. In this case, the terminal device may receive the target indication information, sent by the network device, in the second time period 1 in the second cycle of the second DRX.

It may also be understood as that, when a plurality of DRXs are configured for the first cell, the terminal device receives, only in a preset time period in the active time of the DRX in the active state in the plurality of DRXs, the target indication information indicating activation/deactivation of the plurality of DXRs.

Optionally, each target time period of the first DRX is consistent with each second time period corresponding to any one of the at least one second DRX. Alternatively, a part of target time periods of the first DRX are consistent with a part of second time periods corresponding to any one of the at least one second DRX.

For example, as shown in FIG. 13, the second time period 1 is completely consistent with the target time period 1, and the second time period 2 is completely consistent with the target time period 2. Alternatively, as shown in FIG. 14, the second time period 1 is completely consistent with the target time period 1, and the second time period 2 is inconsistent with the target time period 2.

In this implementation, a quantity of times that the terminal device receives the target indication information can also be reduced, thereby further reducing power consumption of the terminal device.

Application scenario 5: A second discontinuous transmission is configured for each of at least one second cell of the terminal device.

In a first optional implementation, the target indication information indicates activation/deactivation of the first discontinuous transmission and the second discontinuous transmission of each of the at least one second cell. The terminal device may receive, only in the target time period in the active time of the first discontinuous transmission of the first cell, the target indication information sent by the network device. The second discontinuous transmission may be a DTX or a DRX.

Further, in the foregoing case, the active time of the first discontinuous transmission may be shorter than or equal to the active time of the second discontinuous transmission of each second cell. Alternatively, a cycle of the first discontinuous transmission may be shorter than or equal to a cycle of the second discontinuous transmission of each second cell. Alternatively, the active time of the first discontinuous transmission may be shorter than or equal to active time of the second discontinuous transmission of each second cell, and a cycle of the first discontinuous transmission may be shorter than or equal to a cycle of the second discontinuous transmission of each second cell.

It may also be understood as that, in this application scenario, the terminal device may select a discontinuous transmission with shortest active time and/or a shortest cycle from the first discontinuous transmission and the at least one second discontinuous transmission, and receive the target indication information in a preset time period of the active time of the discontinuous transmission. In other words, in this application scenario, the detection occasion of the target indication information is defined based on a discontinuous transmission with shortest active time and/or a shortest cycle in the first discontinuous transmission and the at least one second discontinuous transmission.

For example, as shown in FIG. 15, because active time of a second discontinuous transmission of any second cell k is longer than the active time of the first discontinuous transmission, a cycle of a second discontinuous transmission of any second cell i is longer than the cycle of the first discontinuous transmission, and active time of the second discontinuous transmission of the second cell i is also longer than the cycle of the first discontinuous transmission, when the target indication information determined by the network device can further indicate the second discontinuous transmission of the second cell i and the second cell k, a detection occasion of the target indication information is defined by the first cell. That is, the terminal device receives, in the target time period in the active time of the first discontinuous transmission, the target indication information sent by the network device.

In the foregoing implementation, when a discontinuous transmission is configured for a plurality of cells of the terminal device, the target time period for sending the target indication information may be defined based on a cell corresponding to the discontinuous transmission with shortest active time and/or a shortest cycle configured in the plurality of cells. In this way, a quantity of times of receiving the target indication information can be reduced, thereby reducing power consumption of the terminal device.

In a second optional implementation, the target indication information indicates activation/deactivation of the first discontinuous transmission and the second discontinuous transmission of each of the at least one second cell. The terminal device not only receives, in the target time period in the active time of the first discontinuous transmission, the target indication information sent by the network device, but also receives, in the fourth time period in the active time of each second discontinuous transmission, the target indication information sent by the network device. In other words, the terminal device further receives, in a fourth time period in active time of a second discontinuous transmission of any second cell i, the target indication information sent by the network device.

For example, as shown in FIG. 16, in the first cycle of the first discontinuous transmission, the terminal device receives the target indication information in the target time period 1, and in the second cycle of the first discontinuous transmission, the terminal device receives the target indication information in the target time period 2. Similarly, in the first cycle of the second discontinuous transmission of the second cell i, the terminal device receives the target indication information in the fourth time period 1, and in the second cycle of the second discontinuous transmission of the second cell i, the terminal device receives the target indication information in the fourth time period 2.

Optionally, each target time period corresponding to the first discontinuous transmission is consistent with each fourth time period corresponding to any one of the at least one second discontinuous transmission. Alternatively, a part of target time periods corresponding to the first discontinuous transmission are consistent with a part of fourth time periods corresponding to any one of the at least one second discontinuous transmission.

For example, as shown in FIG. 16, the target time period 1 of the first discontinuous transmission is consistent with the fourth time period 1 corresponding to the second discontinuous transmission of the second cell i. Similarly, the target time period 2 of the first discontinuous transmission is consistent with the fourth time period 2 corresponding to the second discontinuous transmission of the second cell i. Alternatively, as shown in FIG. 17, the target time period 1 of the first discontinuous transmission is consistent with the fourth time period 1 corresponding to the second discontinuous transmission of the second cell i, and the target time period 2 of the first discontinuous transmission is inconsistent with the fourth time period 2 corresponding to the second discontinuous transmission of the second cell i.

In the foregoing implementation, when a discontinuous transmission is separately configured for a plurality of cells of the terminal device, the target indication information is separately received in a time period corresponding to the discontinuous transmission configured for each cell, and it is ensured that the receiving time periods corresponding to the discontinuous transmission configured for the cells are completely or partially the same. In this manner, a quantity of times that the terminal device receives the target indication information can be effectively reduced, thereby reducing power consumption of the terminal device.

In a third optional implementation, the network device determines one piece of target indication information indicating to activate/deactivate the first discontinuous transmission and at least one piece of second indication information respectively indicating to activate/deactivate the at least one second discontinuous transmission. In this case, the terminal device not only receives, in the target time period in the active time of the first discontinuous transmission, the target indication information sent by the network device, but also receives, in the fourth time period in the active time of each second discontinuous transmission, each piece of second indication information sent by the network device. In other words, the terminal device further receives, in the fourth time period in active time of the second discontinuous transmission of any second cell i, the second indication information indicating to activate/deactivate the second discontinuous transmission of the second cell i. In other words, when a discontinuous transmission is configured for a plurality of cells of the terminal device, corresponding indication information separately indicates activation/deactivation of a discontinuous transmission configured for each cell, and the indication information corresponding to each discontinuous transmission is received in a preset time period in active time of each discontinuous transmission.

For example, as shown in FIG. 16, in the first cycle of the first discontinuous transmission, the terminal device receives the target indication information in the target time period 1, and in the second cycle of the first discontinuous transmission, the terminal device receives the target indication information in the target time period 2. Similarly, in the first cycle of the second discontinuous transmission of the second cell i, the terminal device receives the second indication information in the fourth time period 1, and in the second cycle of the second discontinuous transmission of the second cell i, the terminal device receives the second indication information in the fourth time period 2.

In the foregoing implementation, when a discontinuous transmission is separately configured for a plurality of cells of the terminal device, indication information corresponding to a discontinuous transmission configured for each cell is separately received in a time period corresponding to a discontinuous transmission configured for each cell. This manner of activating/deactivating the discontinuous transmission configured for each cell is more flexible, and can effectively avoid a case such as indication disorder while reducing power consumption of the terminal device.

It should be understood that the terminal device may receive the target indication information, the first indication information, or the second indication information by detecting multicast DCI or a MAC CE sent by the network device.

In some feasible implementations, each cycle of the discontinuous transmission of the first cell includes one target time period. In other words, when the first discontinuous transmission is configured for the first cell, the network device may send the target indication information in the target time period included in each cycle of the first discontinuous transmission, and the terminal device may receive the target indication information in the target time period included in each cycle of the first discontinuous transmission. It may also be understood as that, for the terminal device, a detection occasion of the target indication information is defined in each cycle of the first discontinuous transmission. It should be understood that, in this case, the target indication information received by the terminal device in the target time period in any cycle may indicate only activation/deactivation of the first discontinuous transmission of the first cell in the cycle.

In some feasible implementations, a part of cycles of a discontinuous transmission of the first cell include the target time period, and time intervals between the part of cycles are the same. In other words, a plurality of target cycles in all cycles of the discontinuous transmission of the first cell include a target time period, and time intervals between the plurality of target cycles are the same. It may also be understood as that, for the terminal device, a detection occasion of the target indication information is defined only at an interval of a plurality of cycles of the first discontinuous transmission, and not all cycles define a detection occasion of the target indication information. The detection occasion of the target indication information is periodically defined. It also needs to be understood that, in this case, target indication information received by the terminal device in a target time period in any target cycle T1 may indicate that the first discontinuous transmission of the first cell is activated/deactivated in a plurality of cycles between the target cycle T1 and a next target period T2 of the target cycle T1.

It should be understood that the foregoing describes a definition of the transmission time period of the discontinuous transmission of the first cell for the target indication information. In specific implementation, the foregoing manner may also be used for a definition of the transmission time period of the discontinuous transmission of the first cell for the first indication information or the second indication information described above. Certainly, when not only the first cell of the terminal device defines the first discontinuous transmission, but also the at least one second cell is configured with the second discontinuous transmission, the foregoing manner may also be used for a definition of the transmission time period in each second discontinuous transmission of the at least one second cell for the target indication information, the first indication information, or the second indication information.

In some feasible implementations, when the network device sends a plurality of pieces of target indication information in one cycle of a discontinuous transmission of any cell (which is assumed as a cell j herein) of the terminal device, the plurality of pieces of target indication information all indicate to activate the discontinuous transmission of the cell j, or the plurality of pieces of target indication information all indicate to deactivate the discontinuous transmission of the cell j. It may also be understood as that, when the network device sends a plurality of pieces of target indication information in one cycle of a discontinuous transmission of any cell j, indication results of the plurality of pieces of target indication information are not expected to be inconsistent. To be specific, a part of the plurality of pieces of target indication information are not expected to indicate to activate the discontinuous transmission of the cell j, and a remaining part of target indication information indicates to deactivate the discontinuous transmission of the cell j. This implementation can ensure that indication results of all target indication information received by the terminal device in a cycle of each discontinuous transmission of any cell j are consistent, and avoid logic confusion caused by inconsistent indication results of a plurality of pieces of target indication information.

For example, corresponding to the application scenario 2, with reference to FIG. 5, both the target time period 1 and the target time period 2 are located in the first cycle of the DRX of the first cell. Therefore, to avoid that the target indication information indicates two different results in the first cycle of the DRX of the first cell, it is required that the target indication information sent by the network device in the target time period 1 and the target indication information sent in the target time period 2 indicate consistent results for the DRX of the first cell, that is, both indicate activation/deactivation of the DRX of the first cell. Alternatively, corresponding to the application scenario 3, with reference to FIG. 6, both the target time period 1 and the target time period 2 are located in the first cycle of the DTX of the first cell. Therefore, to avoid that the target indication information indicates two different results in the first cycle of the DTX of the first cell, it is required that the target indication information sent by the network device in the target time period 1 and the target indication information sent in the target time period 2 indicate consistent results for the DTX of the first cell, that is, both indicate activation/deactivation of the DTX of the first cell.

In some feasible implementations, the target indication information sent by the network device in inactive time of the second discontinuous transmission of any second cell i in the at least one second cell is not for activating/deactivating the second discontinuous transmission of the second cell i.

For example, as shown in FIG. 15, the network device sends, in the target time period 2, the target indication information indicating to activate/deactivate both the first discontinuous transmission and the second discontinuous transmission of the second cell i. Because the target time period 2 is located in the inactive time of the second discontinuous transmission of the second cell i, for the second cell i, the target indication information sent by the network device in the target time period 2 does not indicate to activate/deactivate the second discontinuous transmission of the second cell i. In this implementation, a case in which the second discontinuous transmission of the second cell i is deactivated in the inactive time of the second discontinuous transmission of the second cell i can be avoided, thereby avoiding logic confusion.

In some feasible implementations, the terminal device may receive the target indication information, the first indication information, or the second indication information in a primary cell, a primary secondary cell, or a special cell of the terminal device.

S304: The terminal device activates/deactivates the first discontinuous transmission of the first cell based on the target indication information.

In some feasible implementations, after obtaining the target indication information, the terminal device may further activate/deactivate the first discontinuous transmission of the first cell based on the target indication information. For ease of understanding, the following further describes behavior of the terminal device with reference to the foregoing application scenario 1 to application scenario 5.

Application scenario 1: Only one DTX or one DRX is configured for the first cell of the terminal device.

When the first discontinuous transmission is a DTX or a DRX, the terminal device may activate/deactivate the first discontinuous transmission based on the target indication information after receiving the target indication information.

Optionally, the terminal device may activate/deactivate the first continuous transmission in a first target time unit based on the target indication information. The first target time unit may be a next time unit of an end time unit of the active time of the first discontinuous transmission. Alternatively, the first target time unit may be an $X^{th}$ time unit after an end time unit of the target time period defined based on the first discontinuous transmission. Herein, X is a positive integer greater than or equal to 1. It may also be understood as that the target indication information received by the terminal device may take effect in the next time unit of the end time unit of the active time of the first discontinuous transmission, or may take effect in the $X^{th}$ time unit after the end time unit of the target time period defined by the first discontinuous transmission.

Application scenario 2: Both the DTX and the DRX are configured for the first cell.

In a first optional implementation, the first discontinuous transmission is a DTX, and a DRX is further configured for the first cell. After receiving the target indication information, the terminal device may not only activate/deactivate the DTX of the first cell based on the target indication information, but also activate/deactivate the DRX of the first cell based on the target indication information.

Further, the target indication information received by the terminal device may take effect in the next time unit of the end time unit of the active time of the first DTX, or may take effect in the $X^{th}$ time unit after the end time unit of the target time period defined by the first DTX.

In a second optional implementation, the first discontinuous transmission is a DRX, and a DTX is further configured for the first cell. After receiving the target indication information, the terminal device may not only activate/-deactivate the DTX of the first cell based on the target indication information, but also activate/deactivate the DRX of the first cell based on the target indication information.

Further, the target indication information received by the terminal device may take effect in the next time unit of the end time unit of the active time of the first DRX, or may take effect in the $X^{th}$ time unit after the end time unit of the target time period defined by the first DRX.

**EP 4 750 167 A1**

In a third optional implementation, the first discontinuous transmission is a DTX, and a DRX is further configured for the first cell. The terminal device may activate/deactivate the DTX of the first cell based on the target indication information received by the terminal device in the target time period. In addition, the terminal device may further activate/deactivate the DRX of the first cell based on the target indication information received by the terminal device in the first time period.

Further, the target indication information received by the terminal device in the target time period may take effect in the next time unit of the end time unit of the active time of the first DTX, or may take effect in the $X^{th}$ time unit after the end time unit of the target time period defined by the first DTX. The target indication information received by the terminal device in the first time period may take effect in the next time unit of the end time unit of the active time of the first DRX, or may take effect in the $X^{th}$ time unit after the end time unit of the first time period defined by the first DRX.

In a fourth optional implementation, the first discontinuous transmission is a DTX, and a DRX is further configured for the first cell. The terminal device may not only activate/deactivate the DTX of the first cell based on the target indication information received by the terminal device in the target time period, but also activate/deactivate the DRX of the first cell based on the first indication information received by the terminal device in the first time period.

Further, the target indication information received by the terminal device in the target time period may take effect in the next time unit of the end time unit of the active time of the first DTX, or may take effect in the $X^{th}$ time unit after the end time unit of the target time period defined by the first DTX. The first indication information received by the terminal device in the first time period may take effect in the next time unit of the end time unit of the active time of the first DRX, or may take effect in the $X^{th}$ time unit after the end time unit of the first time period defined by the first DRX.

Application scenario 3: The first discontinuous transmission is a first DTX, and at least one second DTX is further configured for the first cell.

In this application scenario, after receiving the target indication information, the terminal device may not only activate/deactivate the first DTX based on the target indication information, but also activate/deactivate, based on the target indication information, the at least one second DTX configured for the first cell.

Further, the target indication information received by the terminal device in the target time period may take effect in the next time unit of the end time unit of the active time of the first DTX, or may take effect in the $X^{th}$ time unit after the end time unit of the target time period defined by the first DTX.

Application scenario 4: The first discontinuous transmission is a first DRX, and at least one second DRX is further configured for the first cell.

In this application scenario, after receiving the target indication information, the terminal device may not only activate/deactivate the first DRX based on the target indication information, but also activate/deactivate, based on the target indication information, the at least one second DRX configured for the first cell.

Further, the target indication information received by the terminal device in the target time period may take effect in the next time unit of the end time unit of the active time of the first DRX, or may take effect in the $X^{th}$ time unit after the end time unit of the target time period defined by the first DRX.

Application scenario 5: A second discontinuous transmission is configured for each of at least one second cell of the terminal device.

In a first optional implementation, the target indication information indicates activation/deactivation of the first discontinuous transmission and the second discontinuous transmission of each of the at least one second cell, and a detection occasion of the target indication information is defined by the first discontinuous transmission of the first cell. In this case, the terminal device may not only activate/deactivate the first discontinuous transmission based on the target indication information, but also activate/deactivate, based on the target indication information, the second discontinuous transmission configured for each second cell.

Optionally, for the first discontinuous transmission and the second discontinuous transmission of each of the at least one second cell, the target indication information may take effect in the next time unit of the end time unit of the active time of the first discontinuous transmission, or may take effect in the $X^{th}$ time unit after the end time unit of the target time period defined by the first discontinuous transmission.

Optionally, for the first discontinuous transmission, the target indication information may take effect in the next time unit of the end time unit of the active time of the first discontinuous transmission, or may take effect in the $X^{th}$ time unit after the end time unit of the target time period defined by the first discontinuous transmission. For the second discontinuous transmission of the second cell i, if the terminal device determines that the terminal device receives the target indication information for the first time in the cycle of the second discontinuous transmission of the second cell i, and a time unit in which the target indication information is received is in the inactive time of the second discontinuous transmission of the second cell i, the second discontinuous transmission of the second cell i may be activated/deactivated in the second target time unit based on the target indication information. The second target time unit is a $Y^{th}$ time unit after the time unit in which the terminal device receives the target indication information. Y is a positive integer greater than or equal to 1.

In a second optional implementation, the target indication information indicates activation/deactivation of the first discontinuous transmission and the second discontinuous transmission of each of the at least one second cell, but a detection occasion of the target indication information is separately defined by the first discontinuous transmission of the first cell and the second discontinuous transmission of each second cell. In this case, the terminal device may activate/deactivate the first discontinuous transmission based on the target indication information received by the terminal device in the target time period, or may activate/deactivate, based on the target indication information received by the terminal device in the fourth time period defined by each second discontinuous transmission, the second discontinuous transmission configured for each second cell.

Optionally, for the first discontinuous transmission, the target indication information may take effect in the next time unit of the end time unit of the active time of the first discontinuous transmission, or may take effect in the $X^{th}$ time unit after the end time unit of the target time period defined by the first discontinuous transmission. For each second discontinuous transmission, the target indication information may take effect in the next time unit of the end time unit of the active time of each second discontinuous transmission, or may take effect in the $X^{th}$ time unit after the end time unit of the fourth time period defined by each second discontinuous transmission.

In a third optional implementation, the network device determines one piece of target indication information indicating to activate/deactivate the first discontinuous transmission and at least one piece of second indication information respectively indicating to activate/deactivate the at least one second discontinuous transmission. In this case, the terminal device not only activates/deactivates the first discontinuous transmission based on the target indication information, but also activates/deactivates each second discontinuous transmission based on the second indication information corresponding to each second discontinuous transmission.

Further, for the first discontinuous transmission, the target indication information may take effect in the next time unit of the end time unit of the active time of the first discontinuous transmission, or may take effect in the $X^{th}$ time unit after the end time unit of the target time period defined by the first discontinuous transmission. For each second discontinuous transmission, the second indication information may take effect in the next time unit of the end time unit of the active time of each second discontinuous transmission, or may take effect in the $X^{th}$ time unit after the end time unit of the fourth time period defined by each second discontinuous transmission.

In some feasible implementations, when the terminal device receives a plurality of pieces of target indication information in one cycle of a discontinuous transmission of any cell j of the terminal device, the plurality of pieces of target indication information all indicate to activate the discontinuous transmission of the cell j, or the plurality of pieces of target indication information all indicate to deactivate the discontinuous transmission of the cell j. It may also be understood as that, when the terminal device receives a plurality of pieces of target indication information in one cycle of a discontinuous transmission of any cell j, the terminal device does not expect indication results of the plurality of pieces of target indication information to be inconsistent. To be specific, a part of the plurality of pieces of target indication information are not expected to indicate to activate the discontinuous transmission of the cell j, and a remaining part of target indication information indicates to deactivate the discontinuous transmission of the cell j. This implementation can ensure that indication results of all target indication information received by the terminal device in a cycle of each discontinuous transmission of any cell j are consistent, and avoid logic confusion caused by inconsistent indication results of a plurality of pieces of target indication information.

For example, corresponding to the application scenario 2, with reference to FIG. 5, both the target time period 1 and the target time period 2 are located in the first cycle of the DRX of the first cell. Therefore, the target indication information received by the terminal device in the target time period 1 and the target indication information received in the target time period 2 indicate consistent results for the DRX of the first cell, that is, both indicate activation/deactivation of the DRX of the first cell. Alternatively, corresponding to the application scenario 3, with reference to FIG. 6, both the target time period 1 and the target time period 2 are located in the first cycle of the DTX of the first cell. Therefore, the target indication information received by the terminal device in the target time period 1 and the target indication information received in the target time period 2 indicate consistent results for the DTX of the first cell, that is, both indicate activation/deactivation of the DTX of the first cell.

In some feasible implementations, target indication information received by the terminal device in inactive time of the second discontinuous transmission of any second cell i in the at least one second cell is not for activating/deactivating the second discontinuous transmission of the second cell i.

For example, as shown in FIG. 15, the network device sends, in the target time period 2, the target indication information indicating to activate/deactivate both the first discontinuous transmission and the second discontinuous transmission of the second cell i. Because the target time period 2 is located in the inactive time of the second discontinuous transmission of the second cell i, for the second cell i, the target indication information received by the terminal device in the target time period 2 does not indicate to activate/deactivate the second discontinuous transmission of the second cell i. This implementation not only can avoid repeated indication of the second discontinuous transmission of the second cell i, but also can avoid impact generated, when the terminal device does not detect the target indication information, on the second discontinuous transmission of the second cell i that is determined to be activated or deactivated, thereby avoiding logic confusion.

In some feasible implementations, if the terminal device determines that the target indication information is received for the first time in the cycle of the second discontinuous transmission of the second cell i, and a time unit in which the target indication information is received is in inactive time of the second discontinuous transmission of the second cell i, the terminal device activates/deactivates the second cell i in a second target time unit based on the target indication information. The second target time unit is a $Y^{th}$ time unit after the time unit in which the target indication information is received, and Y is a positive integer greater than or equal to 1. In this implementation, even if the terminal device receives the target indication information in inactive time of a second continuous transmission of any second cell i, the terminal device can activate/deactivate the second discontinuous transmission of the second cell i in a timely manner. This can improve transmission stability.

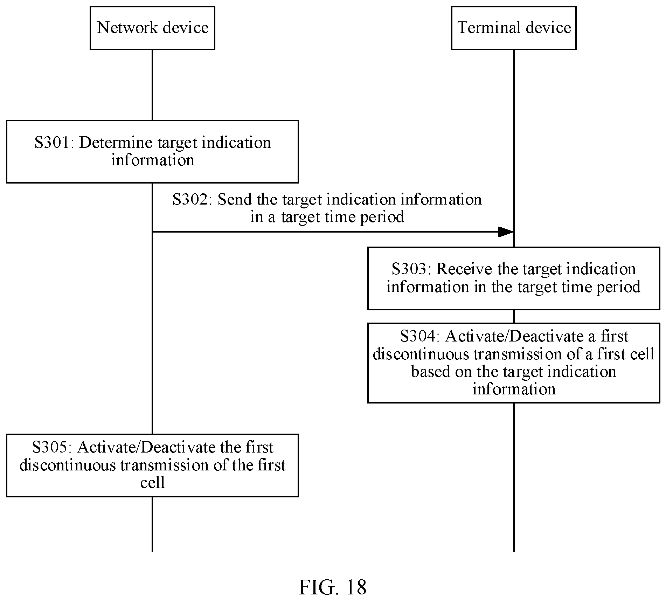

In some feasible implementations, refer to FIG. 18. FIG. 18 is another schematic flowchart of a communication method according to this application. As shown in FIG. 18, the communication method may further include the following step.

S305: The network device activates/deactivates the first discontinuous transmission of the first cell.

For ease of understanding, the following further describes specific behavior of the network device with reference to the foregoing application scenario 1 to application scenario 5.

Application scenario 1: Only one DTX or one DRX is configured for the first cell of the terminal device.

When the first discontinuous transmission is a DTX or a DRX, after determining, based on information such as a current load status and a usage status of the first discontinuous transmission, to activate/deactivate the first discontinuous transmission, the network device may activate/deactivate the first discontinuous transmission based on a result determined by the network device.

Optionally, the network device may also activate/deactivate the first continuous transmission in the first target time unit described above.

Application scenario 2: Both the DTX and the DRX are configured for the first cell.

In a first optional implementation, the network device may activate/deactivate the DTX and the DRX of the first cell in the next time unit of the end time unit of the active time of the first DTX. Alternatively, the network device may activate the DTX and the DRX of the first cell in the $X^{th}$ time unit that is after the end time unit of the target time period defined by the first DTX.

In a second optional implementation, the network device may activate/deactivate the DTX and the DRX of the first cell in the next time unit of the end time unit of the active time of the first DRX. Alternatively, the network device may activate/deactivate the DTX and the DRX of the first cell in the $X^{th}$ time unit that is after the end time unit of the target time period defined by the first DRX.

In a third optional implementation, the network device may activate/deactivate the DTX of the first cell in the next time unit of the end time unit of the active time of the first DTX, or may activate/deactivate the DTX of the first cell in the $X^{th}$ time unit after the end time unit of the target time period defined by the first DTX, and the network device may activate/deactivate the DRX of the first cell in the next time unit of the end time unit of the active time of the first DRX, or may activate/deactivate the DRX of the first cell in the $X^{th}$ time unit after the end time unit of the first time period defined by the first DRX.

Application scenario 3: The first discontinuous transmission is a first DTX, and at least one second DTX is further configured for the first cell.

In this application scenario, the network device may activate/deactivate the first DTX and the at least one second DTX in the next time unit of the end time unit of the active time of the first DTX, or may activate/deactivate the first DTX and the at least one second DTX in the $X^{th}$ time unit after the end time unit of the target time period defined by the first DTX.

Application scenario 4: The first discontinuous transmission is a first DRX, and at least one second DRX is further configured for the first cell.

In this application scenario, the network device may activate/deactivate the first DRX and the at least one second DRX in the next time unit of the end time unit of the active time of the first DRX, or may activate/deactivate the first DRX and the at least one second DRX in the $X^{th}$ time unit after the end time unit of the target time period defined by the first DRX.

Application scenario 5: A second discontinuous transmission is configured for each of at least one second cell of the terminal device.

In a first optional implementation, for the first discontinuous transmission and the second discontinuous transmission of each of the at least one second cell, the network device may activate/deactivate the first discontinuous transmission and the second discontinuous transmission of each of the at least one second cell in the next time unit of the end time unit of the active time of the first discontinuous transmission.

Alternatively, the network device may activate/deactivate the first discontinuous transmission and the second discontinuous transmission of each of the at least one second cell in the $X^{th}$ time unit after the end time unit of the target time period defined by the first discontinuous transmission.

Alternatively, the network device may activate/deactivate the first discontinuous transmission in the next time unit of the end time unit of the active time of the first discontinuous transmission, or in the $X^{th}$ time unit after the end time unit of the target time period defined by the first discontinuous transmission. For the second discontinuous transmission of the second cell i, if the network device determines that the network device sends the target indication information for the first time in the cycle of the second discontinuous transmission of the second cell i, and a time unit in which the target indication information is sent is in the inactive time of the second discontinuous transmission of the second cell i, the second discontinuous transmission of the second cell i may be activated/deactivated in the second target time unit. The second target time unit is a $Y^{th}$ time unit after the time unit in which the terminal device receives the target indication information. Y is a positive integer greater than or equal to 1.

In a second optional implementation, the network device may activate/deactivate the first discontinuous transmission in the next time unit of the end time unit of the active time of the first discontinuous transmission, or in the $X^{th}$ time unit after the end time unit of the target time period defined by the first discontinuous transmission. The network device may activate/deactivate each second discontinuous transmission in the next time unit of the end time unit of the active time of each second discontinuous transmission, or in the $X^{th}$ time unit after the end time unit of the fourth time period defined by each second discontinuous transmission.

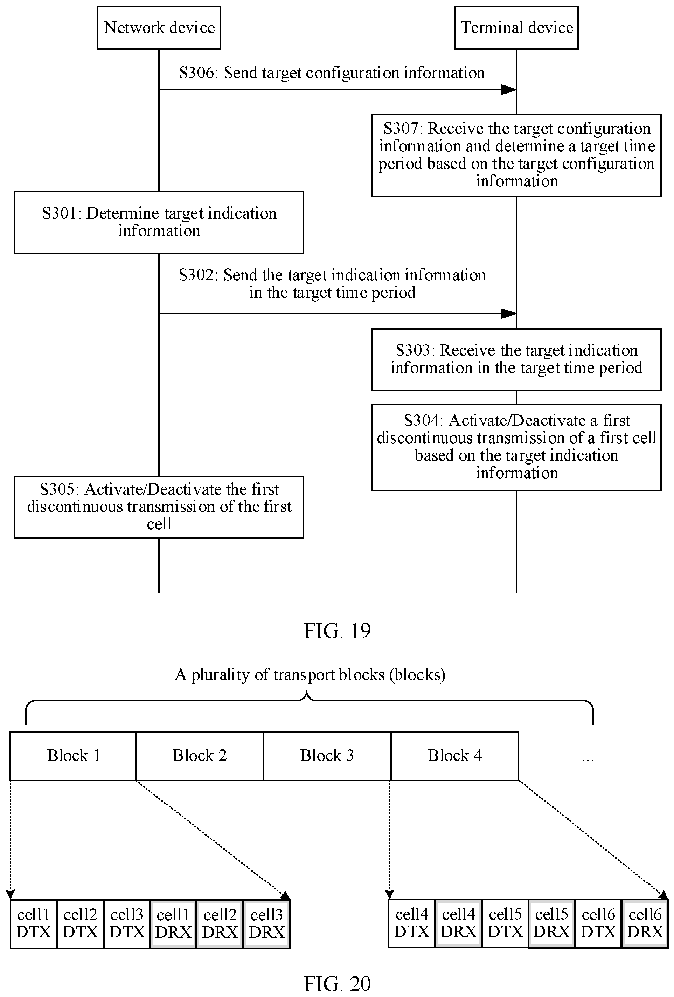

In some feasible implementations, refer to FIG. 19. FIG. 19 is another schematic flowchart of a communication method according to this application. As shown in FIG. 19, the communication method may further include the following step.

S306: The network device sends target configuration information to the terminal device.

In some feasible implementations, after determining the target time period, the network device may generate corresponding target configuration information, and send the target configuration information to the terminal device.

In an optional implementation, the target configuration information may include a first offset and a second offset. The first offset is a time unit offset of a start time unit of the target time period relative to a start time unit of the active time of the first discontinuous transmission, and the second offset is a time unit offset of an end time unit of the target time period relative to the start time unit of the active time of the first discontinuous transmission; or the first offset is a time unit offset of a start time unit of the target time period relative to an end time unit of the active time of the first discontinuous transmission, and the second offset is a time unit offset of an end time unit of the target time period relative to the end time unit of the active time of the first discontinuous transmission.

In another optional implementation, the target configuration information may include a first offset. The first offset is a time unit offset of a start time unit of the target time period relative to a start time unit of the active time of the first discontinuous transmission, and an end time unit of the target time period is consistent with an end time unit of the active time of the first discontinuous transmission. Alternatively, the first offset is a time unit offset of a start time unit of the target time period relative to an end time unit of the active time of the first discontinuous transmission, and an end time unit of the target time period is consistent with the end time unit of the active time of the first discontinuous transmission.

In still another optional implementation, the target configuration information may include a second offset. The second offset is a time unit offset of an end time unit of the target time period relative to a start time unit of the active time of the first discontinuous transmission, and a start time unit of the target time period is consistent with the start time unit of the active time of the first discontinuous transmission; or Alternatively, the second offset is a time unit offset of an end time unit of the target time period relative to an end time unit of the active time of the first discontinuous transmission, and a start time unit of the target time period is consistent with a start time unit of the active time of the first discontinuous transmission.

It should be additionally noted that, the target configuration information may further include a third identifier, and the third identifier indicates that each cycle of a discontinuous transmission of the first cell includes the target time period. Alternatively, the target configuration information may further include a fourth identifier and an interval with a quantity Z of cycles. The fourth identification information indicates that a part of cycles of a discontinuous transmission of the first cell include the target time period, and time intervals between the part of cycles are the same. The interval with the quantity Z of cycles indicates time intervals between all of the part of cycles.

S307: The terminal device receives the target configuration information and determines the target time period based on the target configuration information.

In some feasible implementations, the terminal device may receive the target indication information from the network device, and determine the target time period in the active time of the first discontinuous transmission of the first cell based on the target indication information.

In an optional implementation, when the target configuration information includes the first offset and the second offset, the terminal device may determine, as the start time unit of the target time period, a third target time unit that is after the start time unit of the active time of the first discontinuous transmission and that offsets from the start time unit of the active time of the first discontinuous transmission by time units whose quantity is the first offset. The terminal device may further determine, as the end time unit of the target time period, a fourth target time unit that is after the start time unit of the active time of the first discontinuous transmission and that offsets from the start time unit of the active time of the first discontinuous transmission by time units whose quantity is the second offset.

Alternatively, the terminal device may determine, as the start time unit of the target time period, a third target time unit that is before the end time unit of the active time of the first discontinuous transmission and that offsets from the start time unit of the active time of the first discontinuous transmission by time units whose quantity is the first offset. The terminal device may further determine, as the end time unit of the target time period, a fourth target time unit that is before the end time unit of the active time of the first discontinuous transmission and that offsets from the start time unit of the active time of the first discontinuous transmission by time units whose quantity is the second offset.

In another optional implementation, when the target configuration information includes the first offset, the terminal device may determine the end time unit of the active time of the first discontinuous transmission as the end time unit of the target time period, and determine, as the start time unit of the target time period, a specific time unit that is after the start time unit of the active time of the first discontinuous transmission and that offsets from the start time unit of the active time of the first discontinuous transmission by time units whose quantity is the first offset. Alternatively, the terminal device may determine the end time unit of the active time of the first discontinuous transmission as the end time unit of the target time period, and determine, as the start time unit of the target time period, a specific time unit that is before the end time unit of the active time of the first discontinuous transmission and that offsets from the end time unit of the active time of the first discontinuous transmission by time units whose quantity is the first offset.

In still another optional implementation, when the target configuration information includes the second offset, the terminal device may determine the start time unit of the active time of the first discontinuous transmission as the start time unit of the target time period, and use, as the end time unit of the target time period, a specific time unit that is after the start time unit of the active time of the first discontinuous transmission and that offsets from the start time unit of the active time of the first discontinuous transmission by time units whose quantity is the second offset. Alternatively, the terminal device may determine the start time unit of the active time of the first discontinuous transmission as the start time unit of the target time period, and determine, as the start time unit of the target time period, a specific time unit that is before the end time unit of the active time of the first discontinuous transmission and that offsets from the end time unit of the active time of the first discontinuous transmission by time units whose quantity is the second offset.

Further, if the terminal device determines that the target configuration information may further include the third identifier, the terminal device may determine that each cycle of the discontinuous transmission of the first cell includes the target time period. Alternatively, if the terminal device determines that the target configuration information further includes the fourth identifier and the interval with the quantity Z of cycles, the terminal device may determine that the part of cycles of a discontinuous transmission of the first cell include the target time period, and a quantity of cycles between all of the part of cycles is Z.

It should be understood that step S306 and step S307 may be performed before step S301, or may be performed after step S301 and before step S303. This is not limited in this application. Only an optional solution in which the network device configures the target time period for the terminal device is described in steps S306 and S307. In actual implementation, the network device may alternatively configure the target time period for the terminal device in another manner. This is not limited in this application.

It should be noted that only a process in which the network device configures the target time period for the terminal device is described in steps S306 and S307. The network device may also configure the first time period, the second time period, the third time period, and the fourth time period described above for the terminal device in a similar manner. To avoid repetition, details are not described herein again. Similarly, when a plurality of second discontinuous transmissions are configured for a plurality of second cells of the terminal device, the network device may configure, for each cell of the terminal device in a same or similar manner, a time period for transmitting corresponding indication information. A specific process is not described herein again.

It needs to be further understood that, in actual implementation, the network device further sends discontinuous transmission configuration information to the terminal device to configure a corresponding discontinuous transmission for a cell of the terminal device. The discontinuous transmission configuration information mainly includes a cycle length, active time, inactive time, an on moment, an off moment, and the like of the discontinuous transmission. The target configuration information described above may be included in the discontinuous transmission configuration information, or may be sent by the network device independently of the discontinuous transmission configuration information. This is not limited in this application.

In some feasible implementations, refer to FIG. 20. FIG. 20 is a diagram of a format of target indication information according to this application. As shown in FIG. 20, the target indication information may include a plurality of transport blocks (block). The figure shows only four transport blocks: a block 1, a block 2, a block 3, and a block 4.

Optionally, each transport block may include $\sum_{e=1}^{M} N_e$ bits. M is a total quantity of cells for which a DTX and a DRX are currently configured for the terminal device. $N_e$ is a quantity of bits of DTX and DRX activation corresponding to a cell e.

When the terminal device supports both the DTX and the DRX, a value of $N_e$ may satisfy the following formula (1):

$$N_e = \lceil \log_2(C_{e1} + 1) \rceil + \lceil \log_2(C_{e2} + 1) \rceil \qquad (1)$$

When the terminal device supports only the DTX, a value of $N_e$ may satisfy the following formula (2):

$$N_e = \lceil \log_2(C_{e1} + 1) \rceil \qquad (2)$$

When the terminal device supports only the DTX, a value of $N_e$ may satisfy the following formula (3):

$$N_e = \lceil \log_2(C_{e2} + 1) \rceil \qquad (3)$$

$C_{e1}$ is a quantity of DTX configurations that can be supported by the cell e of the terminal device, and $C_{e2}$ is a quantity of DRX configurations that can be supported by the cell e of the terminal device. In this embodiment of this application, " $\lceil x \rceil$ " represents rounding up x, and "⌈ ⌉" is a rounding up symbol.

Optionally, for $\sum_{e=1}^{M} N_e$ bits included in each transport block, these bits may be preferentially indicated based on a cell identifier of the terminal device. To be specific, some consecutive bits in the $\sum_{e=1}^{M} N_e$ bits indicate the terminal device to activate/deactivate a DTX of each cell, and the other consecutive bits indicate the terminal device to activate/deactivate a DRX of each cell.

For example, as shown in FIG. 20, it is assumed that a DTX and a DRX are configured for a cell 1, a cell 2, and a cell 3 of the terminal device, and bits in the block 1 are used for indication. In this case, three consecutive bits in the block 1 respectively indicate the terminal device to activate/deactivate a DTX of the three cells. A bit, namely, cell1 DTX, indicates the first cell 1 to activate/deactivate the DTX, a bit, namely, cell2 DTX, indicates the first cell 2 to activate/deactivate the DTX, and a bit, namely, cell3 DTX, indicates the first cell 3 to activate/deactivate the DTX. In addition, there are three consecutive bits in the block 1 that respectively indicate the terminal device to activate/deactivate the DRX of the three cells. A bit, namely, cell1 DRX, indicates the first cell 1 to activate/deactivate the DRX, a bit, namely, cell2 DRX, indicates the first cell 2 to activate/deactivate the DRX, and a bit, namely, cell3 DRX, indicates the first cell 3 to activate/deactivate the DRX.

Optionally, for $\sum_{e=1}^{M} N_e$ bits included in each transport block, these bits may continuously indicate a DTX and a DRX of each cell in a unit of each cell. In other words, every $N_e$ consecutive bits in the $\sum_{e=1}^{M} N_e$ bits separately indicate the terminal device to activate/deactivate the DTX and the DRX of each cell.

For example, as shown in FIG. 20, it is assumed that a DTX and a DRX are configured for a cell 4, a cell 5, and a cell 6 of the terminal device, and bits in a block 4 are used for indication. In this case, there are three groups of 2 consecutive bits in the block 4, and the three groups of 2 consecutive bits respectively indicate the terminal device to activate/deactivate the DTX and the DRX of the cell 4, the cell 5, and the cell 6. 2 consecutive bits, namely, cell4 DTX and cell4 DRX, sequentially indicate the terminal device to activate/deactivate the DTX and the DRX of the cell 4, 2 consecutive bits, namely, cell5 DTX and cell5 DRX, sequentially indicate the terminal device to activate/deactivate the DTX and the DRX of the cell 5, and 2 consecutive bits, namely, cell6 DTX and cell6 DRX, sequentially indicate the terminal device to activate/deactivate the DTX and the DRX of the cell 6.

Optionally, when a DTX and/or DRX are/is configured for a cell corresponding to the terminal device, the network device further sends an indication information reading parameter to the terminal device. The terminal device may determine, based on the indication information reading parameter, a start bit that can indicate DTX and/or DRX activation/deactivation of the cell corresponding to the terminal device from bits included in the target indication information.

In other words, the terminal device may determine, based on the indication information reading parameter, a bit, at a specific place in the target indication information, from which the terminal device needs to start to read a bit indicating DTX and/or DRX activation/deactivation of the cell corresponding to the terminal device. In other words, the terminal device may determine, based on the indication information reading parameter, a specific transport block, in the target indication information, on which the terminal device needs to determine DTX/DRX activation/deactivation in the corresponding cell.

Optionally, when a DTX and/or DRX are/is configured for a cell corresponding to the terminal device, the network device further sends a configuration information reading parameter to the terminal device. The terminal device may determine, based on the configuration information reading parameter, a location, in a transport block, of an activation/-deactivation indication bit corresponding to the cell for which a DTX and/or DRX are/is configured, that is, a correspondence between a bit in a transport block and an activation/deactivation indication of a DTX/DRX of each cell.

Optionally, the terminal device may determine DTX/DRX activation/deactivation of the cell e based on a value of every $N_e$ bits in an information block corresponding to the target indication information.

For example, $N_e = 1$ and only a DTX or DRX is separately configured for the cell e. In this case, when the terminal device reads that a value of the bit is 1, the terminal device may activate a DTX or DRX of the cell e corresponding to the bit. Correspondingly, when the terminal device reads that a value of the bit is 0, the terminal device may deactivate a DTX or DRX of the cell e corresponding to the bit. Alternatively, when the terminal device reads that a value of the bit is 1, the terminal device may deactivate a DTX or DRX of the cell e corresponding to the bit. Correspondingly, when the terminal device reads that a value of the bit is 0, the terminal device may activate a DTX or DRX of the cell e corresponding to the bit.

For another example, $N_i = 2$ and only a DTX or DRX is separately configured for the cell e. In this case, when the terminal device reads that a value of the bits is 01, the terminal device may activate a DTX configuration 1 or a DRX configuration 1 of the cell e corresponding to the 2 bits. When the terminal device reads that a value of the 2 bits is 10, the terminal device may deactivate a DTX configuration 2 or a DRX configuration 2 of the cell e corresponding to the 2 bits. When the terminal device reads that a value of the 2 bits is 11, the terminal device may deactivate a DTX configuration 3 or a DRX configuration 3 of the cell e corresponding to the 2 bits. When the terminal device reads that a value of the 2 bits is 00, the terminal device deactivates a DTX or DRX of the cell e corresponding to the 2 bits.

It may be understood that the cell e may be configured with the DTX or the DRX separately, or may be configured with both the DTX and the DRX. In a possible configuration manner, $N_e = 4$, where the first 2 bits indicate DTX activation/deactivation of the cell e, and the last 2 bits indicate DRX activation/deactivation of the cell e. In another possible configuration manner, $N_i = 2$, where a 1st bit indicates DTX activation/deactivation of the cell e, and a 2nd bit indicates DRX activation/deactivation of the cell e. For a specific indication manner of DTX or DRX activation/deactivation, refer to the foregoing descriptions. Details are not described herein again.

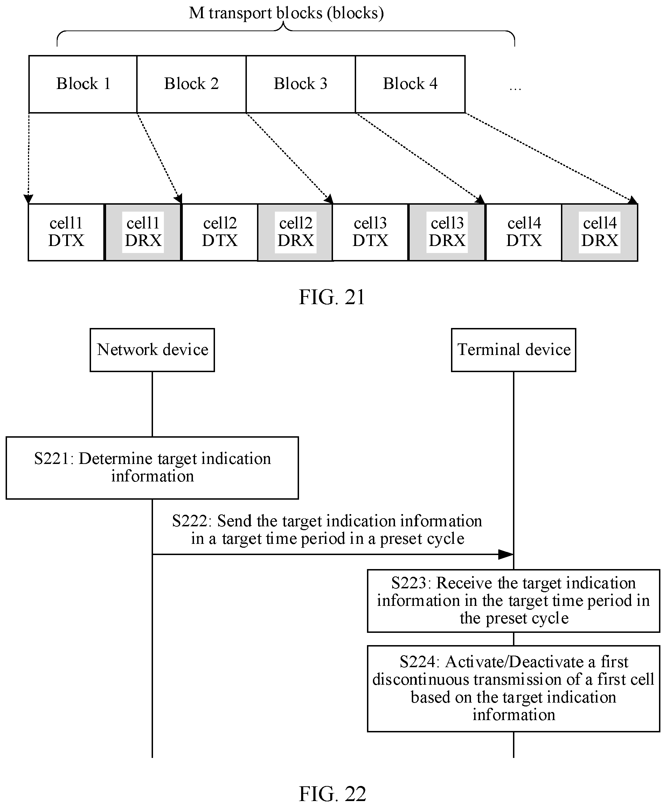

In some feasible implementations, refer to FIG. 21. FIG. 21 is another diagram of a format of target indication information according to this application. As shown in FIG. 21, the target indication information may include M transport blocks (block), M is a total quantity of cells for which a DTX and a DRX are currently configured for the terminal device. FIG. 21 shows only four transport blocks: a block 1, a block 2, a block 3, and a block 4.

Optionally, an eth transport block may include $N_e$ bits, which correspondingly indicate DTX and DRX activation/deactivation of the cell e.

When the terminal device supports both the DTX and the DRX, a value of $N_e$ may satisfy the following formula (4):

$$N_e = \lceil \log_2(C_{e1} + 1) \rceil + \lceil \log_2(C_{e2} + 1) \rceil \qquad (4)$$

When the terminal device supports only the DTX, a value of $N_e$ may satisfy the following formula (5):

$$N_e = \lceil \log_2(C_{e1} + 1) \rceil \qquad (5)$$

When the terminal device supports only the DTX, a value of $N_e$ may satisfy the following formula (6):

$$N_e = \lceil \log_2(C_{e2} + 1) \rceil \qquad (6)$$

$C_{e1}$ is a quantity of DTXs that can be supported by each cell of the terminal device, and $C_{e2}$ is a quantity of DRXs that can be supported by each cell of the terminal device. In this embodiment of this application, " $\lceil x \rceil$ " represents rounding up x, "$\lceil \ \rceil$" is a rounding up symbol, e is a positive integer greater than or equal to 1 and less than or equal to M.

Optionally, the M transport blocks may be sorted based on each cell identifier. The cell identifier may be a physical cell identifier (physical cell identifier, PCI) corresponding to the cell, or the cell identifier may be a serving cell index (serving cell index) corresponding to the cell.

Optionally, for one or more bits in each transport block, these bits may continuously indicate a DTX and a DRX of each cell. In other words, every 2 consecutive bits in the one or more bits separately indicate the terminal device to activate/deactivate the DTX and the DRX of each cell.

For example, as shown in FIG. 21, it is assumed that a DTX and a DRX are configured for a cell 1, a cell 2, a cell 3, and a cell 4 of the terminal device, and bits in a block 1 to a block 4 are used for indication. In this case, there are 2 consecutive bits in each block in the block 1 to the block 4, and the four groups of 2 consecutive bits respectively indicate the terminal device to activate/deactivate the DTX and the DRX of the cell 1, the cell 2, the cell 3, and the cell 4. 2 consecutive bits, namely, cell1 DTX and cell1 DRX, in the block 1 sequentially indicate the terminal device to activate/deactivate the DTX and the DRX of the cell 1, 2 consecutive bits, namely, cell2 DTX and cell2 DRX, in the block 2 sequentially indicate the terminal device to activate/deactivate the DTX and the DRX of the cell 2, 2 consecutive bits, namely, cell3 DTX and cell3 DRX, in the block 3 sequentially the terminal device to activate/deactivate the DTX and the DRX of the cell 3, and 2 consecutive bits, namely, cell4 DTX and cell4 DRX, in the block 4 sequentially indicate the terminal device to activate/deactivate the DTX and the DRX of the cell 4.

Optionally, the network device further configures a cell indication parameter for the terminal device, where the cell indication parameter indicates a correspondence between a cell, for which a DTX and/or DRX function are/is configured, in the terminal device and each block in the target indication information. Specifically, the cell indication parameter indicates that the terminal device includes a block index that is in the target indication information and that corresponds to each cell in a cell for which a DTX and/or DRX function are/is configured, or the cell indication parameter indicates a physical cell identifier or a serving cell index that is of the terminal cell and that corresponds to each block in the target indication information. Correspondingly, the terminal device may find, by searching the block included in the target indication information based on the cell indication parameter, a bit indicating DTX and/or DRX activation/deactivation of a cell corresponding to the terminal device.

Alternatively, the cell indication parameter indicates a start bit location, in the target indication information, of a cell that corresponds to the terminal and that is configured with the DTX and/or DRX function, that is, a start bit location of a transport block corresponding to the cell that corresponds to the terminal and that is configured with the DTX and/or DRX function. Correspondingly, the terminal device may find, from the bits included in the target indication information based on the cell indication parameter, a start bit of the DTX and/or DRX activation/deactivation indication bit corresponding to each cell configured with the DTX function and/or the DRX function, or a start bit of a transport block corresponding to each cell configured with the DTX and/or DRX function.

Optionally, the network device further configures a cell configuration parameter for the terminal device. The cell configuration parameter indicates a specific configuration status of a cell for which a DTX and/or DRX function are/is configured in the network device. The specific configuration status of the cell for which the DTX and/or DRX function are/is configured includes that the cell for which the DTX and/or DRX function are/is configured with only a DTX, configured with only a DRX, or configured with both a DTX and a DRX, and/or a quantity of DTXs and/or DRXs supported by the cell for which the DTX and/or DRX function is configured. Based on a configuration parameter of the first cell, the terminal may learn of the quantity $N_e$ of bits corresponding to each cell for which the DTX and/or DRX function are/is configured, and then receive indication information of the corresponding cell.

Optionally, the terminal device may determine DTX/DRX activation/deactivation of the cell e based on a value of $N_e$ bits in the $e^{th}$ transport block in the target indication information.

For example, $N_e = 1$ and only a DTX or DRX is separately configured for the cell e. In this case, when the terminal device reads that a value of the bit is 1, the terminal device may activate a DTX or DRX of the cell e corresponding to the bit. Correspondingly, when the terminal device reads that a value of the bit is 0, the terminal device may deactivate a DTX or DRX of the cell e corresponding to the bit. Alternatively, when the terminal device reads that a value of the bit is 1, the terminal device may deactivate a DTX or DRX of the cell e corresponding to the bit. Correspondingly, when the terminal device reads that a value of the bit is 0, the terminal device may activate a DTX or DRX of the cell e corresponding to the bit.

For another example, $N_e = 2$ and only a DTX or DRX is separately configured for the cell e. In this case, when the terminal device reads that a value of the bits is 01, the terminal device may activate a DTX configuration 1 or a DRX configuration 1 of the cell e corresponding to the 2 bits. When the terminal device reads that a value of the 2 bits is 10, the terminal device may deactivate a DTX configuration 2 or a DRX configuration 2 of the cell e corresponding to the 2 bits. When the terminal device reads that a value of the 2 bits is 11, the terminal device may deactivate a DTX configuration 3 or a DRX configuration 3 of the cell e corresponding to the 2 bits. When the terminal device reads that a value of the 2 bits is 00, the terminal device deactivates a DTX or DRX of the cell e corresponding to the 2 bits.

It may be understood that the cell e may be configured with the DTX or the DRX separately, or may be configured with both the DTX and the DRX. In a possible configuration manner, $N_e = 4$, where the first 2 bits indicate DTX activation/deactivation of the cell e, and the last 2 bits indicate DRX activation/deactivation of the cell e. In another possible configuration manner, $N_e = 2$, where a 1st bit indicates DTX activation/deactivation of the cell e, and a 2nd bit indicates DRX activation/deactivation of the cell e. For a specific indication manner of DTX or DRX activation/deactivation, refer to the foregoing descriptions. Details are not described herein again.

It should be understood that the foregoing mainly describes a data structure and a usage manner of the target indication information. When the communication method provided in this application further relates to the first indication information or the second indication information described above, data structures and usage manners of the first indication information and the second indication information may be similar. Details are not listed in this application.

In this embodiment of this application, the network device sends the target indication information only in a target time period in active time of a discontinuous transmission of a cell, and the terminal device receives the target indication information only in the target time period, and further activates/deactivates the discontinuous transmission of the cell based on the target indication information. In this manner, a quantity of transmissions of information indicating activation/deactivation of the discontinuous transmission can be significantly reduced, thereby effectively reducing power consumption of a communication system.

Embodiment 2

To resolve the foregoing problem, this application provides a communication method. In the communication method, a network device and a terminal device transmit, in a target time period in each preset cycle, target indication information indicating activation/deactivation of a first discontinuous transmission of a first cell, and the preset cycle is different from a periodicity indicated by a search space associated with the target indication information, and/or the target time period is different from a detection occasion indicated by a search space and a control resource set (namely, a CORESET) associated with the target indication information. According to the communication method, a quantity of times of exchanging the target indication information can be reduced, and power consumption generated when the first discontinuous transmission is activated/deactivated can be reduced, thereby reducing power consumption of the network device and the terminal device (that is, power consumption of a communication system).

Refer to FIG. 22. FIG. 22 is a schematic flowchart of another communication method according to this application. The method is applicable to the network device and the terminal device described above. As shown in FIG. 22, the method may include the following steps.

S221: The network device determines target indication information.

In some feasible implementations, when determining that the network device needs to send the target indication information to the terminal device, the network device may determine, based on information such as a current load status and a usage status of the first discontinuous transmission, to activate/deactivate the first discontinuous transmission, and generate, based on a determining result, the target indication information that can indicate the terminal device to activate/deactivate the first discontinuous transmission. Herein, the first discontinuous transmission may be a DTX, or may be a DRX.

It should be understood that the foregoing process of determining the target indication information by the network device corresponds to an application scenario in which only one first discontinuous transmission is configured for the first cell of the terminal device, or corresponds to an application scenario in which only one DTX or one DRX is configured for the first cell of the terminal device. This is an application scenario 1 provided in this application. In actual use, the communication method provided in this application is further applicable to other application scenarios. The following further separately describes, with reference to the other application scenarios, an operation of determining the target indication information by the network device.

Application scenario 2: One DTX and one DRX are configured for the first cell.

In an optional implementation, when both the DTX and the DRX are configured for the first cell, the network device may determine, based on a current load status, a usage status of the DTX of the first cell, and a usage status of the DRX of the first cell, to activate/deactivate the DTX and the DRX of the first cell, and further generate, based on a determining result, the target indication information that can indicate the terminal device to activate/deactivate the DTX and the DRX of the first cell.

In another optional implementation, when both the DTX and the DRX are configured for the first cell, the network device may determine, based on information such as a current load status and a usage status of the DTX of the first cell, to activate/deactivate the DTX of the first cell, and further generate, based on a determining result, the target indication information that can indicate the terminal device to activate/deactivate the DTX of the first cell. In addition, the network device may further determine, based on information such as the current load status and a usage status of the DRX of the first cell, to activate/deactivate the DRX of the first cell, and further generate, based on a determining result, first indication information that can indicate the terminal device to activate/deactivate the DRX of the first cell.

It should be understood that information formats of the target indication information and the first indication information may be the same or may be different. This is not specifically limited in this application.

Application scenario 3: The first discontinuous transmission is a first DTX, and at least one second DTX is further configured for the first cell.

In specific implementation, the network device may determine, based on a current load status and usage statuses of the first DTX and each second DTX of the first cell, to activate/deactivate the first DTX and each second DTX, and generate, based on a determining result, target indication information indicating activation/deactivation of the first DTX and each second DTX. It should be understood that when a plurality of DTXs are configured for the first cell, only one DTX is activated at a same moment, and all remaining DTXs are deactivated.

Application scenario 4: The first discontinuous transmission is a first DRX, and at least one second DRX is further configured for the first cell.

In specific implementation, the network device may determine, based on a current load status and a usage status of the first DRX of the first cell and a usage status of each second DRX of the first cell, to activate/deactivate the first DRX and each second DRX, and generate, based on a determining result, target indication information indicating activation/deactivation of the first DRX and each second DRX. It should be understood that when a plurality of DRXs are configured for the first cell, only one DRX is activated at a same moment, and all remaining DRXs are deactivated.

Application scenario 5: A second discontinuous transmission is configured for each of at least one second cell of the terminal device, and the second discontinuous transmission is a DTX or a DRX.

In an optional implementation, when the first discontinuous transmission is configured for the first cell of the terminal device and the second discontinuous transmission is configured for each of the at least one second cell, the network device may determine, based on a current load status, a usage status of the first discontinuous transmission of the first cell, and a usage status of the second discontinuous transmission of each of the at least one second cell, to indicate to activate/deactivate the first discontinuous transmission and each second discontinuous transmission, and generate, based on a determining result, target indication information indicating activation/deactivation of the first discontinuous transmission and the second discontinuous transmission of each second cell. In other words, the target indication information determined by the network device indicates to activate/deactivate the first discontinuous transmission, and may also indicate to activate/deactivate any second cell (which is assumed as a second cell i herein) in the at least one second cell.

In another optional implementation, when the first discontinuous transmission is configured for the first cell of the terminal device and the second discontinuous transmission is configured for each of the at least one second cell, the network device may determine, based on a current load status and a usage status of the first discontinuous transmission of the first cell, to activate/deactivate the first discontinuous transmission, and generate the target indication information based on a determining result. In addition, the network device may further determine, based on the current load status and a usage status of the second discontinuous transmission of each second cell, to activate/deactivate each second discontinuous transmission, and generate, based on a determining result, at least one piece of second indication information separately indicating activation/deactivation of the second discontinuous transmission of each second cell. In other words, the network device not only needs to determine the target indication information, but also needs to determine the second indication information indicating to activate/deactivate a second discontinuous transmission of any second cell i.

It should be understood that information formats of the target indication information and the second indication information may be the same or may be different. This is not specifically limited in this application.

S222: The network device sends the target indication information to the terminal device in a target time period in a preset cycle.

In some feasible implementations, after determining the target indication information, the network device sends the target indication information in the target time period in the preset cycle. The preset cycle is different from a periodicity indicated by a search space associated with the target indication information, and/or the target time period is different from a detection occasion in a periodicity indicated by a search space and a control resource set that are associated with the target indication information.

It should be noted that, when the target indication information includes multicast DCI, the periodicity of the search space associated with the target indication information is a periodicity configuration indicated by a parameter monitoringSlotPeriodicityAndOffset in a search space configuration corresponding to the multicast DCI. Specifically, the parameter indicates a periodicity length and a start slot offset of the periodicity. That the preset cycle is different from the periodicity indicated by the search space associated with the target indication information means that a cycle configuration corresponding to the preset cycle is independent of a periodicity configuration indicated by the search space corresponding to the multicast DCI. Alternatively, a cycle length of the preset cycle is different from the periodicity length indicated by the parameter monitoringSlotPeriodicity AndOffset in the search space configuration associated with the multicast DCI, and/or a cycle start offset of the preset cycle is different from a periodicity start offset indicated by the parameter monitoringSlotPeriodicity AndOffset in the search space configuration associated with the multicast DCI.

The detection occasion in the periodicity of the search space associated with the target indication information in this application is a detection occasion determined by one or more of parameters such as duration and monitoringSlotPeriodicityAndOffset in the search space configuration corresponding to the multicast DCI and one or more of parameters such as duration and frequencyDomainResources in the control resource set configuration. That the target time period is different from the detection occasion in the search space and the CORESET that are associated with the target indication information means that the target time period corresponding to the preset cycle is independent of the detection occasion indicated by the search space and the CORESET corresponding to the multicast DCI. In other words, the target time period is different from a detection occasion determined by one or more of parameters such as duration and monitoringSlotPeriodicity AndOffset in the search space associated with the multicast DCI and one or more of parameters such as duration and frequencyDomainResources in the CORESET.

The following further describes, with reference to the foregoing application scenario 1 to application scenario 5, a process of sending the target indication information by the network device.

Application scenario 1: One DTX or one DRX is configured for the first cell of the terminal device.

When the DTX is configured for the first cell, after determining the target indication information indicating to activate/deactivate the DTX of the first cell, the network device may send the target indication information to the terminal device in the target time period in the preset cycle.

When the DRX is configured for the first cell, after determining the target indication information indicating to activate/deactivate the DRX of the first cell, the network device may send the target indication information to the terminal device in the target time period in the preset cycle.

It should be understood that, in this application scenario, in the target time period, the network device sends the target indication information to the terminal device once or for a plurality of times, or the network device sends one or more pieces of target indication information to the terminal device in the target time period.

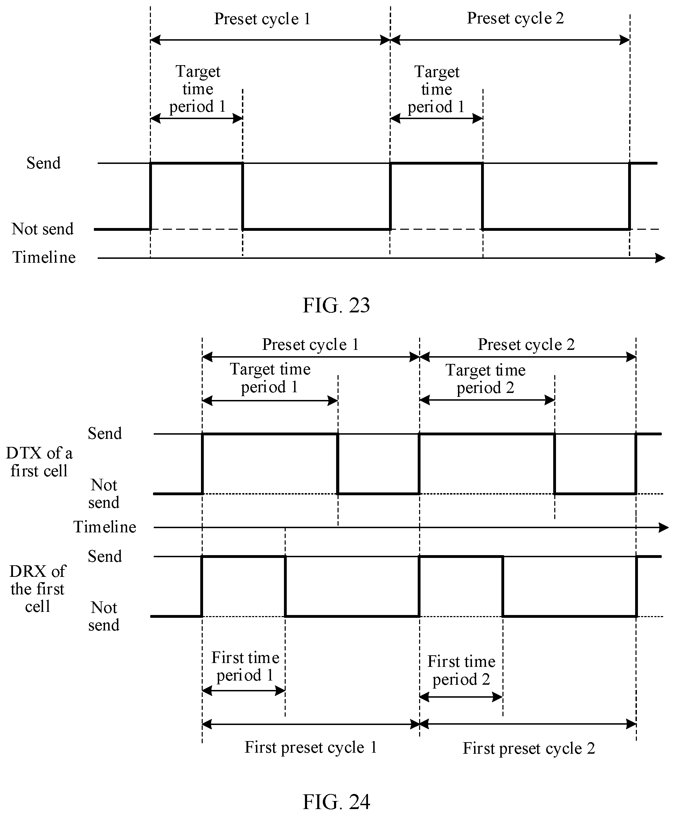

For example, refer to FIG. 23. FIG. 23 is another diagram of a transmission time period of the target indication information according to this application. It should be understood that, FIG. 23 shows only an example of two preset cycles, which are respectively a preset cycle 1 and a preset cycle 2. Other preset cycles are similar to the two preset cycles, and are not enumerated again. As shown in FIG. 23, the preset cycle 1 and the preset cycle 2 respectively include a target time period 1 and a target time period 2. In addition, a location of the target time period 1 in the preset cycle 1 is consistent with a location of the target time period 2 in the preset cycle 2. After determining the target indication information, the network device may send the target indication information to the terminal device in the target time period 1. Alternatively, the network may send the target indication information to the terminal device in the target time period 2. Herein, the target indication information sent by the network device in the target time period 2 may be regenerated by the network device, or the target indication information sent by the network device in the target time period 1 may be directly used. This is not specifically limited in this application.

It should be understood that the network device sends one or more pieces of same target indication information to the terminal device in one target time period.

Application scenario 2: Both the DTX and the DRX are configured for the first cell.

In a first optional implementation, the first discontinuous transmission is a DTX, and a DRX is further configured for the first cell. After determining the target indication information that can indicate to activate/deactivate the DTX and the DRX of the first cell, the network device may send the target indication information to the terminal device in the target time period of the preset cycle.

Further, the active time of the DTX of the first cell may be shorter than or equal to the active time of the DRX of the first cell, and/or the cycle of the DTX of the first cell may be shorter than or equal to the cycle of the DRX of the first cell.

In a second optional implementation, the first discontinuous transmission is a DRX, and a DTX is further configured for the first cell. After determining the target indication information that can indicate to activate/deactivate the DTX and the DRX of the first cell, the network device may further send the target indication information in the target time period of the preset cycle.

Further, the active time of the DRX of the first cell needs to be shorter than or equal to the active time of the DTX of the first cell, and/or the cycle of the DRX of the first cell needs to be shorter than or equal to the cycle of the DTX of the first cell.

In a third optional implementation, the first discontinuous transmission is a DTX, and a DRX is further configured for the first cell. The target indication information determined by the network device can further indicate to activate/deactivate the DRX of the first cell. The preset cycle is a DTX cycle preset for the first cell, and a similar first preset cycle is preset for the DRX of the first cell.

The network device may not only send the target indication information in the target time period in the preset cycle corresponding to the DTX of the first cell, but also send the target indication information in the first time period in the first preset cycle corresponding to the DRX of the first cell.

For example, refer to FIG. 24. FIG. 24 is another diagram of a transmission time period of the target indication information according to this application. It should be understood that FIG. 24 shows only an example of two preset cycles of the DTX of the first cell and two preset cycles of the DRX of the first cell. Other cycles of the DTX of the first cell and the DRX of the first cell are similar to the cycles, and are not enumerated again. As shown in FIG. 24, when both the DTX and the DRX are configured for the first cell, the network device sends, in the target time period in the preset cycles pre-configured for the DTX of the first cell, the target indication information indicating to activate/deactivate the first DTX. For example, the network device sends target indication information in a target time period 1 in a preset cycle 1, and the network device also sends target indication information in a target time period 2 in a preset cycle 2 of the DTX of the first cell. It should be understood that the target indication information sent by the network device in the target time period 1 and the target time period 2 may be the same, or the target indication information sent by the network device in the target time period 2 may be regenerated by the network device. Further, the network device further sends, in a first time period in a first preset cycle pre-configured for the DRX of the first cell, the target indication information that can further indicate to activate/deactivate the DRX of the first cell. For example, the network device sends target indication information in a first time period 1 in a first preset cycle 1 of the DRX of the first cell, and the network device also sends target indication information in a first time period 2 in a first preset cycle 2 of the DRX of the first cell. Similarly, the target indication information sent by the network device in the first time period 1 and the second time period 2 may be the same, or the target indication information sent by the network device in the second time period 2 may be regenerated by the network device.

Optionally, for a plurality of target time periods corresponding to the DTX of the first cell and a plurality of first time periods corresponding to the DRX of the first cell, the plurality of target time periods may be consistent with the plurality of first time periods. It should be understood that, in this embodiment of this application, the two time periods are consistent, in other words, start time units and end time units of the two time periods are the same. Alternatively, for a plurality of target time periods corresponding to the DTX of the first cell and a plurality of first time periods corresponding to the DRX of the first cell, a part of target time periods in the plurality of target time periods may be the same as a part of first time periods in the plurality of first time periods. In other words, some target time periods corresponding to the DTX of the first cell may be consistent with some first time periods corresponding to the DRX of the first cell.

In a fourth optional implementation, the first discontinuous transmission is a DTX, and a DRX is further configured for the first cell. After determining the target indication information that can indicate to activate/deactivate the DTX of the first cell, the network device may further determine first indication information that can indicate to activate/deactivate the DRX of the first cell. The preset cycle is a DTX cycle preset for the first cell, and a similar first preset cycle is preset for the DRX of the first cell. The network device may not only send the target indication information in the target time period in the preset cycle corresponding to the DTX of the first cell, but also send the first indication information in the first time period in the first preset cycle corresponding to the DRX of the first cell.

As shown in FIG. 24, when both the DTX and the DRX are configured for the first cell, the network device may send, in the target time period 1 and target time period 2 that correspond to the DTX of the first cell, the target indication information indicating to activate/deactivate the first DTX. The network device may further send the first indication information in the first time period 1 and the first time period 2 that correspond to the DRX in the first cell.

Application scenario 3: The first discontinuous transmission is a first DTX, and at least one second DTX is further configured for the first cell.

In this application scenario, the target indication information may indicate to activate/deactivate the first DTX and each second DTX.

In specific implementation, after determining the target indication information, the network device may send the target indication information in the target time period in the preset cycle.

Application scenario 4: The first discontinuous transmission is a first DRX, and at least one second DRX is further configured for the first cell.

In this application scenario, the target indication information may indicate to activate/deactivate the first DRX and each second DRX.

In specific implementation, after determining the target indication information, the network device may send the target indication information in the target time period in the preset cycle.

Application scenario 5: A second discontinuous transmission is configured for each of at least one second cell of the terminal device.

In a first optional implementation, the target indication information indicates activation/deactivation of the first discontinuous transmission and the second discontinuous transmission of each of the at least one second cell. After determining the target indication information, the network device may send the target indication information in the target time period in the preset cycle. The second discontinuous transmission may be a DTX or a DRX.

Further, in the foregoing case, the active time of the first discontinuous transmission may be shorter than or equal to the active time of the second discontinuous transmission of each second cell. Alternatively, a cycle of the first discontinuous transmission may be shorter than or equal to a cycle of the second discontinuous transmission of each second cell. Alternatively, the active time of the first discontinuous transmission may be shorter than or equal to active time of the second discontinuous transmission of each second cell, and a cycle of the first discontinuous transmission may be shorter than or equal to a cycle of the second discontinuous transmission of each second cell.

In a second optional implementation, the target indication information indicates activation/deactivation of the first discontinuous transmission and the second discontinuous transmission of each of the at least one second cell. The preset cycle is a cycle preset for the first cell, and a similar second preset cycle is also preset for any second cell i in the at least one second cell. The network device sends the target indication information in the target time period in the preset cycle corresponding to the first cell. The network device further sends the target indication information in a second time period in the second preset cycle corresponding to any second cell i.

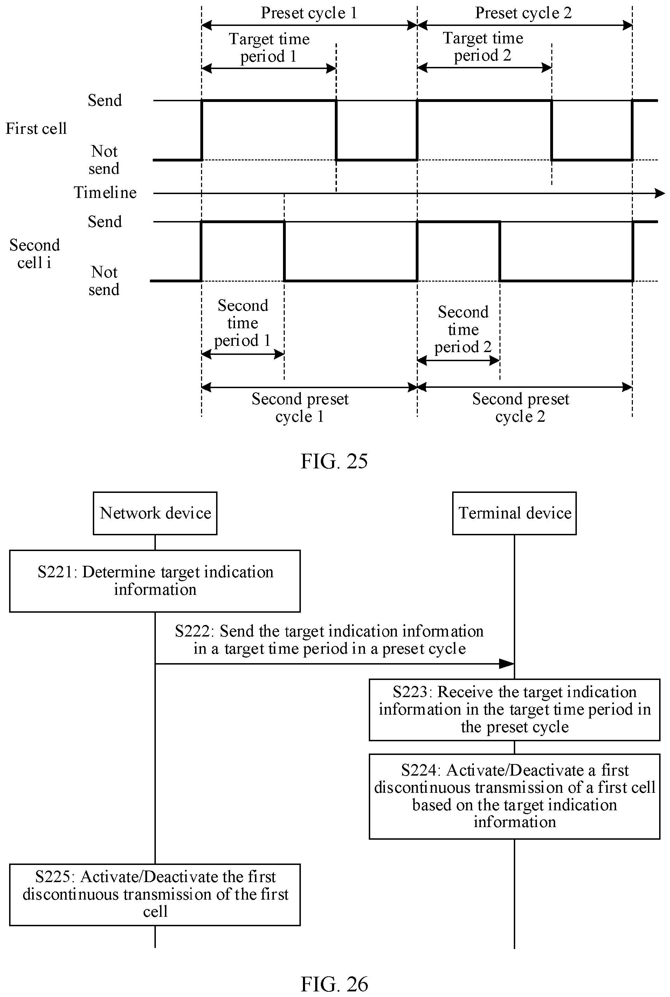

For example, refer to FIG. 25. FIG. 25 is another diagram of a transmission time period of the target indication information according to this application. The first cell and any second cell i in the at least one second cell are used as an example. It should be understood that FIG. 25 shows only an example of two cycles of the first cell and two cycles the second cell i. Other cycles of the first cell and the second cell i are similar to the cycles, and are not enumerated again. As shown in FIG. 25, a preset cycle 1 and a preset cycle 2 of a first cell respectively include a target time period 1 and a target time period 2, and a second preset cycle 1 and a second preset cycle 2 of any second cell i respectively include a second time period 1 and a second time period 2. The network device sends target indication information in the target time period 1, and the network device also sends target indication information in the target time period 2. Similarly, the network device sends target indication information in the second time period 1, and the network device sends target indication information in the second time period 2. It should be noted that the target indication information sent by the network device in the target time period 1 and the target time period 2 may be the same, or the target indication information sent by the network device in the target time period 2 may be re-determined by the network device. The target indication information sent by the network device in the second time period 1 and the second time period 2 is similar.

Optionally, each target time period corresponding to the first cell is consistent with each second time period corresponding to each of the at least one second cell. Alternatively, a part of target time periods corresponding to the first cell are consistent with a part of second time periods corresponding to each of the at least one second cell.

In a third optional implementation, the network device determines one piece of target indication information indicating to activate/deactivate the first discontinuous transmission and at least one piece of second indication information respectively indicating to activate/deactivate the at least one second discontinuous transmission. The preset cycle is a cycle preset for the first cell, and a similar second preset cycle is also preset for any second cell i in the at least one second cell.

In this case, the network device sends the target indication information in the target time period in the preset cycle of the first cell. The network device further sends each piece of second indication information in a second time period in a second preset cycle corresponding to each second cell.

For example, still refer to FIG. 25. The network device sends target indication information in the target time period 1, and the network device also sends target indication information in the target time period 2. In addition, the network device sends second indication information in the second time period 1, and also sends second indication information in the second time period 2. It should be noted that the target indication information sent by the network device in the target time period 1 and the target time period 2 may be the same, or the target indication information sent by the network device in the target time period 2 may be re-determined by the network device. The second indication information sent by the network device in the second time period 1 and the second time period 2 is similar.

It should be additionally noted that, in actual implementation, the network device may send the target indication information, the first indication information, or the second indication information to the terminal device by using multicast DCI or a MAC CE.

In some feasible implementations, the network device may send the target indication information, the first indication information, or the second indication information in a primary cell (primary cell, PCell), a primary secondary cell (primary secondary cell, PSCell), or a special cell (special cell, SpCell) of the network device.

In some feasible implementations, the network device may generate preset cycle configuration information corresponding to the preset cycle. The preset cycle configuration information includes at least a cycle length of the preset cycle, a start offset, and configuration information corresponding to the target time period. The configuration information corresponding to the target time period indicates a location of the target time period in the preset cycle. Further, the network device may send the preset cycle configuration information to the terminal device, so that the terminal device can determine, based on the preset cycle configuration information, the preset cycle and the target time period included in the preset cycle.

S223: The terminal device receives the target indication information in the target time period in the preset cycle.

In some feasible implementations, the terminal device may receive, in the target time period in the preset cycle, the target indication information sent by the network device.

The following further describes, with reference to the foregoing application scenario 1 to application scenario 5, a process of receiving the target indication information by the terminal device.

Application scenario 1: Only one DTX or one DRX is configured for the first cell of the terminal device.

When the DTX is configured for the first cell, the terminal device may receive, in the target time period in the preset cycle, the target indication information indicating to activate/deactivate the DTX of the first cell. When the DRX is configured for the first cell, the terminal device may receive, in the target time period in the preset cycle, the target indication information indicating to activate/deactivate the DRX of the first cell.

It should be understood that the terminal device may receive one or more pieces of target indication information in the target time period. When there are a plurality of pieces of target indication information, content of the plurality of pieces of target indication information needs to be completely consistent.

For example, as shown in FIG. 23, the terminal device receives, in the target time period 1, the target indication information sent by the network device. Similarly, the terminal device also receives, in the target time period 2, the target indication information sent by the network device.

Application scenario 2: Both the DTX and the DRX are configured for the first cell.

In a first optional implementation, the first discontinuous transmission is a DTX, and a DRX is further configured for the first cell. The terminal device receives, in the target time period in the preset cycle, the target indication information that can indicate to activate/deactivate both the DTX and the DRX of the first cell. For example, as shown in FIG. 24, the terminal device may receive, in the target time period 1, the target indication information indicating to activate/deactivate both the DTX and the DRX of the first cell, or the terminal device may receive, in the target time period 2, the target indication information indicating to activate/deactivate both the DTX and the DRX of the first cell.

Further, the active time of the DTX of the first cell may be shorter than or equal to the active time of the DRX of the first cell, and/or the cycle of the DTX of the first cell may be shorter than or equal to the cycle of the DRX of the first cell.

In a second optional implementation, the first discontinuous transmission is a DRX, and a DTX is further configured for the first cell. The terminal device receives, in the target time period in the preset cycle, the target indication information that can indicate to activate/deactivate both the DTX and the DRX of the first cell. For example, as shown in FIG. 24, the terminal device may receive, in the target time period 1, the target indication information indicating to activate/deactivate both the DTX and the DRX of the first cell, or the terminal device may receive, in the target time period 2, the target indication information indicating to activate/deactivate both the DTX and the DRX of the first cell.

Further, the active time of the DRX of the first cell may be shorter than or equal to the active time of the DTX of the first cell, and/or the cycle of the DRX of the first cell may be shorter than or equal to the cycle of the DTX of the first cell.

In a third optional implementation, the first discontinuous transmission is a DTX, and a DRX is further configured for the first cell. The target indication information determined by the network device can further indicate to activate/-deactivate the DRX of the first cell. The network device may send the target indication information in the target time period in the preset cycle corresponding to the DTX of the first cell, and may send the target indication information in the first time period in the first preset cycle corresponding to the DRX of the first cell.

For example, as shown in FIG. 24, when both the DTX and the DRX are configured for the first cell, the terminal device separately receives, in the target time period 1 and the target time period 2, the target indication information sent by the network device. Further, the terminal device also separately receives, in the first time period 1 and the second time period 2, the target indication information sent by the network device.

Optionally, for a plurality of target time periods and a plurality of first time periods, the plurality of target time periods may be consistent with the plurality of first time periods. Alternatively, a part of target time periods in the plurality of target time periods may be the same as a part of time periods in the plurality of first time periods.

In a fourth optional implementation, the first discontinuous transmission is a DTX, and a DRX is further configured for the first cell. The terminal device may not only receive the target indication information in the target time period in the preset cycle corresponding to the DTX of the first cell, but also receive the first indication information in the first time period in the first preset cycle pre-configured for the DRX of the first cell.

As shown in FIG. 24, when both the DTX and the DRX are configured for the first cell, the terminal device may receive, in the target time period 1 and the target time period 2, the target indication information sent by the network device. The terminal device may further receive, in the first time period 1 and the second time period 2, the first indication information sent by the network device.

Application scenario 3: The first discontinuous transmission is a first DTX, and at least one second DTX is further configured for the first cell.

In this application scenario, the target indication information may indicate to activate/deactivate the first DTX and each second DTX. In specific implementation, the terminal device may receive the target indication information in the target time period in the preset cycle.

Application scenario 4: The first discontinuous transmission is a first DRX, and at least one second DRX is further configured for the first cell.

In this application scenario, the target indication information may indicate to activate/deactivate the first DRX and each second DRX. In specific implementation, the terminal device may receive the target indication information in the target time period in the preset cycle.

Application scenario 5: A second discontinuous transmission is configured for each of at least one second cell of the terminal device.

In a first optional implementation, the target indication information indicates activation/deactivation of the first discontinuous transmission and the second discontinuous transmission of each of the at least one second cell. The terminal device may receive, in the target time period in the preset cycle, the target indication information sent by the network device. The second discontinuous transmission may be a DTX or a DRX.

Further, in the foregoing case, the active time of the first discontinuous transmission may be shorter than or equal to the active time of the second discontinuous transmission of each second cell. Alternatively, a cycle of the first discontinuous transmission may be shorter than or equal to a cycle of the second discontinuous transmission of each second cell. Alternatively, the active time of the first discontinuous transmission may be shorter than or equal to active time of the second discontinuous transmission of each second cell, and a cycle of the first discontinuous transmission may be shorter than or equal to a cycle of the second discontinuous transmission of each second cell.

In a second optional implementation, the target indication information indicates activation/deactivation of the first discontinuous transmission and the second discontinuous transmission of each of the at least one second cell. The preset cycle is a cycle preset for the first cell, and a similar second preset cycle is also preset for any second cell i in the at least one second cell.

The terminal device not only receives, in the target time period in the preset cycle, the target indication information sent by the network device, but also receives, in the second time period in the second preset cycle, the target indication information sent by the network device. Alternatively, the terminal device further receives, in the second time period in the second preset cycle pre-configured in any second cell i, the target indication information sent by the network device. For example, as shown in FIG. 25, the terminal device receives the target indication information in the target time period 1 and the target time period 2. Similarly, the terminal device receives the target indication information in the second time period 1 and the second time period 2.

Optionally, each target time period corresponding to the first cell is consistent with each second time period corresponding to any second cell i in the at least one second cell. Alternatively, a part of target time periods corresponding to the first cell are consistent with a part of second time period corresponding to any second cell i in the at least one second cell.

In a third optional implementation, the network device determines one piece of target indication information indicating to activate/deactivate the first discontinuous transmission and at least one piece of second indication information respectively indicating to activate/deactivate the at least one second discontinuous transmission. In this case, the terminal device not only receives, in the target time period in the preset cycle pre-configured for the first cell, the target indication information sent by the network device, but also receives, in the second time period in the second preset cycle pre-configured for each second cell, each piece of second indication information sent by the network device. In other words, the terminal device further receives, in the second time period in the second preset cycle pre-configured for any second cell i, the second indication information indicating to activate/deactivate the second discontinuous transmission of the second cell i. For example, as shown in FIG. 25, the terminal device receives the target indication information in the target time period 1 and the target time period 2, and further receives the second indication information in the second time period 1 and the second time period 2.

It should be understood that the terminal device may receive the target indication information, the first indication information, or the second indication information by detecting multicast DCI or a MAC CE sent by the network device.

In some feasible implementations, when the network device sends a plurality of pieces of target indication information in one cycle of a discontinuous transmission of any cell (which is assumed as a cell j herein) of the terminal device, the plurality of pieces of target indication information all indicate to activate the discontinuous transmission of the cell j, or the plurality of pieces of target indication information all indicate to deactivate the discontinuous transmission of the cell j. It may also be understood as that, when the network device sends a plurality of pieces of target indication information in one cycle of a discontinuous transmission of any cell j, indication results of the plurality of pieces of target indication information are not expected to be inconsistent. To be specific, a part of the plurality of pieces of target indication information are not expected to indicate to activate the discontinuous transmission of the cell j, and a remaining part of target indication information indicates to deactivate the discontinuous transmission of the cell j. This implementation can ensure that indication results of all target indication information received by the terminal device in a cycle of each discontinuous transmission of any cell j are consistent, and avoid logic confusion caused by inconsistent indication results of a plurality of pieces of target indication information.

In some feasible implementations, target indication information received by the terminal device in inactive time of the second discontinuous transmission of any second cell i in the at least one second cell is not for activating/deactivating the second discontinuous transmission of the second cell i.

In some feasible implementations, the terminal device may receive the target indication information, the first indication information, or the second indication information in a primary cell, a primary secondary cell, or a special cell of the terminal device.

In some feasible implementations, the terminal device may receive the preset cycle configuration information that corresponds to a preset cycle and that is sent by the network device. The preset cycle configuration information includes at least a cycle length of the preset cycle, a start offset, and configuration information corresponding to the target time period. The configuration information corresponding to the target time period indicates a location of the target time period in the preset cycle. Further, the terminal device may determine the preset cycle based on the cycle length and the start offset of the preset cycle. For example, assuming that the cycle length of the preset cycle is 80 ms, and the start offset is 20 ms, the terminal device may determine that a start moment of the preset cycle is 20 ms, 100 ms, 180 ms, 260 ms, or the like. Further, the terminal device may further determine, based on the configuration information of the target time period, the target time period included in each preset cycle. Optionally, the configuration information of the target time period may include one or more configuration parameters. The terminal device may determine a start time unit and an end time unit of the target time period based on the one or more configuration parameters. For example, the configuration information of the target time period includes a first configuration parameter. The first configuration parameter indicates an offset value between an end moment of the target time period and a cycle start moment, for example, 20 ms. In addition, s start moment of the target time period is consistent with a cycle start moment. The terminal device may determine, based on the first configuration parameter, that first 20 ms of each preset cycle is the target time period.

S224: The terminal device activates/deactivates the first discontinuous transmission of the first cell based on the target indication information.

In some feasible implementations, after obtaining the target indication information, the terminal device may further activate/deactivate the first discontinuous transmission of the first cell based on the target indication information. For ease of understanding, the following further describes behavior of the terminal device with reference to the foregoing application scenario 1 to application scenario 5.

Application scenario 1: Only one DTX or one DRX is configured for the first cell of the terminal device.

When the first discontinuous transmission is a DTX or a DRX, the terminal device may activate/deactivate the first discontinuous transmission based on the target indication information after receiving the target indication information.

Optionally, the terminal device may activate/deactivate the first continuous transmission in a first target time unit based on the target indication information. The first target time unit may be a next time unit of an end time unit of the active time of the first discontinuous transmission. Alternatively, the first target time unit may be an $X^{th}$ time unit after an end time unit of the target time period defined based on the first discontinuous transmission. Herein, X is a positive integer greater than or equal to 1. It may also be understood as that the target indication information received by the terminal device may take effect in the next time unit of the end time unit of the active time of the first discontinuous transmission, or may take effect in the $X^{th}$ time unit after the end time unit of the target time period defined by the first discontinuous transmission.

Application scenario 2: Both the DTX and the DRX are configured for the first cell.

In a first optional implementation, the first discontinuous transmission is a DTX, and a DRX is further configured for the first cell. After receiving the target indication information, the terminal device may not only activate/deactivate the DTX of the first cell based on the target indication information, but also activate/deactivate the DRX of the first cell based on the target indication information.

Further, the target indication information received by the terminal device may take effect in the next time unit of the end time unit of the active time of the first DTX, or may take effect in the $X^{th}$ time unit after the end time unit of the target time period defined by the first DTX.

In a second optional implementation, the first discontinuous transmission is a DRX, and a DTX is further configured for the first cell. After receiving the target indication information, the terminal device may not only activate/-deactivate the DTX of the first cell based on the target indication information, but also activate/deactivate the DRX of the first cell based on the target indication information.

Further, the target indication information received by the terminal device may take effect in the next time unit of the end time unit of the active time of the first DRX, or may take effect in the $X^{th}$ time unit after the end time unit of the target time period defined by the first DRX.

In a third optional implementation, the first discontinuous transmission is a DTX, and a DRX is further configured for the first cell. The terminal device may activate/deactivate the DTX of the first cell based on the target indication information received by the terminal device in the target time period. In addition, the terminal device may further activate/deactivate the DRX of the first cell based on the target indication information received by the terminal device in the first time period.

Further, the target indication information received by the terminal device in the target time period may take effect in the next time unit of the end time unit of the active time of the first DTX, or may take effect in the $X^{th}$ time unit after the end time unit of the target time period defined by the first DTX. The target indication information received by the terminal device in the first time period may take effect in the next time unit of the end time unit of the active time of the first DRX, or may take effect in the $X^{th}$ time unit after the end time unit of the first time period defined by the first DRX.

In a fourth optional implementation, the first discontinuous transmission is a DTX, and a DRX is further configured for the first cell. The terminal device may not only activate/deactivate the DTX of the first cell based on the target indication information received by the terminal device in the target time period, but also activate/deactivate the DRX of the first cell based on the first indication information received by the terminal device in the first time period.

Further, the target indication information received by the terminal device in the target time period may take effect in the next time unit of the end time unit of the active time of the first DTX, or may take effect in the $X^{th}$ time unit after the end time unit of the target time period defined by the first DTX. The first indication information received by the terminal device in the first time period may take effect in the next time unit of the end time unit of the active time of the first DRX, or may take effect in the $X^{th}$ time unit after the end time unit of the first time period defined by the first DRX.

Application scenario 3: The first discontinuous transmission is a first DTX, and at least one second DTX is further configured for the first cell.

In this application scenario, after receiving the target indication information, the terminal device may not only activate/deactivate the first DTX based on the target indication information, but also activate/deactivate, based on the target indication information, the at least one second DTX configured for the first cell.

Further, the target indication information received by the terminal device in the target time period may take effect in the next time unit of the end time unit of the active time of the first DTX, or may take effect in the $X^{th}$ time unit after the end time unit of the target time period.

Application scenario 4: The first discontinuous transmission is a first DRX, and at least one second DRX is further configured for the first cell.

In this application scenario, after receiving the target indication information, the terminal device may not only activate/deactivate the first DRX based on the target indication information, but also activate/deactivate, based on the target indication information, the at least one second DRX configured for the first cell.

Further, the target indication information received by the terminal device in the target time period may take effect in the next time unit of the end time unit of the active time of the first DRX, or may take effect in the $X^{th}$ time unit after the end time unit of the target time period.

Application scenario 5: A second discontinuous transmission is configured for each of at least one second cell of the terminal device.

In a first optional implementation, the target indication information indicates activation/deactivation of the first discontinuous transmission and the second discontinuous transmission of each of the at least one second cell, and a detection occasion of the target indication information is defined by the first discontinuous transmission of the first cell. In this case, the terminal device may not only activate/deactivate the first discontinuous transmission based on the target indication information, but also activate/deactivate, based on the target indication information, the second discontinuous transmission configured for each second cell.

Optionally, for the first discontinuous transmission and the second discontinuous transmission of each of the at least one second cell, the target indication information may take effect in the next time unit of the end time unit of the active time of the first discontinuous transmission, or may take effect in the $X^{th}$ time unit after the end time unit of the target time period in the preset cycle.

Optionally, for the first discontinuous transmission, the target indication information may take effect in the next time unit of the end time unit of the active time of the first discontinuous transmission, or may take effect in the $X^{th}$ time unit after the end time unit of the target time period defined by the first discontinuous transmission. For the second discontinuous transmission of the second cell i, if the terminal device determines that the terminal device receives the target indication information for the first time in the cycle of the second discontinuous transmission of the second cell i, and a time unit in which the target indication information is received is in the inactive time of the second discontinuous transmission of the second cell i, the second discontinuous transmission of the second cell i may be activated/deactivated in the second target time unit based on the target indication information. The second target time unit is a $Y^{th}$ time unit after the time unit in which the terminal device receives the target indication information. Y is a positive integer greater than or equal to 1.

In a second optional implementation, the target indication information indicates activation/deactivation of the first discontinuous transmission and the second discontinuous transmission of each of the at least one second cell, but a detection occasion of the target indication information is separately defined by the first discontinuous transmission of the first cell and the second discontinuous transmission of each second cell. In this case, the terminal device may activate/deactivate the first discontinuous transmission based on the target indication information received by the terminal device in the target time period, or may activate/deactivate, based on the target indication information received by the terminal device in the fourth time period defined by each second discontinuous transmission, the second discontinuous transmission configured for each second cell.

Optionally, for the first discontinuous transmission, the target indication information may take effect in the next time unit of the end time unit of the active time of the first discontinuous transmission, or may take effect in the $X^{th}$ time unit after the end time unit of the target time period. For each second discontinuous transmission, the target indication information may take effect in the next time unit of the end time unit of the active time of each second discontinuous transmission, or may take effect in the $X^{th}$ time unit after the end time unit of the second time period.

In a third optional implementation, the network device determines one piece of target indication information indicating to activate/deactivate the first discontinuous transmission and at least one piece of second indication information respectively indicating to activate/deactivate the at least one second discontinuous transmission. In this case, the terminal device not only activates/deactivates the first discontinuous transmission based on the target indication information, but also activates/deactivates each second discontinuous transmission based on the second indication information corresponding to each second discontinuous transmission.

Further, for the first discontinuous transmission, the target indication information may take effect in the next time unit of the end time unit of the active time of the first discontinuous transmission, or may take effect in the $X^{th}$ time unit after the end time unit of the target time period. For each second discontinuous transmission, the second indication information may take effect in the next time unit of the end time unit of the active time of each second discontinuous transmission, or may take effect in the $X^{th}$ time unit after the end time unit of the second time period.

In some feasible implementations, when the terminal device receives a plurality of pieces of target indication information in one cycle of a discontinuous transmission of any cell j of the terminal device, the plurality of pieces of target indication information all indicate to activate the discontinuous transmission of the cell j, or the plurality of pieces of target indication information all indicate to deactivate the discontinuous transmission of the cell j. It may also be understood as that, when the terminal device receives a plurality of pieces of target indication information in one cycle of a discontinuous transmission of any cell j, the terminal device does not expect indication results of the plurality of pieces of target indication information to be inconsistent. To be specific, a part of the plurality of pieces of target indication information are not expected to indicate to activate the discontinuous transmission of the cell j, and a remaining part of target indication information indicates to deactivate the discontinuous transmission of the cell j. This implementation can ensure that indication results of all target indication information received by the terminal device in a cycle of each discontinuous transmission of any cell j are consistent, and avoid logic confusion caused by inconsistent indication results of a plurality of pieces of target indication information.

In some feasible implementations, target indication information received by the terminal device in inactive time of the second discontinuous transmission of any second cell i in the at least one second cell is not for activating/deactivating the second discontinuous transmission of the second cell i.

In some feasible implementations, if the terminal device determines that the target indication information is received for the first time in the cycle of the second discontinuous transmission of the second cell i, and a time unit in which the target indication information is received is in inactive time of the second discontinuous transmission of the second cell i, the terminal device activates/deactivates the second cell i in a second target time unit based on the target indication information. The second target time unit is a Y$^{th}$ time unit after the time unit in which the target indication information is received, and Y is a positive integer greater than or equal to 1.

In some feasible implementations, refer to FIG. 26. FIG. 26 is another schematic flowchart of another communication method according to this application. As shown in FIG. 26, the communication method may further include the following step.

S225: The network device activates/deactivates the first discontinuous transmission of the first cell.

For ease of understanding, the following further describes specific behavior of the network device with reference to the foregoing application scenario 1 to application scenario 5.

Application scenario 1: Only one DTX or one DRX is configured for the first cell of the terminal device.

When the first discontinuous transmission is a DTX or a DRX, after determining, based on information such as a current load status and a usage status of the first discontinuous transmission, to activate/deactivate the first discontinuous transmission, the network device may activate/deactivate the first discontinuous transmission based on a result determined by the network device.

Optionally, the network device may also activate/deactivate the first continuous transmission in the first target time unit described above.

Application scenario 2: Both the DTX and the DRX are configured for the first cell.

In a first optional implementation, the network device may activate/deactivate the DTX and the DRX of the first cell in the next time unit of the end time unit of the active time of the first DTX. Alternatively, the network device may activate the DTX and the DRX of the first cell in the X$^{th}$ time unit that is after the end time unit of the target time period in the preset cycle.

In a second optional implementation, the network device may activate/deactivate the DTX and the DRX of the first cell in the next time unit of the end time unit of the active time of the first DRX. Alternatively, the network device may activate/deactivate the DTX and the DRX of the first cell in the X$^{th}$ time unit that is after the end time unit of the target time period defined by the first DRX.

In a third optional implementation, the network device may activate/deactivate the DTX of the first cell in the next time unit of the end time unit of the active time of the first DTX, or may activate/deactivate the DTX of the first cell in the X$^{th}$ time unit after the end time unit of the target time period in the preset cycle, and the network device may activate/deactivate the DRX of the first cell in the next time unit of the end time unit of the active time of the first DRX, or may activate/deactivate the DRX of the first cell in the X$^{th}$ time unit after the end time unit of the first time period.

Application scenario 3: The first discontinuous transmission is a first DTX, and at least one second DTX is further configured for the first cell.

In this application scenario, the network device may activate/deactivate the first DTX and the at least one second DTX in the next time unit of the end time unit of the active time of the first DTX, or may activate/deactivate the first DTX and the at least one second DTX in the X$^{th}$ time unit after the end time unit of the target time period.

Application scenario 4: The first discontinuous transmission is a first DRX, and at least one second DRX is further configured for the first cell.

In this application scenario, the network device may activate/deactivate the first DRX and the at least one second DRX in the next time unit of the end time unit of the active time of the first DRX, or may activate/deactivate the first DRX and the at least one second DRX in the X$^{th}$ time unit after the end time unit of the target time period.

Application scenario 5: A second discontinuous transmission is configured for each of at least one second cell of the terminal device.

In a first optional implementation, for the first discontinuous transmission and the second discontinuous transmission of each of the at least one second cell, the network device may activate/deactivate the first discontinuous transmission and the second discontinuous transmission of each of the at least one second cell in the next time unit of the end time unit of the active time of the first discontinuous transmission.

Alternatively, the network device may activate/deactivate the first discontinuous transmission and the second discontinuous transmission of each of the at least one second cell in the X$^{th}$ time unit after the end time unit of the target time period.

Alternatively, the network device may activate/deactivate the first discontinuous transmission in the next time unit of the end time unit of the active time of the first discontinuous transmission, or in the X$^{th}$ time unit after the end time unit of the target time period. For the second discontinuous transmission of the second cell i, if the network device determines that the network device sends the target indication information for the first time in the cycle of the second discontinuous transmission of the second cell i, and a time unit in which the target indication information is sent is in the inactive time of the second discontinuous transmission of the second cell i, the second discontinuous transmission of the second cell i may be activated/deactivated in the second target time unit. The second target time unit is a $Y^{th}$ time unit after the time unit in which the terminal device receives the target indication information. Y is a positive integer greater than or equal to 1.

In a second optional implementation, the network device may activate/deactivate the first discontinuous transmission in the next time unit of the end time unit of the active time of the first discontinuous transmission, or in the $X^{th}$ time unit after the end time unit of the target time period. The network device may activate/deactivate each second discontinuous transmission in the next time unit of the end time unit of the active time of each second discontinuous transmission, or in the $X^{th}$ time unit after the end time unit of the second time period.

In some feasible implementations, the preset cycle, the first preset cycle, or the second preset cycle in this application may be a positive integer multiple of the cycle of the first discontinuous transmission.

In some feasible implementations, the target time period in the preset cycle in this application may be included in the active time of the first discontinuous transmission.

In some feasible implementations, for specific formats of the target indication information, the first indication information, and the second indication information in Embodiment 2, refer to descriptions of the target indication information format with reference to FIG. 20 or FIG. 21 in Embodiment 1. Details are not described herein again.

In this embodiment of this application, the network device sends the target indication information only in a target time period in a preset cycle, and the terminal device receives the target indication information only in the target time period, and further activates/deactivates the discontinuous transmission of the cell based on the target indication information. In this manner, a quantity of transmissions of information indicating activation/deactivation of the discontinuous transmission can be significantly reduced, thereby effectively reducing power consumption of a communication system.

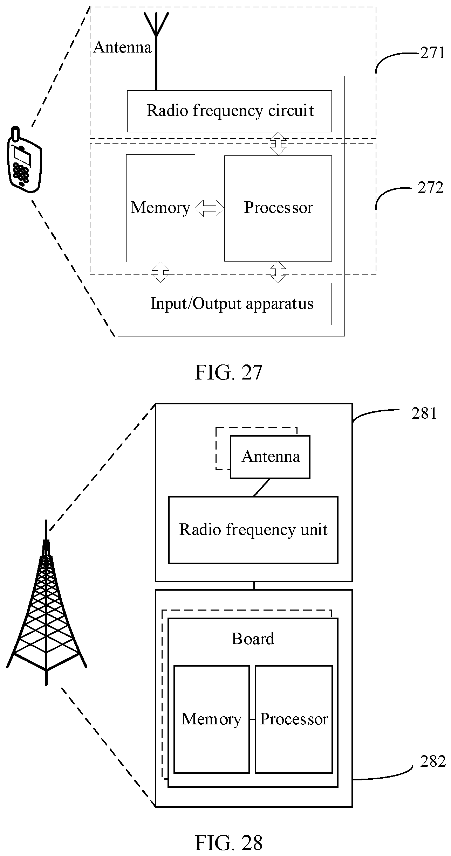

Refer to FIG. 27. FIG. 27 is a diagram of a structure of a communication apparatus according to this application. The communication apparatus may be the terminal device described in Embodiment 1, or may be an internal element or module of the terminal device described in Embodiment 1.

The communication apparatus may include one or more transceiver units 271 and one or more processing units 272. The transceiver unit 271 may be referred to as a transceiver machine, a transceiver circuit, a transceiver, or the like, and may include at least one antenna and a radio frequency unit. The transceiver unit 271 is mainly configured to receive and send a radio frequency signal and perform conversion between the radio frequency signal and a baseband signal, for example, configured to receive target indication information from a network apparatus. The processing unit 272 is mainly configured to perform baseband processing, control the communication apparatus, and the like. The transceiver unit 271 and the processing unit 272 may be physically disposed together, or may be physically disposed separately. To be specific, the apparatus is a distributed apparatus. In specific implementation, the transceiver unit 271 may include one or more boards. A plurality of boards may jointly support a radio access network of a single access standard, or may separately support radio access networks of different access standards. The processing unit 272 further includes a memory and a processor. The memory is configured to store necessary instructions and data. The processor is configured to control the communication apparatus to perform a necessary action, for example, configured to control the communication apparatus to perform a related operation procedure of the terminal device in Embodiment 1. The memory and the processor may serve one or more boards. In other words, a memory and a processor may be disposed on each board. Alternatively, a plurality of boards may share a same memory and a same processor. In addition, a necessary circuit may further be disposed on each board.

In specific implementation, the transceiver unit 271 is configured to receive, in a target time period, target indication information sent by a network device, where the target time period is included in active time of a first discontinuous transmission of a first cell of the terminal device. The processing unit 272 is configured to activate/deactivate the first discontinuous transmission based on the target indication information.

It should be understood that, for more detailed functions of the processing unit 272 and the transceiver unit 271, directly refer to the descriptions of the method steps performed by the terminal device in Embodiment 1. Details are not described herein again.

Refer to FIG. 28. FIG. 28 is a diagram of a structure of another communication apparatus according to this application. The communication apparatus may be configured to perform functions of the network device in Embodiment 1. The communication apparatus may be the network apparatus described in Embodiment 1, or may be an element or module in the network device. For ease of description, FIG. 28 shows only main components of the communication apparatus. It can be learned from FIG. 28 that the communication apparatus includes modules such as a processor, a memory, a radio frequency circuit, and an antenna. The processor is mainly configured to: process a communication protocol and communication data, and control the communication apparatus to execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 28 shows only one memory and one processor. In an actual apparatus product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna having receiving and sending functions and the radio frequency circuit may be considered as a transceiver unit of the communication apparatus, and the processor having a processing function may be considered as a processing unit of the communication apparatus. As shown in FIG. 28, the communication apparatus includes a transceiver unit 281 and a processing unit 282. Optionally, a component that is in the transceiver unit 281 and that is configured to implement a receiving function may be considered as a receiving unit, and a component that is in the transceiver unit 281 and that is configured to implement a sending function may be considered as a sending unit. In other words, the transceiver unit 281 includes a receiving unit and a sending unit. The receiving unit herein sometimes may also be referred to as a receiver machine, a receiver, a receiver circuit, or the like. The sending unit sometimes may also be referred to as a transmitter machine, a transmitter, a transmit circuit, or the like.

In specific implementation, the processing unit 282 is configured to determine target indication information, where the target indication information is for activating/deactivating a first discontinuous transmission of a first cell. The transceiver unit 281 sends the target indication information to a terminal device in a target time period, where the target time period is included in active time of the first discontinuous transmission. It should be understood that, for more detailed functions of the processing unit 282 and the transceiver unit 281, directly refer to the descriptions of the method steps performed by the network device in Embodiment 1. Details are not described herein again.

Optionally, the communication apparatus shown in FIG. 27 may be the terminal device described in Embodiment 2, or may be an internal element or module of the terminal device described in Embodiment 2. In specific implementation, the transceiver unit 271 is configured to receive, in a target time period in a preset cycle, target indication information sent by a network device. The preset cycle is different from a periodicity indicated by a search space associated with the target indication information, and/or the target time period is different from a detection occasion indicated by a search space and a control resource set that are associated with the target indication information. The processing unit 272 is configured to activate/deactivate the first discontinuous transmission based on the target indication information. It should be understood that, for more detailed functions of the processing unit 272 and the transceiver unit 271, directly refer to the descriptions of the method steps performed by the terminal device in Embodiment 1. Details are not described herein again.

Optionally, the communication apparatus shown in FIG. 28 may be configured to perform functions of the network device in Embodiment 2. The communication apparatus may be the network apparatus described in Embodiment 2, or may be an element or module in the network device. In specific implementation, the processing unit 282 is configured to determine target indication information, where the target indication information indicates to activate/deactivate a first discontinuous transmission of a first cell of a terminal device. The transceiver unit 281 is configured to send the target indication information to the terminal device in a target time period of a preset cycle, where the preset cycle is different from a periodicity indicated by a search space associated with the target indication information, and/or the target time period is different from a detection occasion indicated by a search space and a control resource set that are associated with the target indication information. It should be understood that, for more detailed functions of the processing unit 282 and the transceiver unit 281, directly refer to the descriptions of the method steps performed by the network device in Embodiment 2. Details are not described herein again.

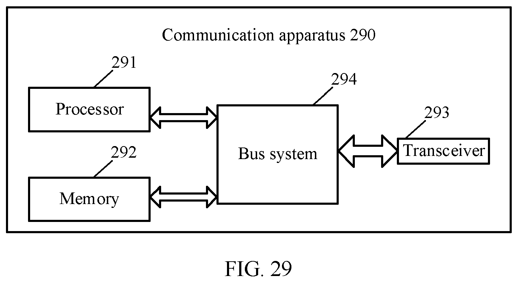

Refer to FIG. 29. FIG. 29 is a diagram of a structure of another communication apparatus according to this application. The communication apparatus 290 may be configured to implement an operation performed by the terminal device in Embodiment 1 or Embodiment 2, or the communication apparatus 290 may be the terminal device in Embodiment 1 or Embodiment 2. The communication apparatus 290 includes a processor 291, a memory 292, a transceiver 293, and a bus system 294.

The memory 292 includes but is not limited to a RAM, a ROM, an EPROM, or a CD-ROM. The memory 292 is configured to store related instructions and data. The memory 292 stores the following elements: an executable module or a data structure, or a subset or an extended set thereof:

operation instructions, including various operation instructions and used to implement various operations; and
an operating system, including various system programs and configured to implement various basic services and process a hardware-based task.

Only one memory is shown in FIG. 29. Certainly, a plurality of memories may be disposed based on a requirement.

The transceiver 293 may be a communication module or a transceiver circuit. In this embodiment of this application, the transceiver 293 is configured to perform operations such as receiving the target indication information in the foregoing embodiments.

The processor 291 may be a controller, a CPU, a general-purpose processor, a DSP, an ASIC, an FPGA or another programmable logic device, a transistor logic device, a hardware component, or any combination thereof. Alternatively, the processor 291 may be a combination for implementing a computing function, for example, a combination of one or more microprocessors, or a combination of a DSP and a microprocessor.

In specific application, components of the communication apparatus 290 are coupled together by using the bus system 294. In addition to a data bus, the bus system 294 may include a power supply bus, a control bus, a status signal bus, and the like. However, for clarity of description, various buses are marked as the bus system 294 in FIG. 29. For ease of illustration, FIG. 29 is merely an example for illustration.

In specific implementation, the communication apparatus 290 may perform functions performed by the terminal device in the foregoing embodiments. Specifically, when the communication apparatus 290 is configured to implement the steps performed by the terminal device in the communication method provided in this application, the processor 291 may implement a function of the processing unit 272, and the transceiver 293 may be configured to implement a function of the transceiver unit 271.

Still refer to FIG. 29. The communication apparatus 290 may be further configured to implement an operation performed by the network device in Embodiment 1 or Embodiment 2. Alternatively, the communication apparatus 290 may be the network device described in Embodiment 1 or Embodiment 2.

The communication apparatus 290 includes a processor 291, a memory 292, a transceiver 293, and a bus system 294.

The memory 292 includes but is not limited to a RAM, a ROM, an EPROM, or a CD-ROM. The memory 292 is configured to store related instructions and data. The memory 292 stores the following elements: an executable module or a data structure, or a subset or an extended set thereof:

operation instructions, including various operation instructions and used to implement various operations; and
an operating system, including various system programs and configured to implement various basic services and process a hardware-based task.

Only one memory is shown in FIG. 29. Certainly, a plurality of memories may be disposed based on a requirement.

The transceiver 293 may be a communication module or a transceiver circuit. In this embodiment of this application, the transceiver 293 may be further configured to perform operations such as sending the target indication information in the foregoing embodiments.

The processor 291 may be a controller, a CPU, a general-purpose processor, a DSP, an ASIC, an FPGA or another programmable logic device, a transistor logic device, a hardware component, or any combination thereof. Alternatively, the processor 291 may be a combination for implementing a computing function, for example, a combination of one or more microprocessors, or a combination of a DSP and a microprocessor.

In specific application, components of the communication apparatus 290 are coupled together by using the bus system 294. In addition to a data bus, the bus system 294 may include a power supply bus, a control bus, a status signal bus, and the like. However, for clarity of description, various buses are marked as the bus system 294 in FIG. 29. For ease of illustration, FIG. 29 is merely an example for illustration.

In specific implementation, the communication apparatus 290 may perform functions performed by the network device in the foregoing embodiments. Specifically, when the communication apparatus 290 is configured to implement the steps performed by the network device in the communication method provided in this application, the processor 291 may implement a function of the processing unit 282, and the transceiver 293 may be configured to implement a function of the transceiver unit 281.

It should be noted that, during actual application, the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal Processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory described in embodiments of this application aims to include but is not limited to these memories and any memory of another proper type.

This application further provides a communication system, including one or more network devices described above and one or more terminal devices described above.

This application further provides a computer-readable medium. The computer-readable medium stores a computer program. When the computer program is executed by a computer, the steps of the communication method performed by the terminal device in the foregoing embodiments are implemented.

This application further provides a computer program product. When the computer program product is executed by a computer, the steps of the communication method performed by the network device in the foregoing embodiments are implemented.

This application further provides a communication apparatus, including a processor and an interface. The processor is configured to implement the steps of the communication method performed by the terminal device or the network device in the foregoing embodiments. It should be understood that the communication apparatus may be a chip, and the processor may be implemented by hardware or software. When the processor is implemented by hardware, the processor may be a logic circuit, an integrated circuit, or the like. When the processor is implemented by using software, the processor may be a general purpose processor, and is implemented by reading software code stored in a memory. The memory may be integrated into the processor, or may be located outside the processor and exist independently.

This application further provides a chip system. The chip system includes a processor, configured to support an apparatus in which the chip system is installed in implementing the communication method performed by the terminal device or the network device, for example, generating or processing data and/or information in the foregoing method. In a possible design, the chip system further includes a memory. The memory is configured to store program instructions and data that are necessary for a data sending device. The chip system may include a chip, or may include a chip and another discrete component.

All or some of the foregoing method embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely examples of embodiments of the technical solutions of this application, but are not intended to limit the protection scope of this application. Any modification, equivalent substitution, improvement, and the like made within the spirit and the principle of this application shall be included in the protection scope of this application.

**Claims**

1. A communication method, wherein the method is applicable to a terminal device, and the method comprises:

   receiving, in a target time period, target indication information sent by a network device, wherein the target time period is comprised in active time of a first discontinuous transmission of a first cell of the terminal device; and
   activating/deactivating the first discontinuous transmission based on the target indication information.

2. The method according to claim 1, wherein the method further comprises:

   receiving target configuration information sent by the network device, wherein the target configuration information comprises a first offset and a second offset, wherein
   the first offset is a time unit offset of a start time unit of the target time period relative to a start time unit of the active time of the first discontinuous transmission, and the second offset is a time unit offset of an end time unit of the target time period relative to the start time unit of the active time of the first discontinuous transmission; or
   the first offset is a time unit offset of a start time unit of the target time period relative to an end time unit of the active time of the first discontinuous transmission, and the second offset is a time unit offset of an end time unit of the target time period relative to the end time unit of the active time of the first discontinuous transmission; and
   determining the target time period based on the first offset and the second offset.

3. The method according to claim 1 or 2, wherein activating/deactivating the first discontinuous transmission based on the target indication information comprises:

   activating/deactivating the first discontinuous transmission in a first target time unit based on the target indication information, wherein
   the first target time unit is a next time unit of the end time unit of the active time of the first discontinuous transmission, or the first target time unit is an $X^{th}$ time unit after the end time unit of the target time period, wherein X is a positive integer greater than or equal to 1.

4. The method according to any one of claims 1 to 3, wherein the first discontinuous transmission is a discontinuous transmission DTX, a discontinuous reception DRX is further configured for the first cell, and the method further comprises:
   activating/deactivating the DRX of the first cell based on the target indication information.

5. The method according to claim 4, wherein active time of the DTX of the first cell is shorter than or equal to active time of the DRX of the first cell, and/or a cycle of the DTX of the first cell is shorter than or equal to a cycle of the DRX of the first cell.

6. The method according to any one of claims 1 to 3, wherein the first discontinuous transmission is a discontinuous reception DRX, a discontinuous transmission DTX is further configured for the first cell, and the method further comprises:

activating/deactivating the DTX of the first cell based on the target indication information.

7. The method according to claim 6, wherein active time of the DRX of the first cell is shorter than or equal to active time of the DTX of the first cell, and/or a cycle of the DRX of the first cell is shorter than or equal to a cycle of the DTX of the first cell.

8. The method according to any one of claims 1 to 7, wherein a second discontinuous transmission is configured for each of at least one second cell of the terminal device, and the method further comprises:
activating/deactivating a second discontinuous transmission of any second cell i in the at least one second cell based on the target indication information.

9. The method according to claim 8, wherein the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

10. The method according to claim 8 or 9, wherein activating/deactivating the second discontinuous transmission of any second cell i in the at least one second cell based on the target indication information comprises:

   if it is determined that the target indication information is received for the first time in a cycle of the second discontinuous transmission of any second cell i in the at least one second cell, and a time unit in which the target indication information is received is in inactive time of the second discontinuous transmission of the second cell i, activating/deactivating the second cell i in a second target time unit based on the target indication information, wherein
   the second target time unit is a $Y^{th}$ time unit after the time unit in which the target indication information is received, and Y is a positive integer greater than or equal to 1.

11. The method according to claim 8 or 9, wherein target indication information received by the terminal device in inactive time of the second discontinuous transmission of any second cell i in the at least one second cell is not for activating/deactivating the second discontinuous transmission of the second cell i.

12. The method according to any one of claims 1 to 11, wherein when the terminal device receives a plurality of pieces of target indication information in one cycle of a discontinuous transmission of any cell j, the plurality of pieces of target indication information all indicate to activate the discontinuous transmission of the cell j, or the plurality of pieces of target indication information all indicate to deactivate the discontinuous transmission of the cell j.

13. The method according to any one of claims 1 to 12, wherein a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

14. The method according to any one of claims 1 to 13, wherein each cycle of a discontinuous transmission of the first cell comprises the target time period, or a part of cycles of a discontinuous transmission of the first cell comprise the target time period, and time intervals between the part of cycles are the same.

15. A communication method, wherein the communication method is applicable to a network device, and the method comprises:

   determining target indication information, wherein the target indication information is for activating/deactivating a first discontinuous transmission of a first cell; and
   sending the target indication information to a terminal device in a target time period, wherein the target time period is comprised in active time of the first discontinuous transmission.

16. The method according to claim 15, wherein the method further comprises:

   sending target configuration information to the terminal device, wherein
   the target configuration information comprises a first offset and a second offset, wherein the first offset is a time unit offset of a start time unit of the target time period relative to a start time unit of the active time of the first discontinuous transmission, and the second offset is a time unit offset of an end time unit of the target time period relative to the start time unit of the active time of the first discontinuous transmission; or

the first offset is a time unit offset of a start time unit of the target time period relative to an end time unit of the active time of the first discontinuous transmission, and the second offset is a time unit offset of an end time unit of the target time period relative to the end time unit of the active time of the first discontinuous transmission.

17. The method according to claim 15 or 16, wherein the method further comprises:

activating/deactivating the first discontinuous transmission in a first target time unit, wherein the first target time unit is a next time unit of the end time unit of the active time of the first discontinuous transmission, or the first target time unit is an $X^{th}$ time unit after the end time unit of the target time period, wherein X is a positive integer greater than or equal to 1.

18. The method according to any one of claims 15 to 17, wherein the first discontinuous transmission is a discontinuous transmission DTX, a discontinuous reception DRX is further configured for the first cell, and the target indication information is further for activating/deactivating the DRX of the first cell.

19. The method according to claim 18, wherein active time of the DTX of the first cell is shorter than or equal to active time of the DRX of the first cell, and/or a cycle of the DTX of the first cell is shorter than or equal to a cycle of the DRX of the first cell.

20. The method according to any one of claims 15 to 17, wherein the first discontinuous transmission is a discontinuous reception DRX, a discontinuous transmission DTX is further configured for the first cell, and the target indication information is further for activating/deactivating the DTX of the first cell.

21. The method according to claim 20, wherein active time of the DRX of the first cell is shorter than or equal to active time of the DTX of the first cell, and/or a cycle of the DRX of the first cell is shorter than or equal to a cycle of the DTX of the first cell.

22. The method according to any one of claims 15 to 21, wherein a second discontinuous transmission is configured for each of at least one second cell of the terminal device, and the target indication information is further for activating/deactivating a second discontinuous transmission of any second cell i in the at least one second cell.

23. The method according to claim 22, wherein the active time of the first discontinuous transmission is shorter than or equal to active time of the second discontinuous transmission of each second cell, and/or a cycle of the first discontinuous transmission is shorter than or equal to a cycle of the second discontinuous transmission of each second cell.

24. The method according to claim 22 or 23, wherein the target indication information sent by the network device in inactive time of the second discontinuous transmission of any second cell i in the at least one second cell is not for activating/deactivating the second discontinuous transmission of the second cell i.

25. The method according to any one of claims 15 to 24, wherein when the network device sends a plurality of pieces of target indication information in one cycle of a discontinuous transmission of any cell j of the terminal device, the plurality of pieces of target indication information all indicate to activate the discontinuous transmission of the cell j, or the plurality of pieces of target indication information all indicate to deactivate the discontinuous transmission of the cell j.

26. The method according to any one of claims 15 to 25, wherein a start time unit of active time of the discontinuous transmission is a time unit in which a timing start moment of an activity timer corresponding to the discontinuous transmission is located, and an end time unit of the active time of the discontinuous transmission is a time unit in which a timing end moment or a timeout moment of the activity timer corresponding to the discontinuous transmission is located.

27. The method according to any one of claims 15 to 26, wherein each cycle of a discontinuous transmission of the first cell comprises the target time period, or a part of cycles of a discontinuous transmission of the first cell comprise the target time period, and time intervals between the part of cycles are the same.

**EP 4 750 167 A1**

28. A communication apparatus, wherein the communication apparatus comprises a processing unit and a transceiver unit, wherein

the transceiver unit is configured to receive, in a target time period, target indication information sent by a network device, wherein the target time period is comprised in active time of a first discontinuous transmission of a first cell of the terminal device; and
the processing unit is configured to activate/deactivate the first discontinuous transmission based on the target indication information.

29. A communication apparatus, wherein the communication apparatus comprises a processing unit and a transceiver unit, wherein

the processing unit is configured to determine target indication information, wherein the target indication information is for activating/deactivating a first discontinuous transmission of a first cell; and
the transceiver unit is configured to send the target indication information to a terminal device in a target time period, wherein the target time period is comprised in active time of the first discontinuous transmission.

30. A readable storage medium, configured to store instructions, wherein when the instructions are executed, the method according to any one of claims 1 to 14 is implemented.

31. A readable storage medium, configured to store instructions, wherein when the instructions are executed, the method according to any one of claims 15 to 27 is implemented.

32. A communication apparatus, comprising at least one processor and a memory, wherein

the memory is configured to store a computer program; and
the processor is configured to execute the computer program stored in the memory, so that the communication apparatus performs the method according to any one of claims 1 to 14.

33. A communication apparatus, comprising at least one processor and a memory, wherein

the memory is configured to store a computer program; and
the processor is configured to execute the computer program stored in the memory, so that the communication apparatus performs the method according to any one of claims 15 to 27.

34. A computer program product, wherein the computer program product is executed by a computer, the method according to any one of claims 1 to 14 is implemented, or the method according to any one of claims 15 to 27 is implemented.

FIG. 1

Active

Inactive

Timeline

| Active time | Inactive time | Active time | Inactive time |

DTX/DRX cycle        DTX/DRX cycle

FIG. 2

Network device

Terminal device

S301: Determine target indication information

S302: Send the target indication information in a target time period

S303: Receive the target indication information in the target time period

S304: Activate/Deactivate a first discontinuous transmission of a first cell based on the target indication information

FIG. 3

FIG. 4

FIG. 5

FIG. 6

FIG. 7

FIG. 8

FIG. 9

FIG. 10

FIG. 11

FIG. 12

EP 4 750 167 A1

FIG. 13

66

First cycle of any second
DRX

Second cycle of any
second DRX

Active time

Inactive time

Active time

Inactive time

Active

Any
second
DRX

Third
time
period
1

Third
time
period
2

Inactive

Timeline

Active

First
DRX

Target
time
period
1

Target
time
period
2

Inactive

Active
time

Inactive time

Active
time

Inactive time

First cycle of the first
DRX

Second cycle of the first
DRX

FIG. 14

FIG. 15

EP 4 750 167 A1

FIG. 16

First cycle

First cycle

Active time

Inactive time

Active time

Inactive time

First
discontinuous
transmission
of a first cell

Active

Target
time
period 1

Target
time
period 2

Inactive

Timeline

Second
discontinuous
transmission
of any second
cell i

Active

Inactive

Fourth
time
period 1

Fourth
time
period 2

Active time

Inactive time

Active time

Inactive time

First cycle

Second cycle

FIG. 17

Network device

Terminal device

S301: Determine target indication
information

S302: Send the target indication information
in a target time period

S303: Receive the target indication
information in the target time period

S304: Activate/Deactivate a first
discontinuous transmission of a first cell
based on the target indication
information

S305: Activate/Deactivate the first
discontinuous transmission of the first
cell

FIG. 18

| Network device | | Terminal device |
|---|---|---|

S306: Send target configuration information →

S307: Receive the target configuration information and determine a target time period based on the target configuration information

S301: Determine target indication information

S302: Send the target indication information in the target time period →

S303: Receive the target indication information in the target time period

S304: Activate/Deactivate a first discontinuous transmission of a first cell based on the target indication information

S305: Activate/Deactivate the first discontinuous transmission of the first cell

FIG. 19

A plurality of transport blocks (blocks)

| Block 1 | Block 2 | Block 3 | Block 4 | ... |
|---|---|---|---|---|

| cell1 DTX | cell2 DTX | cell3 DTX | cell1 DRX | cell2 DRX | cell3 DRX |
|---|---|---|---|---|---|

| cell4 DTX | cell4 DRX | cell5 DTX | cell5 DRX | cell6 DTX | cell6 DRX |
|---|---|---|---|---|---|

FIG. 20

M transport blocks (blocks)

| Block 1 | Block 2 | Block 3 | Block 4 | ... |

| cell1 DTX | cell1 DRX | cell2 DTX | cell2 DRX | cell3 DTX | cell3 DRX | cell4 DTX | cell4 DRX |

FIG. 21

Network device

Terminal device

S221: Determine target indication information

S222: Send the target indication information in a target time period in a preset cycle

S223: Receive the target indication information in the target time period in the preset cycle

S224: Activate/Deactivate a first discontinuous transmission of a first cell based on the target indication information

FIG. 22

FIG. 23

FIG. 24

FIG. 25

FIG. 26

Antenna

Radio frequency circuit

271

Memory ⟷ Processor

272

Input/Output apparatus

FIG. 27

Antenna

281

Radio frequency unit

Board

Memory ⊣ Processor

282

FIG. 28

FIG. 29

## INTERNATIONAL SEARCH REPORT

| International application No. |
|---|
| **PCT/CN2024/109334** |

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; CNKI; IEEE; 3GPP: 不连续, 非连续, 非连续发送, 非连续接收, 时间, 窗口, 时段, 指示, 信令, 信息, 配置, 激活, 节能, 能耗, 耗电, 监听, DRX, DTX, discontinuous transmission, discontinuous reception, time, window, period, indication, signal, information, configuration, activation, energy saving, energy consumption, power consumption, listening

**C. DOCUMENTS CONSIDERED TO BE RELEVANT**

| Category* | Citation of document, with indication, where appropriate, of the relevant passages | Relevant to claim No. |
|---|---|---|
| X | CN 111615179 A (VIVO COMMUNICATION TECHNOLOGY CO., LTD.) 01 September 2020 (2020-09-01) description, paragraphs [0002]-[0135] | 1-34 |
| A | CN 109561488 A (VIVO COMMUNICATION TECHNOLOGY CO., LTD.) 02 April 2019 (2019-04-02) entire document | 1-34 |
| A | CN 113518478 A (HUAWEI TECHNOLOGIES CO., LTD.) 19 October 2021 (2021-10-19) entire document | 1-34 |
| A | CN 116233988 A (GUANGDONG OPPO MOBILE COMMUNICATIONS CO., LTD.) 06 June 2023 (2023-06-06) entire document | 1-34 |
| A | WO 2023065096 A1 (FUJITSU LTD. et al.) 27 April 2023 (2023-04-27) entire document | 1-34 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 September 2024** | **23 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/109334** |

| Patent document cited in search report | | | Publication date (day/month/year) | Patent family member(s) | Publication date (day/month/year) |
| --- | --- | --- | --- | --- | --- |
| CN | 111615179 | A | 01 September 2020 | None | |
| CN | 109561488 | A | 02 April 2019 | None | |
| CN | 113518478 | A | 19 October 2021 | None | |
| CN | 116233988 | A | 06 June 2023 | None | |
| WO | 2023065096 | A1 | 27 April 2023 | None | |

Form PCT/ISA/210 (patent family annex) (July 2022)

**REFERENCES CITED IN THE DESCRIPTION**

**Patent documents cited in the description**

- CN 202311015609